(19) Europäisches Patentamt
European Patent Office
Office européen des brevets

(11) EP 2 296 495 B1

(12) **EUROPEAN PATENT SPECIFICATION**

(45) Date of publication and mention of the grant of the patent:
**02.10.2013 Bulletin 2013/40**

(21) Application number: **09732064.2**

(22) Date of filing: **08.04.2009**

(51) Int Cl.:
*A23L 1/29* (2006.01) *A23L 1/314* (2006.01)
*C12N 9/10* (2006.01) *A23K 1/18* (2006.01)
*A23L 1/305* (2006.01) *A23L 1/317* (2006.01)

(86) International application number:
**PCT/IB2009/005440**

(87) International publication number:
**WO 2009/127969 (22.10.2009 Gazette 2009/43)**

(54) **A method for reducing the amount of cholesterol and/or improving the texture and/or reducing weight loss and/or increasing the fat stability of a meat based food product**

Ein Verfahren zur Reduktion des Cholesteringehalts und/oder Verbesserung der Textur und/oder Reduktion des Gewichtsverlustes und/oder Erhöhung der Fettstabilität in Nahrungsmittel auf Fleischbasis

Procédé pour la réduction de la teneur en cholestérol et/ou l'amélioration de la texture et/ou réduction de perte de poids et/ou surélévation de la stabilité du gras dans les produits alimentaires à base de viande

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **18.04.2008 GB 0807161**

(43) Date of publication of application:
**23.03.2011 Bulletin 2011/12**

(60) Divisional application:
**13180612.7**

(73) Proprietor: **DuPont Nutrition Biosciences ApS**
**1001 Copenhagen K. (DK)**

(72) Inventors:
- **CHRISTIANSEN, Liv, Spångner**
  **DK-2000 Frederiksberg (DK)**
- **SØE, Jørn, Borch**
  **DK-8381 Tilst (DK)**
- **KAMPP, Jesper**
  **8660 - Skanderborg (DK)**

(74) Representative: **Williams, Aylsa**
**D Young & Co LLP**
**120 Holborn**
**London EC1N 2DY (GB)**

(56) References cited:
**WO-A2-2009/002480**
**US-A1- 2006 141 457**
**US-A1- 2007 026 106**
**US-A1- 2008 070 287**
**US-A1- 2008 131 936**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE PRESENT INVENTION

The present invention relates to methods of reducing the cholesterol content of and/or improving the properties of a meat based food product using a lipid acyltransferase and meat based food products derived therefrom.

BACKGROUND OF THE PRESENT INVENTION

In the production of meat and sausage products, one of the major aims is to emulsify added fat and to bind, or immobilize, added water with activated protein from the meat matrix. As an example, the manufacturing technology of cooked sausages involves the impact of mechanical energy and additives, such as phosphates and salt, which activate the released protein. The end result should be a homogeneous, finely cut, smooth-textured product which can withstand treatment without separation of fat or water, showing firm texture and good bite (Feiner 2006 Meat products handbook. CRC Press, 239-312).

If the technological measures responsible for forming and stabilizing the emulsion of the meat product, i.e. quality fluctuations of the raw material (e.g. Pale, Soft, Exudative (PSE) and Dark, Firm, Dry (DFD) meat), recipe, processing conditions, such as time and temperature, are not properly observed, unstable products may be produced that no longer meet consumer demands (Fischer et al., 1991 Finely comminuted liver sausage - How the normal commercial emulsifiers work. Fleischwirtsch 71, 780-783).

Emulsifiers are used in the processing of meat and sausages to compensate for these quality fluctuations in the raw meat material, thereby securing consistent end product quality and facilitating the technical processes involved in the industrial production (Nau & Adams, 1992 Emulsifiers for use in sausage and meat products. Food marketing & technology June, 13-20.).

In emulsified meat products with a considerable fat content, e.g. fine paste sausages and pâtés, it is desirable to have fat stability so that fat losses are minimized and the amount of visible fat is reduced. Additionally, it is desirable that the loss of meat juice is low, and that the taste, texture and appearance are acceptable. Emulsifiers may be added to achieve these effects, and some of the most commonly known are isolated protein or protein concentrates like soy protein or Na-caseinate. However, these proteins are characterised by being relatively expensive and quantities allowed in meat products are limited. Additives, such as mono and di-glycerides and citric acid esters, can also be used as emulsifiers (Varnam & Sutherland, 1995 Meat and meat products. Technology, chemistry and microbiology. Chapman & Hall Vol 3, 244-250), but their application is often unwanted due to price or labelling (i.e. not having additives on the meat product label).

Enzymes are known to be advantageous in food applications. For example, lipid acyltransferases have been found to have significant acyltransferase activity in foodstuffs. This activity has surprising beneficial applications in methods of preparing foodstuffs (see for example WO2004/064537.

US 2007/026106 discloses a method for the *in situ* production of an emulsifier in a foodstuff, wherein a lipid acyltransferase is added to the foodstuff.

US 2008/0070287 relates to a method for the production of a variant lipid acyltransferase.

US 2006/0141457 relates to at least one nucleotide sequence, derived from a nucleotide sequence encoding an acyltransferase polypeptide.

WO 2009/002480 relates to methods for engineering the *M. smegmatis* acyltransferase to create compositions comprising at least one enzyme suitable for use in enzymatic aqueous acylation and/or perhydrolysis.

In the preparation of meat based food products the use of some enzymes may be disadvantageous as the treatment with the enzyme must take place at between about 10°C to about 55°C otherwise the enzyme may be deactivated or not working optimally. However at these temperatures the main spoilage bacteria, pathogens and fungi can proliferate. Therefore, it may be desirable to find a solution to problems associated with taste, texture and appearance which reduces the proliferation of spoilage bacteria, pathogens and fungi in the meat based food product during processing.

From meat consumption and cholesterol content data, it has been estimated that one third to one half of the daily recommended cholesterol intake is provided by meat (Chizzolini et al., 1999 Calorific value and cholesterol content of normal and low-fat meat and meat products. Trends in food science and technology, 10, 119-128).

One aim of the present invention is to reduce cholesterol in meat based food products. Alternatively or in addition to the reduction in cholesterol, maintenance and/or improvement of one or more of the following characteristics is desirable: fat stability so that fat losses are minimized and the amount of visible fat is reduced in meat based food products; taste, texture, weight loss and appearance.

An alternative aim is to prepare meat based food products with a reduced potential for the proliferation of spoilage bacteria, pathogens and fungi.

SUMMARY ASPECTS OF THE PRESENT INVENTION

Aspects of the present invention are presented in the claims and in the following commentary.

It has surprisingly been found that by adding a lipid acyltransferase to meat for preparing a meat based food product a significant reduction in the cholesterol content of the meat based food product can be achieved. In addition it has been surprisingly found that the reduction in cholesterol content of the meat based food product can be achieved without any adverse effect on one or more of the following: texture, weight loss, fat stability (including greasiness and/or reduced fat separation during thermal processing), taste and appearance.

Even more surprisingly it has been found that by adding a lipid acyltransferase to meat for preparing a meat based food product a significant reduction in the cholesterol content of the meat based food product can be achieved as well one or more of the following: improved texture; reduced weight loss, increased fat stability (including reduced greasiness and/or reduced fat separation during thermal processing), taste and appearance.

Even more surprisingly it has been found that by adding a lipid acyltransferase to meat for preparing a meat based food product the meat can be processed at a low temperature (e.g. less than 10°C) or at higher temperatures (e.g. above 65°C) - thus at temperatures which are less likely to lead to the proliferation of spoilage bacteria, pathogens and fungi. Thus this may lead to a reduced loading of spoilage bacteria, pathogens and/or fungi in the final meat based food product.

Disclosed is a method of producing a meat based food product comprising:

a) contacting meat with a lipid acyltransferase;
b) incubating the meat contacted with the lipid acyltransferase at a temperature between about 1 °C to about 9°C or at a temperature between about 60°C to about 70°C;
c) producing a food product from the meat;

wherein step b) is conducted before, during or after step c).

The present invention provides a method for reducing the cholesterol content and/or improving texture and/or reducing weight loss and/or increasing fat stability of a meat based food product comprising:

a) contacting meat with a lipid acyltransferase;
b) incubating the meat contacted with the lipid acyltransferase at a temperature between about 1°C to about 9°C or at a temperature of about 60°C to about 70°C;
c) producing a food product from the meat;

wherein step b) is conducted before, during or after step c).

The use of a lipid acyltransferase for producing a meat based food product is disclosed.

Further, the use of a lipid acyltransferase for producing a meat based food product wherein the technical effect is a reduction in the amount of cholesterol in the meat based food product compared with a comparative meat based food product where the meat had not been treated with the lipid acyltransferase is disclosed.

Yet further, the use of a lipid acyltransferase for producing a meat based food product wherein the technical effect is a reduction in the amount of cholesterol in the meat based food product compared with a comparative meat based food product where the meat had not been treated with the lipid acyltransferase and/or one or more of the following: an improvement in the texture and/or a reduction in weight loss and/or an increased fat stability and/or an improved taste and/or an improved appearance of the meat based food product compared with a comparative meat based food product where the meat has not been treated with the lipid acyltransferase is disclosed.

Further, a cholesterol reduced or a cholesterol free meat based food product comprising at least 30% meat and an inactivated lipid acyltransferase is disclosed.

The present invention also provides a meat based food product obtainable (e.g. obtained) by the method according to the present invention.

DETAILED ASPECTS OF THE PRESENT INVENTION

In one embodiment, suitably the meat may be incubated with the lipid acyltransferase for between about 1 hour and 21 hours.

In another embodiment the meat may be incubated with the lipid acyltransferase at a temperature of between about 1°C to about 9°C, suitably between about 1°C to about 6°C, suitably between about 2°C to about 6°C, preferably between about 2°C to about 5°C.

When the meat is incubated with the lipid acyltransferase at a temperature of between about 1°C to about 9°C, suitably between about 1 °C to about 6°C, suitably between about 2°C to about 6°C, preferably between about 2°C to about 5°C, preferably the lipid acyltransferase is incubated for between about 10 to about 24 hours.

In a further embodiment the meat may be incubated with the lipid acyltransferase at a temperature between about 60°C to about 70°C, suitably between about 62°C to about 70°C, suitably between about 65°C to about 70°C.

When the meat is incubated with the lipid acyltransferase at a temperature between about 60°C to about 70°C, suitably between about 62°C to about 70°C, suitably between about 65°C to about 70°C, the meat contacted with the lipid acyltransferase is incubated for between about 30 minutes to about 2 hours, preferably about 1 hours to 1.5 hours

In one embodiment the meat contacted with the lipid acyltransferase and/or the food product derived therefrom is further heated to a temperature and for a sufficient time to inactivate the enzyme, for example to a temperature in the range of about 80°C to about 140°C, preferably 90°C to about 120°C.

The term "incubated" or "incubating" as used herein means holding the meat and the lipid acyltransferase under conditions where the enzyme is active, i.e. is capable of carrying out a lipid acyltransferase reaction (in particular is capable of transferring a fatty acid from a phospholipid donor to a cholesterol acceptor). The term "incubated" or "incubating" as used herein is not meant to encompass holding meat and the enzyme under conditions where: the enzyme is inactive; the enzyme is deactivated and/or the enzyme is in the process of being deactivated or denatured.

In some aspects of the present invention, the terms "increased" or "reduced" or "improved" (or other relative terms used herein) compare a meat or meat based food product treated with a lipid acyltransferase in accordance with the present invention compared with a comparable meat or a comparable meat based food product (i.e. one produced from the same ingredients and in the same way) which has not been treated with the lipid acyltransferase in accordance with the present invention.

For instance in one embodiment of the present invention "reducing the amount of cholesterol" or "cholesterol reduced" means that the amount of cholesterol in the lipid acyltransferase treated meat or meat based food product in accordance with the present invention is reduced or lower when compared with the same meat or meat based food product (i.e. produced from the same ingredients and in the same way) but without the addition of the lipid acyltransferase in accordance with the present invention.

Preferably, the cholesterol is reduced by at least about 15%, preferably at least about 20%, more preferably by at least about 40%, suitably by at least 50% or by at least 60% in the meat based food product compared with a comparable meat based food product which was not treated in accordance with the present invention with a lipid acyltransferase.

In one embodiment, suitably the cholesterol in the meat based food product may be reduced by between about 40% and about 70%.

When we refer to "cholesterol" we mean "free, non-esterfied cholesterol" Therefore when we refer herein to a reduction in the amount of cholesterol we mean a reduction in the amount of free, non-esterified cholesterol.

In some embodiments the meat based food product in accordance with the present invention may be considered "cholesterol free". By the term "cholesterol free" it is meant that all or substantially all of the cholesterol in the meat or meat based food product has been converted to a cholesterol ester. In some embodiments suitably more than 80%, suitably more than 90% of the free, non-esterified cholesterol may be converted to a cholesterol ester. In one embodiment a "cholesterol free" product may be one where at least 90% of the free, non-esterified cholesterol has been converted to a cholesterol ester.

In one embodiment a phospholipid (such as a phospholipid from soyabean and/or egg) may be added to the meat or meat based food product. The phospholipid(s) may be added before, with or after treatment with the lipid acyltransferase. Suitably the addition of the phospholipid(s) may result in a yet further reduction of the cholesterol level in the meat based food product.

In some embodiments, the relative terms used herein may compare a meat or meat based food product treated with a lipid acyltransferase in accordance with the present invention with a comparable meat or a comparable meat based food product which has been treated with an enzyme other than a lipid acyltransferase, such as for example as compared with a comparable meat or a comparable meat based food product treated with a conventional phospholipase enzyme, e.g. Lecitase Ultra™ (Novozymes A/S, Denmark) or Lipomod 699L, Biocatalyst, UK.

For the ease of reference, these and further aspects of the present invention are now discussed under appropriate section headings. However, the teachings under each section are not necessarily limited to each particular section.

TRANSFERASE ASSAY (CHOLESTEROL:PHOSPHOLIPID) FOR DETERMINING TRANSFERASE ACTIVITY (TrU)

Substrate: 50 mg Cholesterol (Sigma C8503) and 450 mg Soya phosphatidylcholine (PC), Avanti #441601 is dissolved in chloroform, and chloroform is evaporated at 40°C under vacuum.

300 mg PC:cholesterol 9:1 is dispersed at 40°C in 10 ml 50mM HEPES buffer pH 7.

Enzymation:

250 μl substrate is added in a glass with lid at 40°C.

25 μl enzyme solution is added and incubated during agitation for 10 minutes at 40°C.

The enzyme added should esterify 2-5% of the cholesterol in the assay.

Also a blank with 25μl water instead of enzyme solution is analysed.

After 10 minutes 5 ml Hexan:Isopropanol 3:2 is added.

The amount of cholesterol ester is analysed by HPTLC using Cholesteryl stearate (Sigma C3549) standard for calibration.

Transferase activity is calculated as the amount of cholesterol ester formation per minute under assay conditions.

One Transferase Unit (TrU) is defined as μmol cholesterol ester produced per minute at 40°C and pH 7 in accordance with the transferase assay given above.

Preferably, the lipid acyltransferase used in the method and uses disclosed will have a specific transferase unit (TrU) per mg enzyme of at least 25 TrU/mg enzyme protein.

Suitably the lipid acyltransferase for use in the present invention may be dosed in amount of 0.05 to 50 TrU per g meat based food product, suitably in an amount of 0.5 to 5 TrU per g meat based food product.

Suitably the incubation time is effective to ensure that there is at least 5% transferase activity, preferably at least 10% transferase activity, preferably at least 15%, 20%, 25% 26%, 28%, 30%, 40% 50%, 60% or 75% transferase activity.

The % transferase activity (i.e. the transferase activity as a percentage of the total enzymatic activity) may be determined by the following protocol:

PROTOCOL FOR THE DETERMINATION OF % TRANSFERASE ACTIVITY

Meat samples were lyophilized and the dry sample was ground in a coffee mill. 0.5 gram dry meat powder was extracted with Chloroform: Methanol 2:1 for 30 minutes. The organic phase was isolated, and analysed by GLC.

GLC analysis

Perkin Elmer Autosystem 9000 Capillary Gas Chromatograph equipped with WCOT fused silica column 12.5 m x 0.25 mm ID x 0.1 μ film thickness 5% phenyl-methylsilicone (CP Sil 8 CB from Chrompack).

Carrier gas: Helium.

Injector. PSSI cold split injection (initial temp 50°C heated to 385°C), volume 1.0μl

Detector FID: 395°C

| Oven program (used since 30.10.2003): | 1 | 2 | 3 |
|---|---|---|---|
| Oven temperature, °C. | 90 | 280 | 350 |
| Isothermal, time, min. | 1 | 0 | 10 |
| Temperature rate, °C/min. | 15 | 4 | |

Sample preparation: Lipids extracted from meat samples were dissolved in 0, 5 ml Heptane: Pyridin, 2: 1 containing internal standard heptadecane, 0.5 mg/ml. 300μl sample solution is transferred to a crimp vial, 300 μl MSTFA (N- Methyl- N- trimethylsilyl- trifluoraceamid) is added and reacted for 20 minutes at 60°C.

Calculation: Response factors for Free Fatty Acid (FFA), Cholesterol, Cholesteryl palmitate and Cholesteryl stearate were determined from pure reference material.

Based on response factors for free fatty acids, cholesterol and cholesterol esters the amount in % of these components in meat samples was calculated.

% Transferase activity of lipid acyltransferase in a meat product was calculated as the % of cholesterol reduction in enzyme treated meat relative to the amount of cholesterol in the same meat product without enzyme treatment.

Example:

Control meat product: 0,075% cholesterol.

Lipid acyltransferase treated meat product: 0,030% cholesterol

Transferase activity = (0, 075- 0, 030) x100/0, 075 = 60% transferase activity.

## MEAT BASED FOOD PRODUCT

A meat based food product according to the present invention is any product based on meat.

The meat based food product is suitable for human and/or animal consumption as a food and/or a feed. In one embodiment of the invention the meat based food product is a feed product for feeding animals, such as for example a pet food product. In another embodiment of the invention the meat based food product is a food product for humans.

A meat based food product may comprise non-meat ingredients such as for example water, salt, flour, milk protein, vegetable protein, starch, hydrolysed protein, phosphate, acid, spices, colouring agents and/or texturising agents.

A meat based food product in accordance with the present invention preferably comprises between 5-90% (weight/weight) meat. In some embodiments the meat based food product may comprise at least 30% (weight/weight) meat, such as at least 50%, at least 60% or at least 70% meat.

In some embodiments the meat based food product is a cooked meat, such as ham, loin, picnic shoulder, bacon and/or pork belly for example.

The meat based food product may be one or more of the following:

Dry or semi-dry cured meats - such as fermented products, dry-cured and fermented with starter cultures, for example dry sausages, salami, pepperoni and dry ham;
Emulsified meat products (e.g. for cold or hot consumption), such as mortadella, frankfurter, luncheon meat and pâté;
Fish and seafood, such as shrimps, salmon, reformulated fish products, frozen cold-packed fish;
Fresh meat muscle, such as whole injected meat muscle, for example loin, shoulder ham, marinated meat;
Ground and/or restructured fresh meat - or reformulated meat, such as upgraded cut-away meat by cold setting gel or binding, for example raw, uncooked loin chops, steaks, roasts, fresh sausages, beef burgers, meat balls, pelmeni;
Poultry products - such as chicken or turkey breasts or reformulated poultry, e.g. chicken nuggets and/or chicken sausages;
Retorted products - autoclaved meat products, for example picnic ham, luncheon meat, emulsified products.

In one embodiment of the present invention the meat based food product is a processed meat product, such as for example a sausage, bologna, meat loaf, comminuted meat product, ground meat, bacon, polony, salami or pate.

A processed meat product may be for example an emulsified meat product, manufactured from a meat based emulsion, such as for example mortadella, bologna, pepperoni, liver sausage, chicken sausage, wiener, frankfurter, luncheon meat, meat pate.

The meat based emulsion may be cooked, sterilised or baked, e.g. in a baking form or after being filled into a casing of for example plastic, collagen, cellulose or a natural casing. A processed meat product may also be a restructured meat product, such a for example restructured ham. A meat product of the invention may undergo processing steps such as for example salting, e.g. dry salting; curing, e.g. brine curing; drying; smoking; fermentation; cooking; canning; retorting; slicing and/or shredding.

In one embodiment the meat to be contacted with the lipid acyltransferase may be minced meat.

In another embodiment the food product may be an emulsified meat product.

## MEAT

The term "meat" as used herein means any kind of tissue derived from any kind of animal.

The term meat as used herein may be tissue comprising muscle fibres derived from an animal. The meat may be an animal muscle, for example a whole animal muscle or pieces cut from an animal muscle.

In another embodiment the meat may comprise inner organs of an animal, such as heart, liver, kidney, spleen, thymus and brain for example.

The term meat encompasses meat which is ground, minced or cut into smaller pieces by any other appropriate method known in the art.

The meat may be derived from any kind of animal, such as from cow, pig, lamb, sheep, goat, chicken, turkey, ostrich, pheasant, deer, elk, reindeer, buffalo, bison, antelope, camel, kangaroo; any kind of fish e.g. sprat, cod, haddock, tuna, sea eel, salmon, herring, sardine, mackerel, horse mackerel, saury, round herring, Pollack, flatfish, anchovy, pilchard, blue whiting, pacific whiting, trout, catfish, bass, capelin, marlin, red snapper, Norway pout and/or hake; any kind of shellfish, e.g. clam, mussel, scallop, cockle, periwinkle, snail, oyster, shrimp, lobster, langoustine, crab, crayfish, cuttlefish, squid, and/or octopus.

In one embodiment the meat is beef, pork, chicken, lamb and/or turkey.

LIPID ACYL TRANSFERASE

In some aspects, the lipid acyltransferase for use in any one of the methods and/or uses disclosed may comprise a GDSx motif and/ or a GANDY motif.

Preferably, the lipid acyltransferase enzyme is characterised as an enzyme which possesses acyltransferase activity and which comprises the amino acid sequence motif GDSX, wherein X is one or more of the following amino acid residues L, A, V, I, F, Y, H, Q, T, N, M or S.

Suitably, the nucleotide sequence encoding a lipid acyltransferase or lipid acyltransferase for use in any one of the methods and/or uses disclosed may be obtainable, preferably obtained, from an organism from one or more of the following genera: *Aeromonas, Streptomyces, Saccharomyces, Lactococcus, Mycobacterium, Streptococcus, Lactobacillus, Desulfitobacterium, Bacillus, Campylobacter, Vibrionaceae, Xylella, Sulfolobus, Aspergillus, Schizosaccharomyces, Listeria, Neisseria, Mesorhizobium, Ralstonia, Xanthomonas and Candida.* Preferably, the lipid acyltransferase is obtainable, preferably obtained, from an organism from the genus *Aeromonas.*

In some aspects, the nucleotide sequence encoding a lipid acyltransferase for use in any one of the methods and/or uses disclosed encodes a lipid acyltransferase that comprises an aspartic acid residue at a position corresponding to N-80 in the amino acid sequence of the *Aeromonas salmonicida* lipid acyltransferase shown as SEQ ID No. 20.

In some aspects, the lipid acyltransferase for use in any one of the methods and/or uses disclosed is a lipid acyltransferase that comprises an aspartic acid residue at a position corresponding to N-80 in the amino acid sequence of the *Aeromonas salmonicida* lipid acyltransferase shown as SEQ ID No. 20.

The lipid acyltransferase for use in the method of the present invention may be a polypeptide having lipid acyltransferase activity which polypeptide comprises any one of the amino acid sequences shown as SEQ ID No. 37, SEQ ID No. 15, SEQ ID No. 1, SEQ ID No. 3, SEQ ID No. 4, SEQ ID No. 5, SEQ ID No. 6, SEQ ID No. 7, SEQ ID No. 8, SEQ ID No. 9, SEQ ID No. 10, SEQ ID No. 41, SEQ ID No. 11, SEQ ID No. 12, SEQ ID No. 13, SEQ ID No. 14, SEQ ID No. 42, SEQ ID No. 19, SEQ ID No. 20, or an amino acid sequence which as has 75% or more identity therewith.

In addition or in the alternative, the nucleotide sequence encoding a lipid acyltransferase for use in any one of the methods and/or uses disclosed encodes a lipid acyltransferase that may comprise the amino acid sequence shown as SEQ ID No. 37, or an amino acid sequence which has 75% or more homology thereto. Suitably, the nucleotide sequence encoding a lipid acyltransferase encodes a lipid acyltransferase that may comprise the amino acid sequence shown as SEQ ID No. 37.

In addition or in the alternative, the nucleotide sequence encoding a lipid acyltransferase for use in any one of the methods and/or uses disclosed encodes a lipid acyltransferase that may comprise the amino acid sequence shown as SEQ ID No. 15, or an amino acid sequence which has 75% or more homology thereto. Suitably, the nucleotide sequence encoding a lipid acyltransferase encodes a lipid acyltransferase that may comprise the amino acid sequence shown as SEQ ID No. 15.

In one embodiment the lipid acyltransferase for use in any on of the methods and/or uses disclosed has an amino acid sequence shown in SEQ ID No. 37 or SEQ ID No. 15, or has an amino acid sequence which has at least 75% identity therewith, preferably at least 80%, preferably at least 85%, preferably at least 95%, preferably at least 98% identity therewith.

In one embodiment the lipid acyltransferase for use in the method of the present invention is encoded by a nucleotide sequence shown in SEQ ID No. 26, or is encoded by a nucleotide sequence which has at least 75% identity therewith, preferably at least 80%, preferably at least 85%, preferably at least 95%, preferably at least 98% identity therewith.

The nucleotide sequence encoding a lipid acyl transferase for use in any one of the methods and/or uses disclosed may encode a natural lipid acyl transferase or a variant lipid acyl transferase.

The lipid acyl transferase for use in any one of the methods and/or uses disclosed may be a natural lipid acyl transferase or a variant lipid acyl transferase.

For instance, the nucleotide sequence encoding a lipid acyl transferase for use as disclosed may be one as described in WO2004/064537, WO2004/064987 WO2005/066347, or WO2006/008508.

The term "lipid acyl transferase" as used herein preferably means an enzyme that has acyltransferase activity (generally classified as E.C. 2.3.1.x, for example 2.3.1.43), whereby the enzyme is capable of transferring an acyl group from a lipid to a sterol, such as cholesterol.

Preferably, the lipid acyl transferase for use in any one of the methods and/or uses disclosed is a lipid acyltransferase that is capable of transferring an acyl group from a phospholipid (as defined herein) to a sterol (e.g. cholesterol) .

In another aspect, the lipid acyltransferase for use in the methods and/or uses disclosed may, as well as being able to transfer an acyl group from a lipid to a sterol (e.g. cholesterol), additionally be able to transfer the acyl group from a lipid to one or more of the following: a carbohydrate, a protein, a protein subunit, glycerol.

Preferably, the lipid substrate upon which the lipid acyl acts is one or more of the following lipids: a phospholipid, such as a lecithin, e.g. phosphatidylcholine and/or phosphatidylethanolamine.

This lipid substrate may be referred to herein as the "lipid acyl donor". The term lecithin as used herein encompasses phosphatidylcholine, phosphatidylethanolamine, phosphatidylinositol, phosphatidylserine and phosphatidylglycerol.

As detailed above, other acyl-transferases suitable for use in the methods disclosed may be identified by identifying the presence of the GDSx, GANDY and HPT blocks either by alignment of the pFam00657 consensus sequence (SEQ ID No 1), and/or alignment to a GDSx acyltransferase, for example SEQ ID No 28. In order to assess their suitability for use in the present invention, i.e. identify those enzymes which have a transferase activity of at least 5%, more preferably at least 10%, more preferably at least 20%, more preferably at least 30%, more preferably at least 40%, more preferably 50%, more preferably at least 60%, more preferably at least 70%, more preferably at least 80%, more preferably at least 90% and more preferably at least 98% of the total enzyme activity, such acyltransferases are tested using the "Protocol for the determination of % acyltransferase activity" assay detailed hereinabove.

For some aspects, preferably the lipid acyl transferase for use in any one of the methods and/or uses disclosed is a lipid acyltransferase that is incapable, or substantially incapable, of acting on a triglyceride and/or a 1-monoglyceride and/or 2-monoglyceride.

For some aspects, preferably the lipid acyl transferase for use in any one of the methods and/or uses disclosed is a lipid acyltransferase that does not exhibit triacylglycerol lipase activity (E.C. 3.1.1.3) or does not exhibit significant triacylglycerol lipase activity (E.C. 3.1.1.3).

The ability to hydrolyse triglyceride (E.C. 3.1.1.3 activity) may be determined by lipase activity is determined according to Food Chemical Codex (3rd Ed., 1981, pp 492-493) modified to sunflower oil and pH 5.5 instead of olive oil and pH 6.5. The lipase activity is measured as LUS (lipase units sunflower) where 1 LUS is defined as the quantity of enzyme which can release 1 [mu]mol of fatty acids per minute from sunflower oil under the above assay conditions. Alternatively the LUT assay as defined in WO9845453 may be used.

The lipid acyl transferase for use in any one of the methods and/or uses disclosed may be a lipid acyltransferase which is substantially incapable of acting on a triglyceride may have a LUS/mg of less than 1000, for example less than 500, such as less than 300, preferably less than 200, more preferably less than 100, more preferably less than 50, more preferably less than 20, more preferably less than 10, such as less than 5, less than 2, more preferably less than 1 LUS/mg. Alternatively LUT/mg activity is less than 500, such as less than 300, preferably less than 200, more preferably less than 100, more preferably less than 50, more preferably less than 20, more preferably less than 10, such as less than 5, less than 2, more preferably less than 1 LUT/mg.

The lipid acyl transferase for use in any one of the methods and/or uses disclosed may be a lipid acyltransferase which is substantially incapable of acting on a monoglyceride. This may be determined by using mono- oleate (M7765 1- Oleoyl- *rac*- glycerol 99%) in place of the sunflower oil in the LUS assay. 1 MGHU is defined as the quantity of enzyme which can release 1 [mu] mol of fatty acids per minute from monoglyceride under the assay conditions.

The lipid acyl transferase for use in any one of the methods and/or uses disclosed is a lipid acyltransferase which is preferably substantially incapable of acting on a triglyceride may have a MGHU/mg of less than 5000, for example less than 1000, for example less than 500, such as less than 300, preferably less than 200, more preferably less than 100, more preferably less than 50, more preferably less than 20, more preferably less than 10, such as less than 5, less than 2, more preferably less than 1 MGHU/mg.

Suitably, the lipid acyltransferase for use in any one of the methods and/or uses disclosed is a lipid acyltransferase that may exhibit one or more of the following phospholipase activities: phospholipase A2 activity (E.C. 3.1.1.4) and/or phospholipase A1 activity (E.C. 3.1.1.32) . The lipid acyl transferase may also have phospholipase B activity (E.C 3.1.1.5) .

Thus, in one embodiment the "acyl acceptor" according to the present invention may be a plant sterol/ stanol, preferably cholesterol.

Preferably, the lipid acyltransferase enzyme may be characterised using the following criteria:

the enzyme possesses acyl transferase activity which may be defined as ester transfer activity whereby the acyl part of an original ester bond of a lipid acyl donor is transferred to an acyl acceptor to form a new ester; and
the enzyme comprises the amino acid sequence motif GDSX, wherein X is one or more of the following amino acid residues L, A, V, I, F, Y, H, Q, T, N, M or S.

The GDSX motif is comprised of four conserved amino acids. Preferably, the serine within the motif is a catalytic serine of the lipid acyl transferase enzyme. Suitably, the serine of the GDSX motif may be in a position corresponding to Ser 16 in *Aeromonas hydrophila* lipid acyltransferase enzyme taught in Brumlik & Buckley (Joumal of Bacteriology Apr. 1996, Vol. 178, No. 7, p 2060-2064).

To determine if a protein has the GDSX motif according to the present invention, the sequence is preferably compared with the hidden markov model profiles (HMM profiles) of the pfam database in accordance with the procedures taught in WO2004/064537 or WO2004/064987.

Preferably the lipid acyl transferase enzyme can be aligned using the Pfam00657 consensus sequence (for a full explanation see WO2004/064537 or WO2004/064987).

Preferably, a positive match with the hidden markov model profile (HMM profile) of the pfam00657 domain family indicates the presence of the GDSL or GDSX domain according to the present invention.

Preferably when aligned with the Pfam00657 consensus sequence the lipid acyltransferase for use in the methods or uses of the invention may have at least one, preferably more than one, preferably more than two, of the following, a GDSx block, a GANDY block, a HPT block. Suitably, the lipid acyltransferase may have a GDSx block and a GANDY block. Alternatively, the enzyme may have a GDSx block and a HPT block. Preferably the enzyme comprises at least a GDSx block. See WO2004/064537 or WO2004/064987 for further details.

Preferably, residues of the GANDY motif are selected from GANDY, GGNDA, GGNDL, most preferably GANDY.

The pfam00657 GDSX domain is a unique identifier which distinguishes proteins possessing this domain from other enzymes.

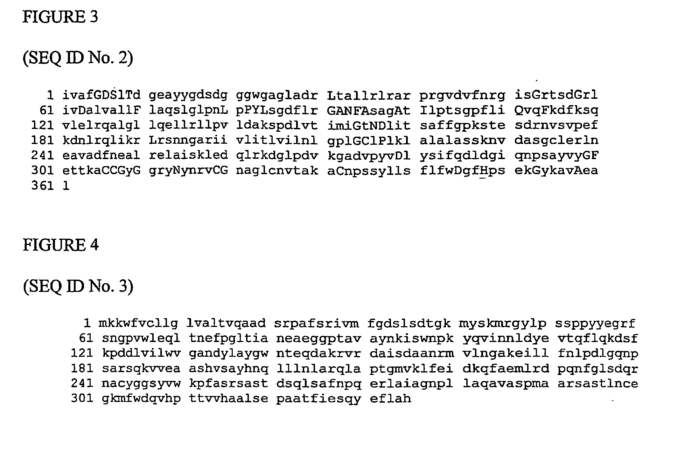

The pfam00657 consensus sequence is presented in Figure 3 as SEQ ID No. 2. This is derived from the identification of the pfam family 00657, database version 6, which may also be referred to as pfam00657.6 herein.

The consensus sequence may be updated by using further releases of the pfam database (for example see WO2004/064537 or WO2004/064987).

In one embodiment, the lipid acyl transferase enzyme for use in any one of the methods and/or uses disclosed is a lipid acyltransferase that may be characterised using the following criteria:

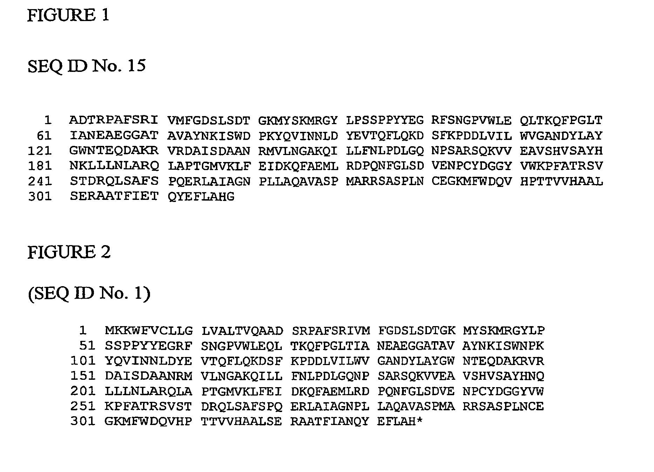

(i) the enzyme possesses acyl transferase activity which may be defined as ester transfer activity whereby the acyl part of an original ester bond of a lipid acyl donor is transferred to acyl acceptor to form a new ester;
(ii) the enzyme comprises the amino acid sequence motif GDSX, wherein X is one or more of the following amino acid residues L, A, V, I, F, Y, H, Q, T, N, M or S.;
(iii) the enzyme comprises His-309 or comprises a histidine residue at a position corresponding to His-309 in the *Aeromonas hydrophila* lipid acyltransferase enzyme shown in Figures 2 and 4 (SEQ ID No. 1 or SEQ ID No. 3).

Preferably, the amino acid residue of the GDSX motif is L.

In SEQ ID No. 3 or SEQ ID No. 1 the first 18 amino acid residues form a signal sequence. His-309 of the full length sequence, that is the protein including the signal sequence, equates to His-291 of the mature part of the protein, i.e. the sequence without the signal sequence.

In one embodiment, the lipid acyl transferase enzyme for use any one of the methods and uses disclosed is a lipid acyltransferase that comprises the following catalytic triad: Ser-34, Asp-306 and His-309 or comprises a serine residue, an aspartic acid residue and a histidine residue, respectively, at positions corresponding to Ser-34, Asp-306 and His-309 in the *Aeromonas hydrophila* lipid acyl transferase enzyme shown in Figure 4 (SEQ ID No. 3) or Figure 2 (SEQ ID No. 1). As stated above, in the sequence shown in SEQ ID No. 3 or SEQ ID No. 1 the first 18 amino acid residues form a signal sequence. Ser-34, Asp-306 and His-309 of the full length sequence, that is the protein including the signal sequence, equate to Ser-16, Asp-288 and His-291 of the mature part of the protein, i.e. the sequence without the signal sequence. In the pfam00657 consensus sequence, as given in Figure 3 (SEQ ID No. 2) the active site residues correspond to Ser-7, Asp-345 and His-348.

In one embodiment, the lipid acyl transferase enzyme for use any one of the methods and/or uses disclosed is a lipid acyltransferase that may be characterised using the following criteria:

the enzyme possesses acyl transferase activity which may be defined as ester transfer activity whereby the acyl part of an original ester bond of a first lipid acyl donor is transferred to an acyl acceptor to form a new ester, and
the enzyme comprises at least Gly-32, Asp-33, Ser-34, Asp-134 and His-309 or comprises glycine, aspartic acid, serine, aspartic acid and histidine residues at positions corresponding to Gly-32, Asp-33, Ser-34, Asp-306 and His-309, respectively, in the *Aeromonas hydrophila* lipid acyltransferase enzyme shown in SEQ ID No. 3 or SEQ ID No. 1.

Suitably, the lipid acyltransferase for use in the method of the present invention is a polypeptide having lipid acyltransferase activity which polypeptide is obtained by expression of any one of the nucleotide sequences shown as SEQ ID No. 21, SEQ ID No. 47, SEQ ID No. 25, SEQ ID No. 48, SEQ ID No. 50, SEQ ID No. 51, SEQ ID No. 26, SEQ ID No. 27, SEQ ID No. 28, SEQ ID No. 38, SEQ ID No. 39, SEQ ID No. 40, SEQ ID No. 29, SEQ ID No. 30, SEQ ID No. 31, SEQ ID No. 52, SEQ ID No. 32, SEQ ID No. 33, SEQ ID No. 34, SEQ ID No. 35 or SEQ ID No. 36 or a nucleotide sequence which has 75% or more identity therewith.

Suitably, the lipid acyltransferase enzyme for use in any one of the methods and/or uses disclosed may be encoded by one of the following nucleotide sequences:

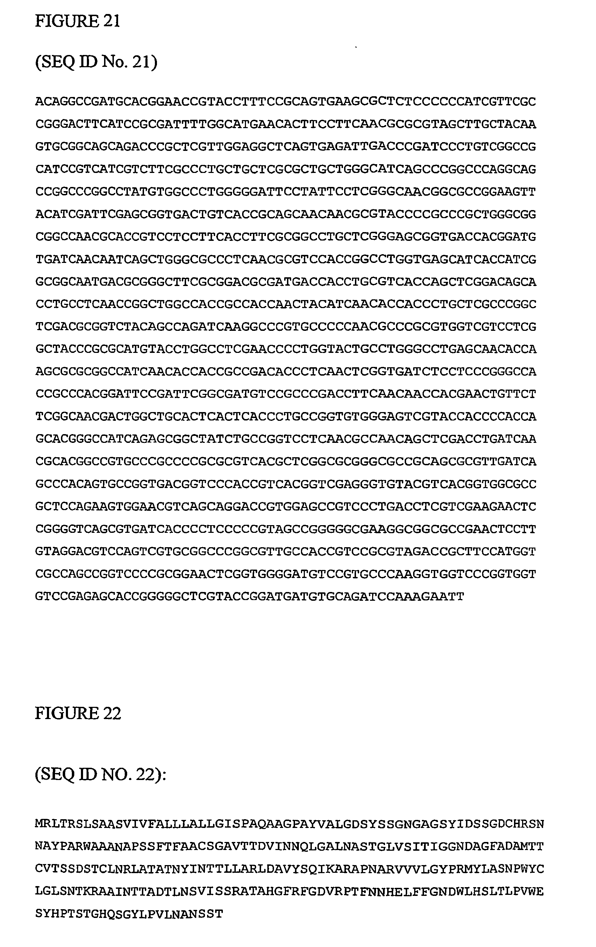

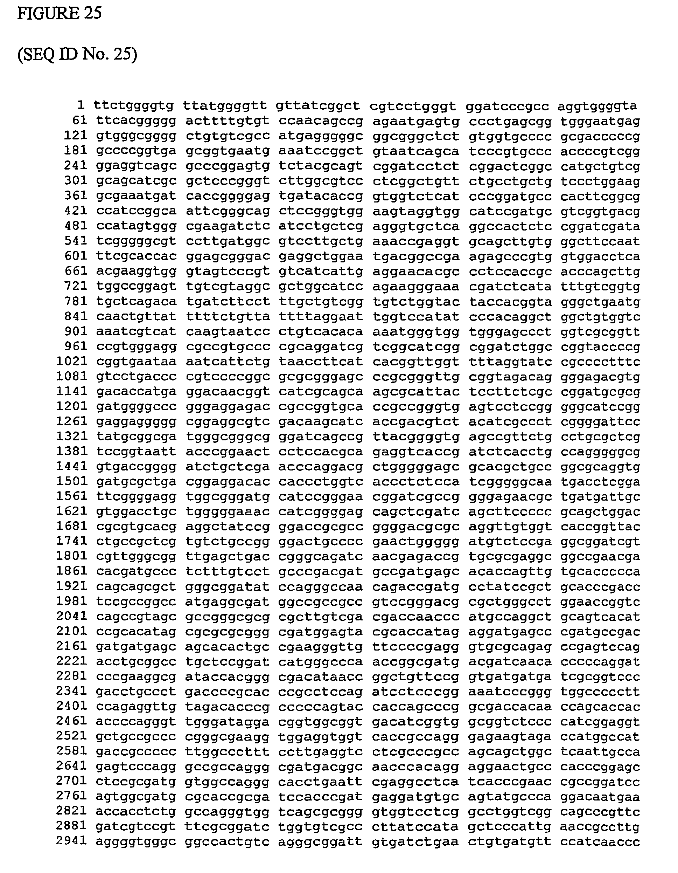

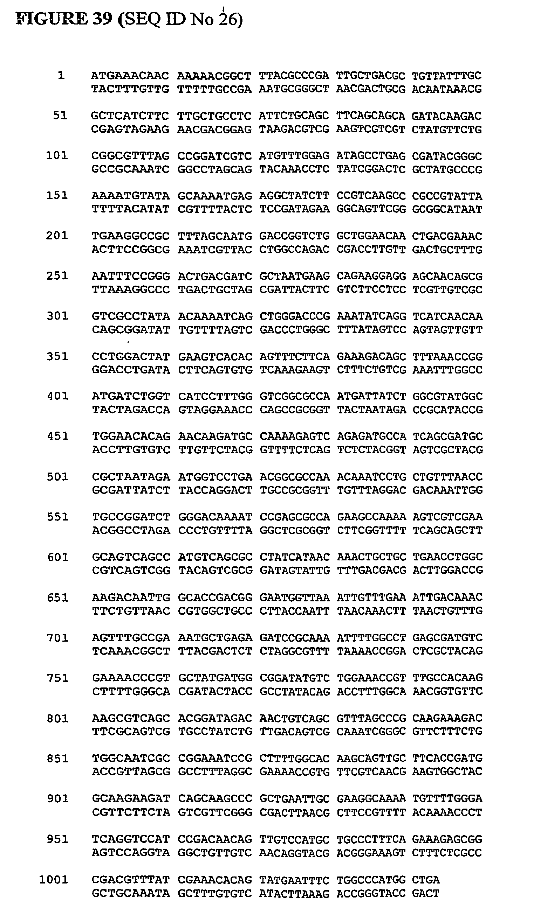

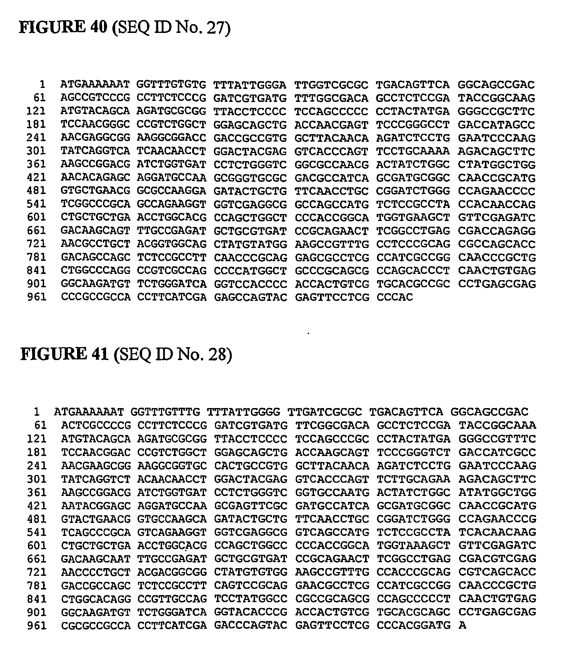

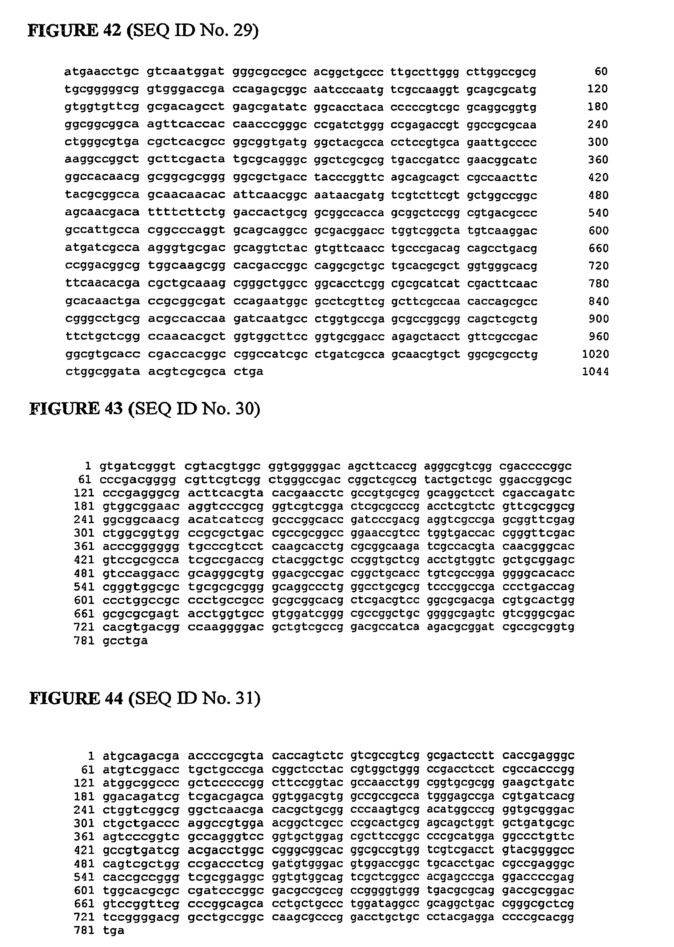

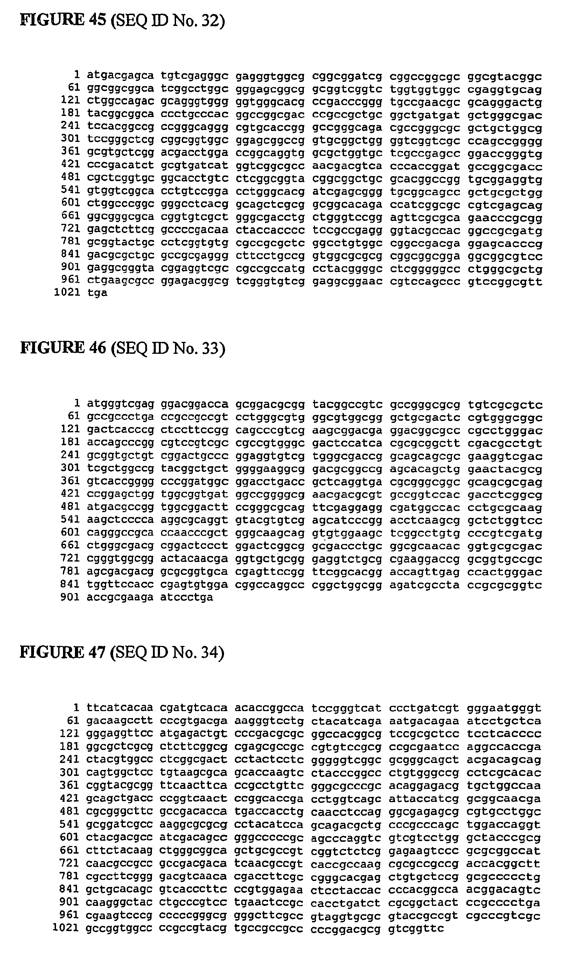

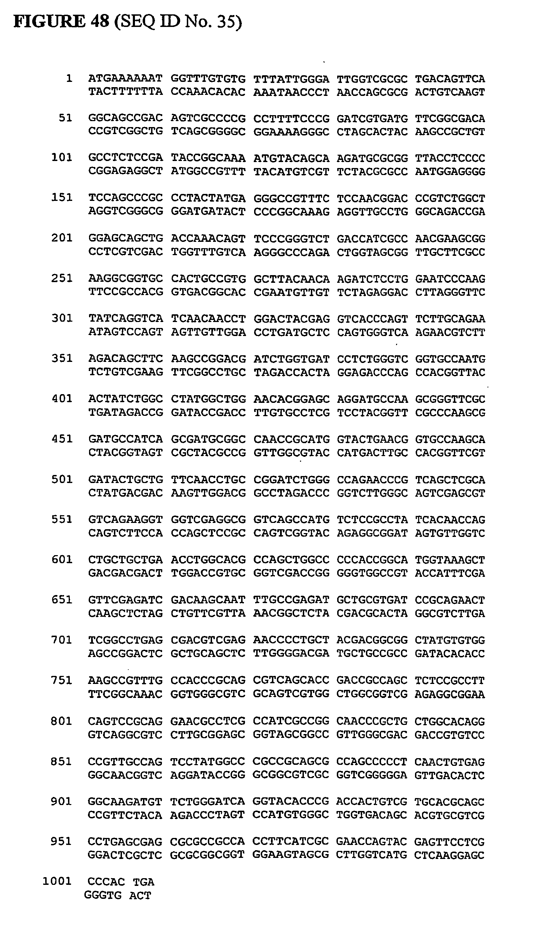

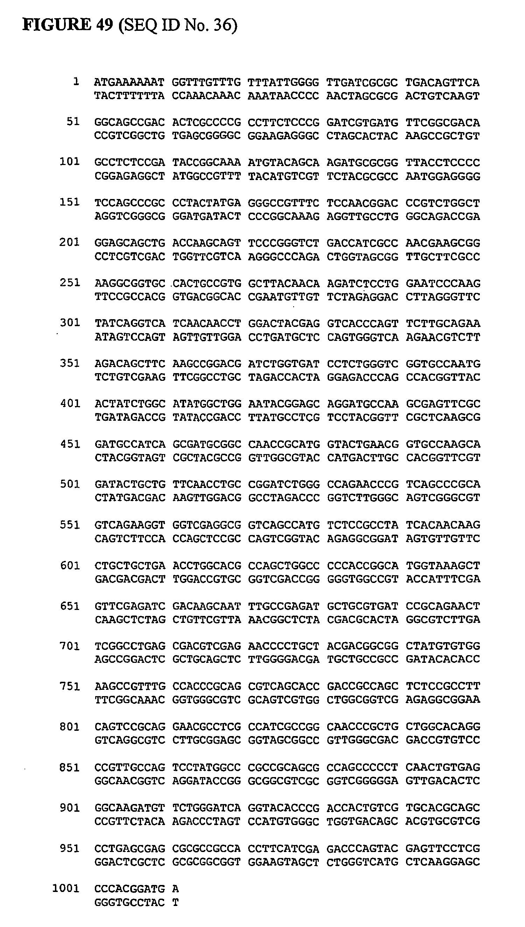

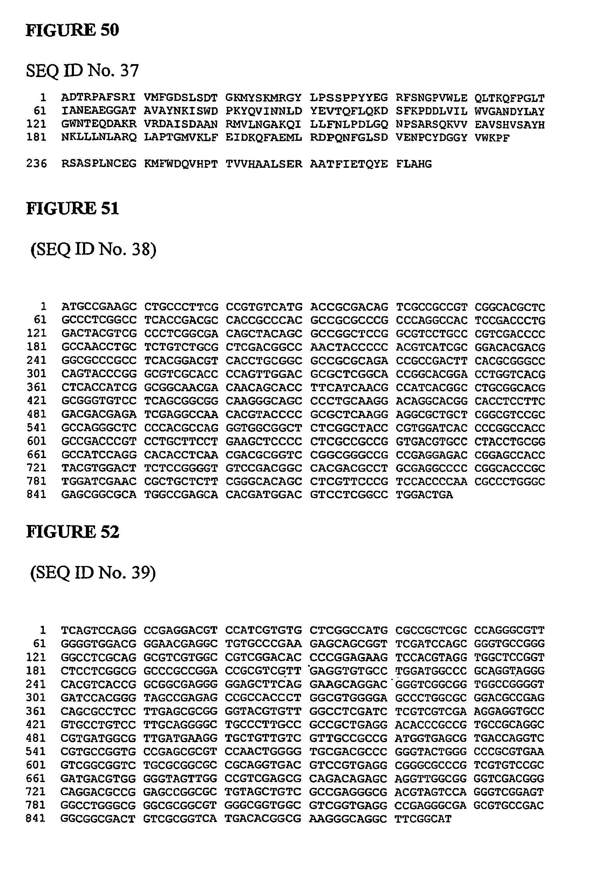

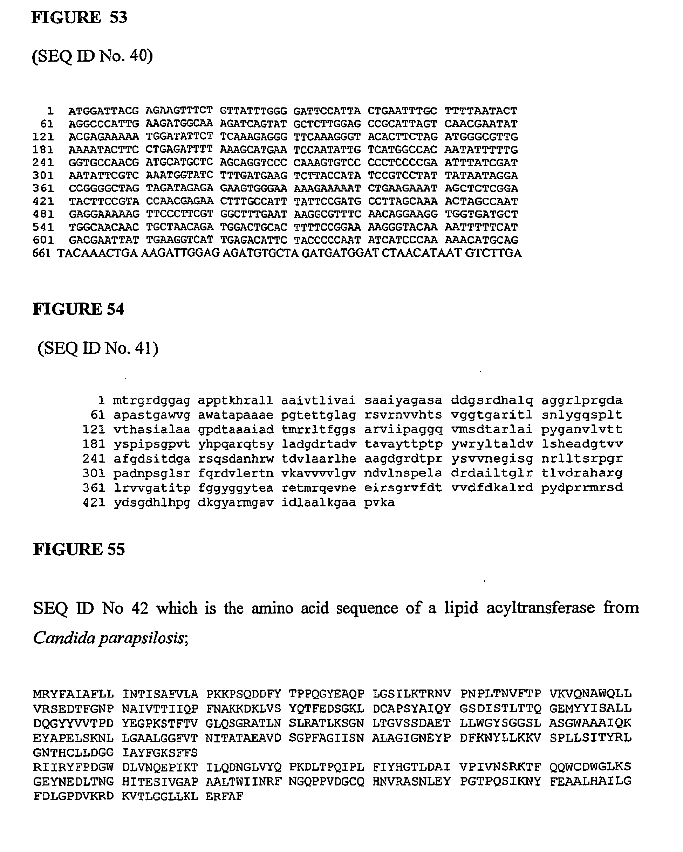

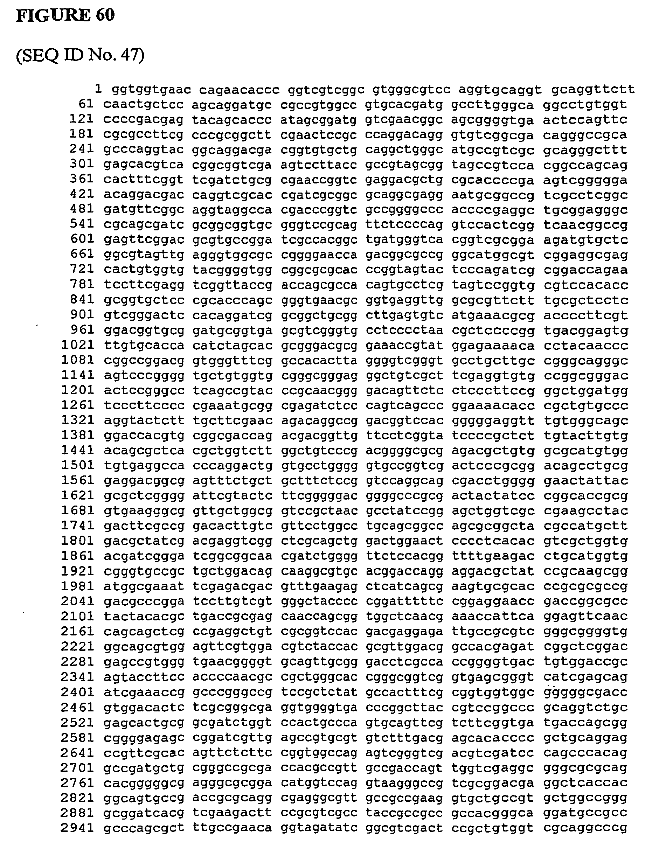

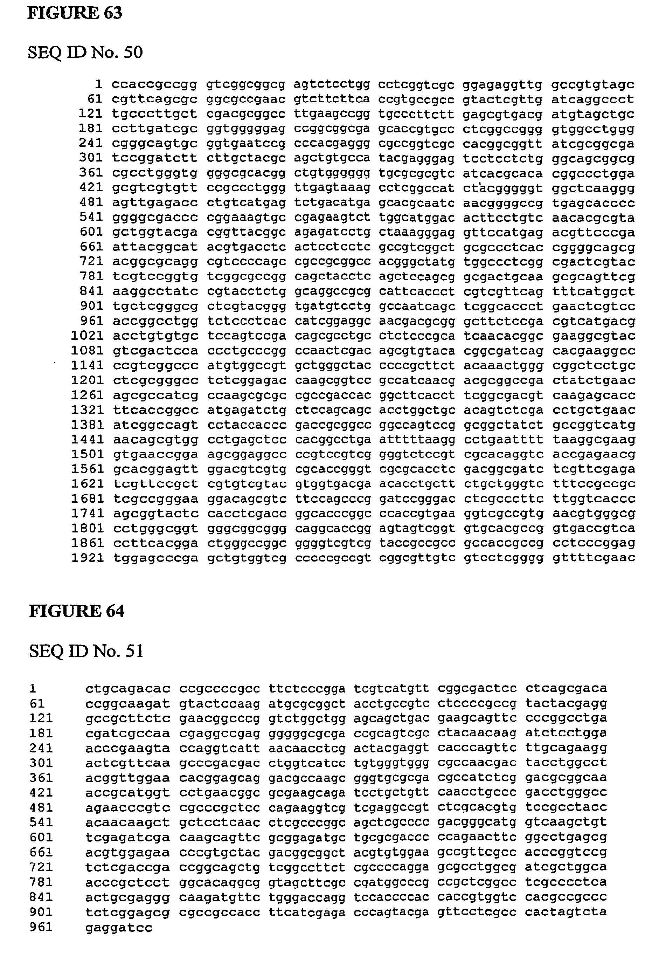

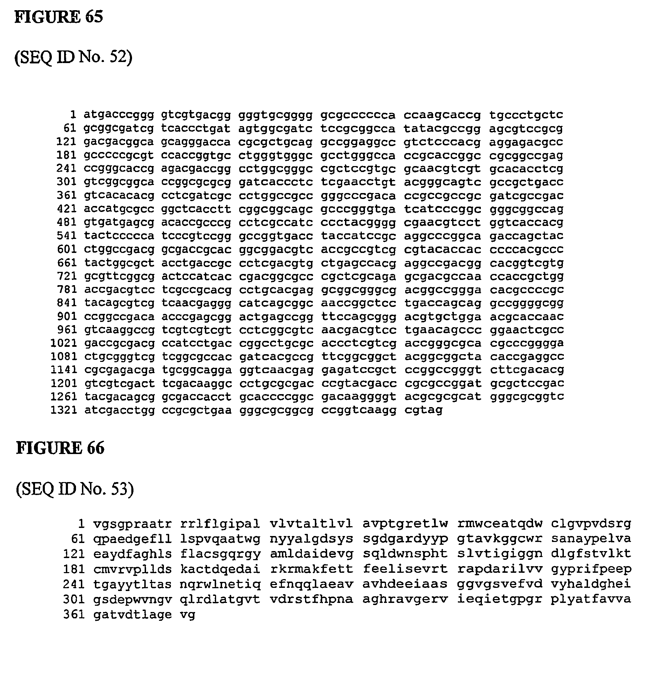

(a) the nucleotide sequence shown as SEQ ID No. 21 (see Figure 21);
(b) the nucleotide sequence shown as SEQ ID No. 47 (see Figure 60);
(c) the nucleotide sequence shown as SEQ ID No. 25 (see Figure 25);
(d) the nucleotide sequence shown as SEQ ID No. 48 (see Figure 50);
(e) the nucleotide sequence shown as SEQ ID No. 50 (see Figure 63);
(f) the nucleotide sequence shown as SEQ ID No. 51 (see Figure 64);
(g) the nucleotide sequence shown as SEQ ID No. 26 (see Figure 39);
(h) the nucleotide sequence shown as SEQ ID No. 27 (see Figure 40);
(i) the nucleotide sequence shown as SEQ ID No. 28 (see Figure 41);
(j) the nucleotide sequence shown as SEQ ID No. 38 (see Figure 51);
(k) the nucleotide sequence shown as SEQ ID No. 39 (see Figure 52);
(l) the nucleotide sequence shown as SEQ ID No. 40 (see Figure 53);
(m) the nucleotide sequence shown as SEQ ID No. 29 (see Figure 42);
(n) the nucleotide sequence shown as SEQ ID No. 30 (see Figure 43);
(o) the nucleotide sequence shown as SEQ ID No. 31 (see Figure 44);
(p) the nucleotide sequence shown as SEQ ID No. 52 (see Figure 65);
(q) the nucleotide sequence shown as SEQ ID No. 32 (see Figure 45);
(r) the nucleotide sequence shown as SEQ ID No. 33 (see Figure 46);
(s) the nucleotide sequence shown as SEQ ID No. 34 (see Figure 47);
(t) the nucleotide sequence shown as SEQ ID No. 35 (see Figure 48);
(u) the nucleotide sequence shown as SEQ ID No. 36 (see Figure 49);
(v) or

a nucleotide sequence which has 70% or more, preferably 75% or more, identity with any one of the sequences shown as SEQ ID No.21, SEQ ID No. 25, SEQ ID No. 26, SEQ ID No. 27, SEQ ID No. 28, SEQ ID No. 29, SEQ ID No. 30, SEQ ID No. 31, SEQ ID No. 32, SEQ ID No. 33, SEQ ID No. 34, SEQ ID No. 35, SEQ ID No. 36, SEQ ID No. 38, SEQ ID No. 39, SEQ ID No. 40, SEQ ID No. 47, SEQ ID No. 48, SEQ ID No. 50, SEQ ID No. 51 or SEQ ID No. 52; or
(x) a nucleic acid which is related by the degeneration of the genetic code identity with any one of the sequences shown as SEQ ID No.21, SEQ ID No. 25, SEQ ID No. 26, SEQ ID No. 27, SEQ ID No. 28, SEQ ID No. 29, SEQ ID No. 30, SEQ ID No. 31, SEQ ID No. 32, SEQ ID No. 33, SEQ ID No. 34, SEQ ID No. 35, SEQ ID No. 36, SEQ ID No. 38, SEQ ID No. 39, SEQ ID No. 40, SEQ ID No. 47, SEQ ID No. 48, SEQ ID No. 50, SEQ ID No. 51 or SEQ ID No. 52.

Suitably the nucleotide sequence may have 80% or more, preferably 85% or more, more preferably 90% or more and even more preferably 95% or more identity with any one of the sequences shown as SEQ ID No.21, SEQ ID No. 25, SEQ ID No. 26, SEQ ID No. 27, SEQ ID No. 28, SEQ ID No. 29, SEQ ID No. 30, SEQ ID No. 31, SEQ ID No. 32, SEQ ID No. 33, SEQ ID No. 34, SEQ ID No. 35, SEQ ID No. 36, SEQ ID No. 38, SEQ ID No. 39, SEQ ID No. 40, SEQ ID No. 47, SEQ ID No. 48, SEQ ID No. 50, SEQ ID No. 51 or SEQ ID No. 52.

In one embodiment, the nucleotide sequence encoding a lipid acyltransferase enzyme for use any one of the methods and uses disclosed is a nucleotide sequence which has 70% or more, preferably 75% or more, identity with any one of the sequences shown as: SEQ ID No. 26, SEQ ID No. 27, SEQ ID No. 28, SEQ ID No. 35, and SEQ ID No. 36. Suitably the nucleotide sequence may have 80% or more, preferably 85% or more, more preferably 90% or more and even more preferably 95% or more identity with any one of the sequences shown as: SEQ ID No. 26, SEQ ID No. 27, SEQ ID No. 28, SEQ ID No. 35, and SEQ ID No. 36.

In one embodiment, the nucleotide sequence encoding a lipid acyltransferase enzyme for use in any one of the methods and uses disclosed is a nucleotide sequence which has 70% or more, 75% or more, 80% or more, preferably 85% or more, more preferably 90% or more and even more preferably 95% or more identity the sequence shown as SEQ ID No. 26.

Suitably, the lipid acyl transferase enzyme for use any one of the methods and/or uses disclosed may be a lipid acyltransferase that comprises one or more of the following amino acid sequences:

(i) the amino acid sequence shown as SEQ ID No. 37;
(ii) the amino acid sequence shown as SEQ ID No. 1;
(iii) the amino acid sequence shown as SEQ ID No. 3;
(iv) the amino acid sequence shown as SEQ ID No. 4;
(v) the amino acid sequence shown as SEQ ID No. 5;
(vi) the amino acid sequence shown as SEQ ID No. 6;
(vii) the amino acid sequence shown as SEQ ID No. 7;
(viii) the amino acid sequence shown as SEQ ID No. 8;
(ix) the amino acid sequence shown as SEQ ID No. 9;

(x) the amino acid sequence shown as SEQ ID No. 10;
(xi) the amino acid sequence shown as SEQ ID No. 11;
(xii) the amino acid sequence shown as SEQ ID No. 12;
(xiii) the amino acid sequence shown as SEQ ID No. 13;
(xiv) the amino acid sequence shown as SEQ ID No. 14;
(xv) the amino acid sequence shown as SEQ ID No. 15;
(xvi) the amino acid sequence shown as SEQ ID No. 18;
(xvii) the amino acid sequence shown as SEQ ID No. 19;
(xviii) the amino acid sequence shown as SEQ ID No. 20;
(xix) the amino acid sequence shown as SEQ ID No. 21;
(xx) the amino acid sequence shown as SEQ ID No. 22;
(xxi) the amino acid sequence shown as SEQ ID No. 23;
(xxii) the amino acid sequence shown as SEQ ID No. 24;
(xxiii) the amino acid sequence shown as SEQ ID No. 41;
(xxiv) or

an amino acid sequence which has 75%, 80%, 85%, 90%, 95%, 98% or more identity with any one of the sequences shown as SEQ ID No. 37, SEQ ID No. 1, SEQ ID No. 3, SEQ ID No. 4, SEQ ID No. 5, SEQ ID No. 6, SEQ ID No. 7, SEQ ID No. 8, SEQ ID No. 9, SEQ ID No. 10, SEQ ID No. 11, SEQ ID No. 12, SEQ ID No. 13, SEQ ID No. 14, SEQ ID No. 15, SEQ ID No. 18, SEQ ID No. 19, SEQ ID No. 20, SEQ ID No. 21, SEQ ID No. 22, SEQ ID No. 23, SEQ ID No. 24, or SEQ ID No. 41.

Suitably, the lipid acyl transferase enzyme for use any one of the methods and uses disclosed may be a lipid acyltransferase that comprises either the amino acid sequence shown as SEQ ID No. 37, or as SEQ ID No. 3 or as SEQ ID No. 4 or SEQ ID No. 1 or SEQ ID No. 14 or SEQ ID No. 15, or SEQ ID No. 19 or SEQ ID No. 20 or comprises an amino acid sequence which has 75% or more, preferably 80% or more, preferably 85% or more, preferably 90% or more, preferably 95% or more, identity with the amino acid sequence shown as SEQ ID No. 37 or the amino acid sequence shown as SEQ ID No. 3 or the amino acid sequence shown as SEQ ID No. 4 or the amino acid sequence shown as SEQ ID No. 1 or the amino acid sequence shown as SEQ ID No. 14 or the amino acid sequence shown as SEQ ID No. 15 or the amino acid sequence shown as SEQ ID No. 19 or the amino acid sequence shown as SEQ ID No. 20.

Suitably the lipid acyl transferase enzyme for use any one of the methods and/or uses disclosed may be a lipid acyltransferase that comprises an amino acid sequence which has 80% or more, preferably 85% or more, more preferably 90% or more and even more preferably 95% or more identity with any one of the sequences shown as SEQ ID No. 37, SEQ ID No. 3, SEQ ID No. 4, SEQ ID No. 5, SEQ ID No. 6, SEQ ID No. 7, SEQ ID No. 8, SEQ ID No. 9, SEQ ID No. 10, SEQ ID No. 41, SEQ ID No. 11, SEQ ID No. 12, SEQ ID No. 13, SEQ ID No. 1, SEQ ID No. 14, SEQ ID No. 15, SEQ ID No. 19 or SEQ ID No. 20.

Suitably, the lipid acyltransferase enzyme for use any one of the methods and/or uses disclosed may be a lipid acyltransferase that comprises one or more of the following amino acid sequences:

(a) an amino acid sequence shown as amino acid residues 1-100 of SEQ ID No. 3 or SEQ ID No. 1;
(b) an amino acid sequence shown as amino acids residues 101-200 of SEQ ID No. 3 or SEQ ID No. 1;
(c) an amino acid sequence shown as amino acid residues 201-300 of SEQ ID No. 3 or SEQ ID No. 1; or
(d) an amino acid sequence which has 75% or more, preferably 85% or more, more preferably 90% or more, even more preferably 95% or more identity to any one of the amino acid sequences defined in (a)-(c) above.

Suitably, the lipid acyl transferase enzyme for use in methods and uses disclosed may comprise one or more of the following amino acid sequences:

(a) an amino acid sequence shown as amino acid residues 28-39 of SEQ ID No. 3 or SEQ ID No. 1;
(b) an amino acid sequence shown as amino acids residues 77-88 of SEQ ID No. 3 or SEQ ID No. 1;
(c) an amino acid sequence shown as amino acid residues 126-136 of SEQ ID No. 3 or SEQ ID No. 1;
(d) an amino acid sequence shown as amino acid residues 163-175 of SEQ ID No. 3 or SEQ ID No. 1;
(e) an amino acid sequence shown as amino acid residues 304-311 of SEQ ID No. 3 or SEQ ID No. 1; or
(f) an amino acid sequence which has 75% or more, preferably 85% or more, more preferably 90% or more, even more preferably 95% or more identity to any one of the amino acid sequences defined in (a)-(e) above.

In one aspect, the lipid acyl transferase enzyme for use any one of the methods and/or uses disclosed is a lipid acyltransferase that may be the lipid acyl transferase from *Candida parapsilosis* as taught in EP 1 275 711. Thus in one aspect the lipid acyl transferase for use in the method and uses of the present invention may be a lipid acyl transferase comprising the amino acid sequence taught in SEQ ID No. 42.

Much by preference, the lipid acyl transferase enzyme for use in any one of the methods and uses disclosed is a lipid acyltransferase that may be a lipid acyl transferase comprising the amino acid sequence shown as SEQ ID No. 15 or SEQ ID No. 37, or an amino acid sequence which has 75% or more, preferably 85% or more, more preferably 90% or more, even more preferably 95% or more, even more preferably 98% or more, or even more preferably 99% or more identity to SEQ ID No. 15 or SEQ ID No. 37. This enzyme could be considered a variant enzyme.

In one aspect, the lipid acyltransferase enzyme for use any one of the methods and/or uses disclosed is a lipid acyltransferase that may be a lecithin:cholesterol acyltransferase (LCAT) or variant thereof (for example a variant made by molecular evolution)

Suitable LCATs are known in the art and may be obtainable from one or more of the following organisms for example: mammals, rat, mice, chickens, *Drosophila melanogaster*, plants, including Arabidopsis and *Oryza sativa,* nematodes, fungi and yeast.

In one embodiment the lipid acyltransferase enzyme for use any one of the methods and/or uses disclosed is a lipid acyltransferase that may be the lipid acyltransferase obtainable, preferably obtained, from the E. coli strains TOP 10 harbouring pPet12aAhydro and pPet12aASalmo deposited by Danisco A/S of Langebrogade 1, DK-1001 Copenhagen K, Denmark under the Budapest Treaty on the International Recognition of the Deposit of Microorganisms for the purposes of Patent Procedure at the National Collection of Industrial, Marine and Food Bacteria (NCIMB) 23 St. Machar Street, Aberdeen Scotland, GB on 22 December 2003 under accession numbers NCIMB 41204 and NCIMB 41205, respectively.

A lipid acyltransferase enzyme for use in any one of the methods and/or uses disclosed may be a phospholipid glycerol acyl transferase. Phospholipid glycerol acyl transferases include those isolated from *Aeromonas spp.*, preferably *Aeromonas hydrophila* or *A. salmonicida*, most preferably *A. salmonicida* or variants thereof.

Lipid acyl transferases for use in the present invention may be encoded by SEQ ID No.s 1, 3, 4, 14, 19 and 20. It will be recognised by the skilled person that it is preferable that the signal peptides of the acyl transferase has been cleaved during expression of the transferase. The signal peptide of SEQ ID No.s 1, 3, 4 and 14 are amino acids 1-18. Therefore the most preferred regions are amino acids 19-335 for SEQ ID No. 1 and SEQ ID No. 3 (*A. hydrophilia*) and amino acids 19-336 for SEQ ID No. 4 and SEQ ID No. 14 (*A. salmonicida*). When used to determine the homology of identity of the amino acid sequences, it is preferred that the alignments as herein described use the mature sequence.

Therefore the most preferred regions for determining homology (identity) are amino acids 19-335 for SEQ ID No. 1 and 3 (*A. hydrophilia*) and amino acids 19-336 for SEQ ID No.s 4 and 14 (*A. salmonicida*). SEQ ID No.s 19 and 20 are mature protein sequences of a lipid acyltransferase from *A. hydrophilia* and *A. salmonicida* respectively which may or may not undergo further post-translational modification.

A lipid acyltransferase enzyme for use any one of the methods and uses disclosed may be a lipid acyltransferase that may also be isolated from *Thermobifida*, preferably *T. fusca*, most preferably that encoded by SEQ ID No. 43.

Suitable lipid acyltransferases for use in accordance with the disclosure and/or in the method disclosed may comprise any one of the following amino acid sequences and/or be encoded by the following nucleotide sequences:

a) a nucleic acid which encodes a polypeptide exhibiting lipid acyltransferase activity and is at least 70% identical (preferably at least 80%, more preferably at least 90% identical) with the polypeptide sequence shown in SEQ ID No. 15 or with the polypeptide shown in SEQ ID no. 37;
b) a (isolated) polypeptide comprising (or consisting of) an amino acid sequence as shown in SEQ ID No. 15 or SEQ ID No. 37 or an amino acid sequence which is at least 70% identical (preferably at least 80% identical, more preferably at least 90% identical) with SEQ ID No. 15 or SEQ ID No. 37;
c) a nucleic acid encoding a lipid acyltransferase, which nucleic acid comprises (or consists of) a nucleotide sequence shown as SEQ ID No. 26 or a nucleotide sequence which is at least 70% identical (preferably at least 80%, more preferably at least 90% identical) with the nucleotide sequence shown as SEQ ID No. 26;
d) a nucleic acid which hybridises under medium or high stringency conditions to a nucleic acid probe comprising the nucleotide sequence shown as SEQ ID No. 26 and encodes for a polypeptide exhibiting lipid acyltransferase activity;
e) a nucleic acid which is a fragment of the nucleic acid sequences specified in a), c) or d); or
f) a polypeptide which is a fragment of the polypeptide specified in b).

A lipid acyltransferase enzyme for use any one of the methods and uses disclosed may be a lipid acyltransferase that may also be isolated from *Streptomyces,* preferable *S. avermitis*, most preferably that encoded by SEQ ID No. 32. Other possible enzymes for use in the present invention from *Streptomyces* include those encoded by SEQ ID No.s 5, 6, 9, 10, 11, 12, 13, 31, 33 and 41.

An enzyme for use in the invention may also be isolated from *Corynebacterium*, preferably C. *efficiens*, most preferably that encoded by SEQ ID No. 18.

Suitably, the lipid acyltransferase enzyme for use any one of the methods and/or uses disclosed may be a lipid acyltransferase that comprises any one of the amino acid sequences shown as SEQ ID No.s 22, 23, 24, 48, 44, 50, or 53 or an amino acid sequence which has at least 70%, 75%, 80%, 85%, 90%, 95%, 96%, 97% or 98% identity therewith, or may be encoded by any one of the nucleotide sequences shown as SEQ ID No.s 36, 39, 42, 44, 46, or 48 or a nucleotide sequence which has at least 70%, 75%, 80%, 85%, 90%, 95%, 96%, 97% or 98% identity therewith.

In a further embodiment the lipid acyltransferase enzyme for use any one of the methods and/or uses disclosed may be a lipid acyltransferase comprising any one of the amino acid sequences shown as SEQ ID No. 22, 23, 24, 43, 45, 49 or 53 or an amino acid sequence which has at least 70%, 75%, 80%, 85%, 90%, 95%, 96%, 97% or 98% identity therewith, or may be encoded by any one of the nucleotide sequences shown as SEQ ID No. 25, 47, 48, 50 or 51 or a nucleotide sequence which has at least 70%, 75%, 80%, 85%, 90%, 95%, 96%, 97% or 98% identity therewith.

In a further embodiment the lipid acyltransferase enzyme for use any one of the methods and/or uses disclosed may be a lipid acyltransferase comprising any one of amino sequences shown as SEQ ID No. 23, 24, 45, 49 or 53 or an amino acid sequence which has at least 70%, 75%, 80%, 85%, 90%, 95%, 96%, 97% or 98% identity therewith for the uses described herein.

In a further embodiment the lipid acyltransferase for use in any one of the methods and/or uses disclosed may be a lipid acyltransferase comprising any one of amino sequences shown as SEQ ID No. 23, 45, or 53 or an amino acid sequence which has at least 70%, 75%, 80%, 85%, 90%, 95%, 96%, 97% or 98% identity therewith for the uses described herein.

More preferably in one embodiment the lipid acyltransferase for use in any one of the methods and/or uses disclosed may be a lipid acyltransferase comprising the amino acid sequence shown as SEQ ID No. 45 or an amino acid sequence which has at least 70%, 75%, 80%, 85%, 90%, 95%, 96%, 97% or 98% identity therewith.

In one embodiment the lipid acyltransferase disclosed may be a lipid acyltransferase obtainable, preferably obtained, from the *Streptomyces* strains L130 or L131 deposited by Danisco A/S of Langebrogade 1, DK-1001 Copenhagen K, Denmark under the Budapest Treaty on the International Recognition of the Deposit of Microorganisms for the purposes of Patent Procedure at the National Collection of Industrial, Marine and Food Bacteria (NCIMB) 23 St. Machar Street, Aberdeen Scotland, GB on 25 June 2004 under accession numbers NCIMB 41226 and NCIMB 41227, respectively.

A suitable lipid acyltransferases for use in any one of the methods and/or uses disclosed may be an amino acid sequence which may be identified by alignment to the L131 (SEQ ID No. 22) sequence using Align X, the Clustal W pairwise alignment algorithm of VectorNTI using default settings.

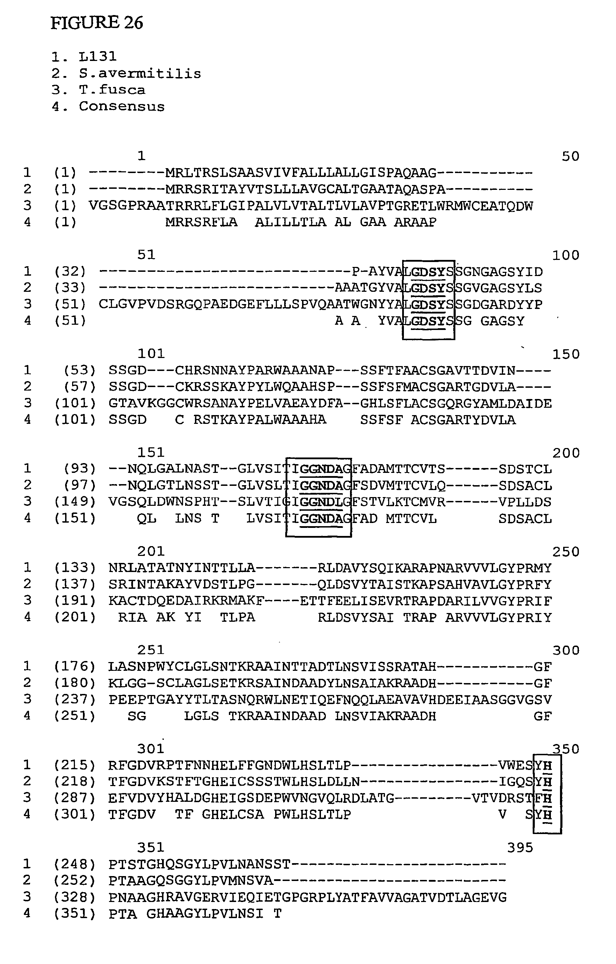

An alignment of the L131 and homologues from *S. avermitilis* and *T. fusca* illustrates that the conservation of the GDSx motif (GDSY in L131 and *S. avermitilis* and *T. fusca*), the GANDY box, which is either GGNDA or GGNDL, and the HPT block (considered to be the conserved catalytic histidine). These three conserved blocks are highlighted in Figure 26.

When aligned to either the pfam Pfam00657 consensus sequence (as described in WO04/064987) and/ or the L131 sequence herein disclosed (SEQ ID No. 22) it is possible to identify three conserved regions, the GDSx block, the GANDY block and the HTP block (see WO04/064987 for further details).

When aligned to either the pfam Pfam00657 consensus sequence (as described in WO04/064987) and/or the L131 sequence herein disclosed (SEQ ID No. 22)

i) The lipid acyltransferase for use in any one of the methods and uses of the present invention may be a lipid acyltransferase that has a GDSx motif, more preferably a GDSx motif selected from GDSL or GDSY motif.
and/or
ii) The lipid acyltransferase for use in any one of the methods and uses of the present invention may be a lipid acyltransferase that, has a GANDY block, more preferably a GANDY block comprising GGNDx, more preferably GGNDA or GGNDL.
and/or
iii) The lipid acyltransferase for use in any one of the methods and uses of the present invention may be a lipid acyltransferase that has preferably an HTP block.
and preferably
iv) the lipid acyltransferase for use in any one of the methods and uses of the present invention may be a lipid acyltransferase that has preferably a GDSx or GDSY motif, and a GANDY block comprising amino GGNDx, preferably GGNDA or GGNDL, and a HTP block (conserved histidine).

In one embodiment the enzyme disclosed may be preferably not a phospholipase enzyme, such as a phospholipase A1 classified as E.C. 3.1.1.32 or a phospholipase A2 classified as E.C. 3.1.1.4.

ADVANTAGES

One advantage of the present invention is that the use of a lipid acyltransferase in accordance with the present invention results in a reduction in cholesterol in meat based food products.

A further advantage of the present invention is the reduction of cholesterol in the meat based food product whilst maintaining and/or improving one or more of the following characteristics: fat stability so that fat losses are minimized and the amount of visible fat is reduced in meat based food products; taste, texture, weight loss and appearance

A further advantage of the present invention is the production of a meat based food product with an increased fat stability (i.e. a reduction in the amount of visible fat and/or a reduction in greasiness and/or a reduction in fat separation during thermal processing) and/or an improved texture and/or a reduced weight loss.

Another advantage of the present invention is that the process is such that the proliferation of spoilage bacteria, pathogens and fungi in the meat and/or meat based food product during processing is reduced or kept to a minimum.

It is a further advantage of the present invention (for example when used with emulsified meat products with a considerable fat content, e.g. fine paste sausages and pâtés) that the fat stability is increased so that fat losses are minimized and the amount of visible fat is reduced. Additionally, the loss of meat juice may be kept low, and/or that the taste, texture and/or appearance are acceptable.

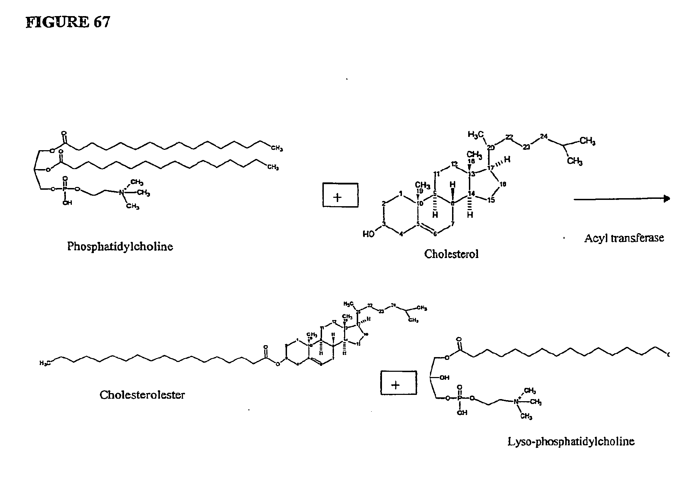

Lipid acyltransferases transfer the sn-2 ester bond of phospholipids and/or triglycerides and/or galactolipids to an acyl acceptor, such as cholesterol; resulting in the formation of lysophospholipids, and/or mono- and/or di-glycerides, and/or lysogalactolipids, respectively, and cholesterol ester (Figure 67 illustrates this with phospholipase by way of example). The transferase leads to the release of less hydrophobic and thus more water-soluble lysophospholipids (when the substrate is a phospholipid), which have a higher dynamic surface activity because of the higher unimer concentration in the aqueous phase.

Besides its emulsifying properties, lipid acyltransferases are also able to reduce the cholesterol levels in meat by producing cholesterol ester (i.e. using the cholesterol as an acyl acceptor thus forming a cholesterol ester and reducing the amount of "free" cholesterol). Polyunsaturated fatty acids and cholesterol may undergo oxidation during preparation and prolonged storage of meat products. This oxidation produces numerous compounds (hydroperoxides, aldehydes, ketones, cholesterol oxides, such as oxysterols, etc.) some of which are believed to have mutagenic and carcinogenic effects, and cytotoxic properties. (Jiménez-Colmenero et al2001: Healthier meat and meat products: their role as functional foods. Meat science 59, 5-13). Therefore the reduction of cholesterol is advantageous as it potentially reduces the potentially harmful compounds being formed from its oxidation. In addition, the meat based food product can be used as part of a diet to reduce cholesterol as they will constitute a reduced cholesterol product, which is often recommended in a healthy diet.

A further advantage of the present invention is that it results in a meat or meat based food product with improved (increased) heat stability.

HOST CELL

The lipid acyltransferase for use in the present invention may be produced recombinantly in a host cell or organism.

The host organism can be a prokaryotic or a eukaryotic organism.

In one embodiment the lipid acyl transferase as disclosed is expressed in a host cell, for example a bacterial cell, such as a *Bacillus* spp, for example a *Bacillus licheniformis* host cell.

Alternative host cells may be fungi, yeasts or plants for example.

It has been found that the use of a *Bacillus licheniformis* host cell results in increased expression of a lipid acyltransferase when compared with other organisms, such as *Bacillus subtilis.*

A lipid acyltransferase from *Aeromonas salmonicida* has been inserted into a number of conventional expression vectors, designed to be optimal for the expression in *Bacillus subtilis*, *Hansenula polymorpha*, *Schizosaccharomyces pombe* and *Aspergillus tubigensis*, respectively. Only very low levels were, however, detected in *Hansenula polymorpha*, *Schizosaccharomyces pombe* and *Aspergillus tubigensis.* The expression levels were below 1 $\mu$g/ml, and it was not possible to select cells which yielded enough protein to initiate a commercial production (results not shown). In contrast, *Bacillus licheniformis* was able to produce protein levels, which are attractive for an economically feasible production.

In particular, it has been found that expression in *B. licheniformis* is approximately 100-times greater than expression in *B. subtilis* under the control of aprE promoter or is approximately 100-times greater than expression in *S. lividans* under the control of an A4 promoter and fused to cellulose (results not shown herein).

The host cell may be any *Bacillus* cell other than *B.subtilis*. Preferably, said *Bacillus* host cell being from one of the following species: *Bacillus licheniformis; B. alkalophilus; B. amyloliquefaciens; B. circulans; B. clausii; B. coagulans; B. firmus; B. lautus; B. lentus; B. megaterium; B. pumilus* or *B. stearothermophilus*.

The term "host cell" - in relation to the present invention includes any cell that comprises either a nucleotide sequence encoding a lipid acyltransferase as defined herein or an expression vector as defined herein and which is used in the recombinant production of a lipid acyltransferase having the specific properties as defined herein.

Suitably, the host cell may be a protease deficient or protease minus strain and/or an α- amylase deficient or α- amylase minus strain.

The term "heterologous" as used herein means a sequence derived from a separate genetic source or species. A heterologous sequence is a non-host sequence, a modified sequence, a sequence from a different host cell strain, or a homologous sequence from a different chromosomal location of the host cell.

A "homologous" sequence is a sequence that is found in the same genetic source or species i.e. it is naturally occurring in the relevant species of host cell.

The term "recombinant lipid acyltransferase" as used herein means that the lipid acyltransferase has been produced by means of genetic recombination. For instance, the nucleotide sequence encoding the lipid acyltansferase has been inserted into a cloning vector, resulting in a *B. licheniformis* cell characterised by the presence of the heterologous lipid acyltransferase.

REGULATORY SEQUENCES

In some applications, a lipid acyltransferase sequence for use in the methods and/or uses disclosed may be obtained by operably linking a nucleotide sequence encoding same to a regulatory sequence which is capable of providing for the expression of the nucleotide sequence, such as by the chosen host cell (such as a *B. licheniformis* cell).

By way of example, a vector comprising the nucleotide sequence of the present invention operably linked to such a regulatory sequence, i.e. the vector is an expression vector, may be used.

The term "operably linked" refers to a juxtaposition wherein the components described are in a relationship permitting them to function in their intended manner. A regulatory sequence "operably linked" to a coding sequence is ligated in such a way that expression of the coding sequence is achieved under conditions compatible with the control sequences.

The term "regulatory sequences" includes promoters and enhancers and other expression regulation signals.

The term "promoter" is used in the normal sense of the art, e.g. an RNA polymerase binding site.

Enhanced expression of the nucleotide sequence encoding the enzyme having the specific properties as defined herein may also be achieved by the selection of regulatory regions, e.g. promoter, secretion leader and terminator regions that are not regulatory regions for the nucleotide sequence encoding the enzyme in nature.

Suitably, the nucleotide sequence of the present invention may be operably linked to at least a promoter.

Suitably, the nucleotide sequence encoding a lipid acyltransferase may be operably linked to at a nucleotide sequence encoding a terminator sequence. Examples of suitable terminator sequences for use in any one of the vectors, host cells, methods and/or uses disclosed include: an α- amylase terminator sequence (for instance, CGGGACTTACCGAAAGAAACCATCAATGATGGTTTCTTTTTTGTTCATAAA- SEQ ID No. 57), an alkaline protease terminator sequence (for instance, CAAGACTAAAGACCGTTCGCCCGTTTTTGCAATAAGCGGGCGAATCTTACATAAAA ATA- SEQ ID No. 58), a glutamic- acid specific terminator sequence (for instance, ACGGCCGTTAGATGTGACAGCCCGTTCCAAAAGGAAGCGGGCTGTCTTCGTGTAT TATTGT- SEQ ID No. 59), a levanase terminator sequence (for instance, TCTTTTAAAGGAAAGGCTGGAATGCCCGGCATTCCAGCCACATGATCATCGTTT- SEQ ID No. 60) and a subtilisin E terminator sequence (for instance, GCTGACAAATAAAAAGAAGCAGGTATGGAGGAACCTGCTTCTTTTTACTATTATTG- SEQ ID No. 61) .

Suitably, the nucleotide sequence encoding a lipid acyltransferase may be operably linked to an α- amylase terminator, such as a *B. licheniformis* α- amylase terminator.

PROMOTER

The promoter sequence to be used as disclosed may be heterologous or homologous to the sequence encoding a lipid acyltransferase.

The promoter sequence may be any promoter sequence capable of directing expression of a lipid acyltransferase in the host cell of choice.

Suitably, the promoter sequence may be homologous to a *Bacillus* species, for example *B. licheniformis.* Preferably, the promoter sequence is homologous to the host cell of choice.

Suitably the promoter sequence may be homologous to the host cell. "Homologous to the host cell" means originating within the host organism; i.e. a promoter sequence which is found naturally in the host organism.

Suitably, the promoter sequence may be selected from the group consisting of a nucleotide sequence encoding: an α- amylase promoter, a protease promoter, a subtilisin promoter, a glutamic acid- specific protease promoter and a levansucrase promoter.

Suitably the promoter sequence may be a nucleotide sequence encoding: the LAT (e.g. the alpha-amylase promoter from *B. licheniformis,* also known as AmyL), AprL (e.g. subtilisin Carlsberg promoter), EndoGluC (e.g. the glutamic-acid specific promoter from *B. licheniformis*), AmyQ (e.g. the alpha amylase promoter from *B. amyloliquefaciens* alpha-amylase promoter) and SacB (e.g. the *B. subtilis* levansucrase promoter).

Other examples of promoters suitable for directing the transcription of a nucleic acid sequence in the methods disclosed include: the promoter of the *Bacillus lentus* alkaline protease gene (aprH), ; the promoter of the *Bacillus subtilis* alpha-amylase gene (amyE); the promoter of the *Bacillus stearothermophilus* maltogenic amylase gene (amyM); the promoter of the *Bacillus licheniformis* penicillinase gene (penP); the promoters of the *Bacillus subtilis* xylA and xylB genes; and/or the promoter of the *Bacillus thuringiensis* subsp. *tenebrionis* CryIIIA gene.

In a preferred embodiment, the promoter sequence is an α-amylase promoter (such as a *Bacillus licheniformis* α-amylase promoter). Preferably, the promoter sequence comprises the -35 to -10 sequence of the B. *licheniformis* α-amylase promoter - see Figures 53 and 55.

The "-35 to -10 sequence" describes the position relative to the transcription start site. Both the "-35" and the °-10" are boxes, i.e. a number of nucleotides, each comprising 6 nucleotides and these boxes are separated by 17 nucleotides. These 17 nucleotides are often referred to as a "spacer". This is illustrated in Figure 55, where the -35 and the -10 boxes are underlined. For the avoidance of doubt, where "-35 to -10 sequence" is used herein it refers to a sequence from the start of the -35 box to the end of the -10 box i.e. including both the -35 box, the 17 nucleotide long spacer and the -10 box.

SIGNAL PEPTIDE

The lipid acyltransferase produced by a host cell by expression of the nucleotide sequence encoding the lipid acyltransferase may be secreted or may be contained intracellularly depending on the sequence and/or the vector used.

A signal sequence may be used to direct secretion of the coding sequences through a particular cell membrane. The signal sequences may be natural or foreign to the lipid acyltransferase coding sequence. For instance, the signal peptide coding sequence may be obtained form an amylase or protease gene from a *Bacillus* species, preferably from *Bacillus licheniformis.*

Suitable signal peptide coding sequences may be obtained from one or more of the following genes: maltogenic α-amylase gene, subtilisin gene, beta-lactamase gene, neutral protease gene, prsA gene, and/or acyltransferase gene.

Preferably, the signal peptide is a signal peptide of *B. licheniformis* α- amylase, Aeromonas acyltransferase (for instance, mkkwfvcllglialtvqa- SEQ ID No. 54), *B. subtilis* subtilisin (for instance, mrskklwisllfaltliftmafsnmsaqa- SEQ ID No. 55) or *B. licheniformis* subtilisin (for instance, mmrkksfwfgmltafmlvftmefsdsasa- SEQ ID No. 56) . Suitably, the signal peptide may be the signal peptide of *B. licheniformis* α- amylase.

However, any signal peptide coding sequence capable of directing the expressed lipid acyltransferase into the secretory pathway of a *Bacillus host* cell (preferably a *B. licheniformis* host cell) of choice may be used.

In some embodiments disclosed, a nucleotide sequence encoding a signal peptide may be operably linked to a nucleotide sequence encoding a lipid acyltransferase of choice.

The lipid acyltransferase of choice may be expressed in a host cell as defined herein as a fusion protein.

EXPRESSION VECTOR

The term "expression vector" means a construct capable of *in vivo* or *in vitro* expression.

Preferably, the expression vector is incorporated in the genome of the organism, such as a *B. licheniformis* host. The term "incorporated" preferably covers stable incorporation into the genome.

The nucleotide sequence encoding a lipid acyltransferase as defined herein may be present in a vector, in which the nucleotide sequence is operably linked to regulatory sequences such that the regulatory sequences are capable of providing the expression of the nucleotide sequence by a suitable host organism (such as *B. licheniformis*), i.e. the vector is an expression vector.

The vectors disclosed may be transformed into a suitable host cell as described above to provide for expression of a polypeptide having lipid acyltransferase activity as defined herein.

The choice of vector, e.g. plasmid, cosmid, virus or phage vector, genomic insert, will often depend on the host cell into which it is to be introduced. The disclosure may cover other forms of expression vectors which serve equivalent functions and which are, or become, known in the art.

Once transformed into the host cell of choice, the vector may replicate and function independently of the host cell's genome, or may integrate into the genome itself.

The vectors may contain one or more selectable marker genes - such as a gene which confers antibiotic resistance e.g. ampicillin, kanamycin, chloramphenicol or tetracyclin resistance. Alternatively, the selection may be accomplished by co-transformation (as described in WO91/17243).

Vectors may be used *in vitro,* for example for the production of RNA or used to transfect or transform a host cell.

The vector may further comprise a nucleotide sequence enabling the vector to replicate in the host cell in question. Examples of such sequences are the origins of replication of plasmids pUC19, pACYC177, pUB110, pE194, pAMB1 and pIJ702.

VARIANT LIPID ACYLTRANSFERASE

In one embodiment the nucleotide sequence encoding a lipid acyltransferase or the lipid acyltransferase for use in any one of the methods and/or uses disclosed may encode or be a variant lipid acyltransferase.

Variants which have an increased activity on phospholipids, such as increased transferase activity on phospholipids may be used.

Suitable methods for modifying lipid acyltransferases to produce variant lipid acyltransferases are taught in WO2005/066347.

One preferred modification is N80D. This is particularly the case when using the sequence SEQ ID No. 20 as the backbone. Thus, the sequence may be SEQ ID No. 15 or SEQ ID No.37. This modification may be in combination with one or more further modifications.

As noted above, when referring to specific amino acid residues herein the numbering is that obtained from alignment of the variant sequence with the reference sequence shown as SEQ ID No. 19 or SEQ ID No. 20.

Much by preference, the nucleotide sequence encoding a lipid acyltransferase for use in any one of the methods and uses of the present invention may encode a lipid comprising the amino acid sequence shown as SEQ ID No. 15 or the amino acid sequence shown as SEQ ID No. 37, or an amino acid sequence which has 70% or more, preferably 75% or more, preferably 85% or more, more preferably 90% or more, even more preferably 95% or more, even more preferably 98% or more, or even more preferably 99% or more identity to SEQ ID No. 16 or SEQ ID No. 68. This enzyme may be considered a variant enzyme.

DEFINITIONS

The term "transferase" as used herein is interchangeable with the term "lipid acyltransferase".

Suitably, the lipid acyltransferase as defined herein catalyses one or more of the following reactions: interesterification, transesterification, alcoholysis, hydrolysis.

The term "interesterification" refers to the enzymatic catalysed transfer of acyl groups between a lipid donor and lipid acceptor, wherein the lipid donor is not a free acyl group.

The term "transesterification" as used herein means the enzymatic catalysed transfer of an acyl group from a lipid donor (other than a free fatty acid) to an acyl acceptor (other than water). The lipid acyltransferase for use in the methods and/or uses of the present invention is one which preferably undergoes a transesterification reaction between a lipid (preferably a phospholipid) and a sterol (preferably cholesterol).

As used herein, the term "alcoholysis" refers to the enzymatic cleavage of a covalent bond of an acid derivative by reaction with an alcohol ROH so that one of the products combines with the H of the alcohol and the other product combines with the OR group of the alcohol.

As used herein, the term "hydrolysis" refers to the enzymatic catalysed transfer of an acyl group from a lipid to the OH group of a water molecule.

COMBINATION WITH OTHER ENZYMES

In one preferred embodiment the lipid acyltransferase is used in combination with a lipase having one or more of the following enzyme activities: glycolipase activity (E.C. 3.1.1.26, phospholipase A2 activity (E.C. 3.1.1.4) or phospholipase A1 activity (E.C. 3.1.1.32). Suitably, lipase enzymes are well known within the art and include by way of example the following lipases: a phospholipase A1 LECITASE® ULTRA (Novozymes A/S, Denmark), phospholipase A2 (e.g. phospholipase A2 from LIPOMOD™ 22L from Biocatalysts, LIPOMAX™ and LysoMax PLA2™from Genecor), LIPOLASE® (Novozymes A/S, Denmark).

In some embodiments it may be beneficial to combine the use of lipid acyltransferase with a phospholipase, such as phospholipase A1, phospholipase A2, phospholipase B, Phospholipase C and/or phospholipase D.

The combined use may be performed sequentially or concurrently, e.g. the lipid acyl transferase treatment may occur prior to or during the further enzyme treatment.

Alternatively, the further enzyme treatment may occur prior to or during the lipid acyltransferase treatment.

In the case of sequential enzyme treatments, in some embodiments it may be advantageous to remove the first enzyme used, e.g. by heat deactivation or by use of an immobilised enzyme, prior to treatment with the second (and/or third etc.) enzyme.

## POST-TRANSCRIPTION AND POST-TRANSLATIONAL MODIFICATIONS

Suitably the lipid acyltransferase in accordance with the present invention may be encoded by any one of the nucleotide sequences taught herein.

Depending upon the host cell used post-transcriptional and/or post-translational modifications may be made. It is envisaged that the lipid acyltransferase for use in the present methods and/or uses encompasses lipid acyltransferases which have undergone post-transcriptional and/or post-translational modification.

By way of example only, the expression of the nucleotide sequence shown herein as SEQ ID No. 26 (see Figure 39) in a host cell (such as *Bacillus licheniformis* for example) results in post-transcriptional and/or post-translational modifications which lead to the amino acid sequence shown herein as SEQ ID No. 37 (see Figure 50).

SEQ ID No. 37 is the same as SEQ ID No. 15 (shown herein in Figure 1) except that SEQ ID No. 37 has undergone post-translational and/or post-transcriptional modification to remove 38 amino acids.

## ISOLATED

In one aspect, the lipid acyltransferase is a recovered/isolated lipid acyltransferase. Thus, the lipid acyltransferase produced may be in an isolated form.

In another aspect, the nucleotide sequence encoding a lipid acyltransferase for use in the present invention may be in an isolated form.

The term "isolated" means that the sequence or protein is at least substantially free from at least one other component with which the sequence or protein is naturally associated in nature and as found in nature.

## PURIFIED

In one aspect, the lipid acyltransferase may be in a purified form.

In another aspect, the nucleotide sequence encoding a lipid acyltransferase for use in the present invention may be in a purified form.

The term "purified" means that the sequence is in a relatively pure state - e.g. at least about 51% pure, or at least about 75%, or at least about 80%, or at least about 90% pure, or at least about 95% pure or at least about 98% pure.

## CLONING A NUCLEOTIDE SEQUENCE ENCODING A POLYPEPTIDE ACCORDING TO THE PRESENT INVENTION

A nucleotide sequence encoding either a polypeptide which has the specific properties as defined herein or a polypeptide which is suitable for modification may be isolated from any cell or organism producing said polypeptide. Various methods are well known within the art for the isolation of nucleotide sequences.

For example, a genomic DNA and/or cDNA library may be constructed using chromosomal DNA or messenger RNA from the organism producing the polypeptide. If the amino acid sequence of the polypeptide is known, labeled oligonucleotide probes may be synthesised and used to identify polypeptide-encoding clones from the genomic library prepared from the organism. Alternatively, a labeled oligonucleotide probe containing sequences homologous to another known polypeptide gene could be used to identify polypeptide-encoding clones. In the latter case, hybridisation and washing conditions of lower stringency are used.

Alternatively, polypeptide- encoding clones could be identified by inserting fragments of genomic DNA into an expression vector, such as a plasmid, transforming enzyme- negative bacteria with the resulting genomic DNA library, and then plating the transformed bacteria onto agar containing an enzyme inhibited by the polypeptide, thereby allowing clones expressing the polypeptide to be identified.

In a yet further alternative, the nucleotide sequence encoding the polypeptide may be prepared synthetically by established standard methods, e.g. the phosphoroamidite method described by Beucage S.L. et al (1981) Tetrahedron Letters 22, p 1859-1869, or the method described by Matthes et al (1984) EMBO J. 3, p 801-805. In the phosphoroamidite method, oligonucleotides are synthesised, e.g. in an automatic DNA synthesiser, purified, annealed, ligated and cloned in appropriate vectors.

The nucleotide sequence may be of mixed genomic and synthetic origin, mixed synthetic and cDNA origin, or mixed genomic and cDNA origin, prepared by ligating fragments of synthetic, genomic or cDNA origin (as appropriate) in accordance with standard techniques. Each ligated fragment corresponds to various parts of the entire nucleotide sequence. The DNA sequence may also be prepared by polymerase chain reaction (PCR) using specific primers, for instance as described in US 4,683,202 or in Saiki R K et al (Science (1988) 239, pp 487-491).

NUCLEOTIDE SEQUENCES

The present disclosure also encompasses nucleotide sequences encoding polypeptides having the specific properties as defined herein. The term "nucleotide sequence" as used herein refers to an oligonucleotide sequence or polynucleotide sequence, and variant, homologues, fragments and derivatives thereof (such as portions thereof). The nucleotide sequence may be of genomic or synthetic or recombinant origin, which may be double-stranded or single-stranded whether representing the sense or antisense strand.

The term "nucleotide sequence" in relation to the present invention includes genomic DNA, cDNA, synthetic DNA, and RNA. Preferably it means DNA, more preferably cDNA for the coding sequence.

In a preferred embodiment, the nucleotide sequence *per se* encoding a polypeptide having the specific properties as defined herein does not cover the native nucleotide sequence in its natural environment when it is linked to its naturally associated sequence(s) that is/are also in its/their natural environment. For ease of reference, we shall call this preferred embodiment the "non-native nucleotide sequence". In this regard, the term "native nucleotide sequence" means an entire nucleotide sequence that is in its native environment and when operatively linked to an entire promoter with which it is naturally associated, which promoter is also in its native environment. Thus, the polypeptide of the present disclosure can be expressed by a nucleotide sequence in its native organism but wherein the nucleotide sequence is not under the control of the promoter with which it is naturally associated within that organism.

Preferably the polypeptide is not a native polypeptide. In this regard, the term "native polypeptide" means an entire polypeptide that is in its native environment and when it has been expressed by its native nucleotide sequence.

Typically, the nucleotide sequence encoding polypeptides having the specific properties as defined herein is prepared using recombinant DNA techniques (i.e. recombinant DNA) . However, in an alternative embodiment of the disclosure the nucleotide sequence could be synthesised, in whole or in part, using chemical methods well known in the art (see Caruthers MH et al (1980) Nuc Acids Res Symp Ser 215- 23 and Horn T et al (1980) Nuc Acids Res Symp Ser 225- 232) .

MOLECULAR EVOLUTION

Once an enzyme-encoding nucleotide sequence has been isolated, or a putative enzyme-encoding nucleotide sequence has been identified, it may be desirable to modify the selected nucleotide sequence, for example it may be desirable to mutate the sequence in order to prepare an enzyme in accordance with the present invention.

Mutations may be introduced using synthetic oligonucleotides. These oligonucleotides contain nucleotide sequences flanking the desired mutation sites.

A suitable method is disclosed in Morinaga et al (Biotechnology (1984) 2, p646-649). Another method of introducing mutations into enzyme-encoding nucleotide sequences is described in Nelson and Long (Analytical Biochemistry (1989), 180, p 147-151).

Instead of site directed mutagenesis, such as described above, one can introduce mutations randomly for instance using a commercial kit such as the GeneMorph PCR mutagenesis kit from Stratagene, or the Diversify PCR random mutagenesis kit from Clontech. EP 0 583 265 refers to methods of optimising PCR based mutagenesis, which can also be combined with the use of mutagenic DNA analogues such as those described in EP 0 866 796. Error prone PCR technologies are suitable for the production of variants of lipid acyl transferases with preferred characteristics. WO0206457 refers to molecular evolution of lipases.

A third method to obtain novel sequences is to fragment non-identical nucleotide sequences, either by using any number of restriction enzymes or an enzyme such as Dnase I, and reassembling full nucleotide sequences coding for functional proteins. Alternatively one can use one or multiple non-identical nucleotide sequences and introduce mutations during the reassembly of the full nucleotide sequence. DNA shuffling and family shuffling technologies are suitable for the production of variants of lipid acyl transferases with preferred characteristics. Suitable methods for performing 'shuffling' can be found in EP0 752 008, EP1 138 763, EP1 103 606. Shuffling can also be combined with other forms of DNA mutagenesis as described in US 6,180,406 and WO 01/34835.

Thus, it is possible to produce numerous site directed or random mutations into a nucleotide sequence, either *in vivo* or *in vitro*, and to subsequently screen for improved functionality of the encoded polypeptide by various means. Using in silico and exo mediated recombination methods (see WO 00/58517, US 6, 344, 328, US 6, 361, 974), for example, molecular evolution can be performed where the variant produced retains very low homology to known enzymes or proteins. Such variants thereby obtained may have significant structural analogy to known transferase enzymes, but have very low amino acid sequence homology.

As a non-limiting example, In addition, mutations or natural variants of a polynucleotide sequence can be recombined with either the wild type or other mutations or natural variants to produce new variants. Such new variants can also be screened for improved functionality of the encoded polypeptide.

The application of the above-mentioned and similar molecular evolution methods allows the identification and selection of variants of the enzymes of the present invention which have preferred characteristics without any prior knowledge of protein structure or function, and allows the production of non-predictable but beneficial mutations or variants. There are numerous examples of the application of molecular evolution in the art for the optimisation or alteration of enzyme activity, such examples include, but are not limited to one or more of the following: optimised expression and/or activity in a host cell or in vitro, increased enzymatic activity, altered substrate and/or product specificity, increased or decreased enzymatic or structural stability, altered enzymatic activity/specificity in preferred environmental conditions, e.g. temperature, pH, substrate

As will be apparent to a person skilled in the art, using molecular evolution tools an enzyme may be altered to improve the functionality of the enzyme.

Suitably, the nucleotide sequence encoding a lipid acyltransferase used in the disclosure may encode a variant lipid acyltransferase, i.e. the lipid acyltransferase may contain at least one amino acid substitution, deletion or addition, when compared to a parental enzyme. Variant enzymes retain at least 1%, 2%, 3%, 5%, 10%, 15%, 20%, 30%, 40%, 50 %, 60%, 70%, 80%, 90%, 95%, 97%, 99% homology with the parent enzyme. Suitable parent enzymes may include any enzyme with esterase or lipase activity. Preferably, the parent enzyme aligns to the pfam00657 consensus sequence.

In a preferable embodiment a variant lipid acyltransferase enzyme retains or incorporates at least one or more of the pfam00657 consensus sequence amino acid residues found in the GDSx, GANDY and HPT blocks.

Suitably, the nucleotide sequence encoding a lipid acyltransferase for use in any one of the methods and/or uses disclosed may encode a lipid acyltransferase that may be a variant with enhanced enzyme activity on polar lipids, preferably phospholipids and/or glycolipids when compared to the parent enzyme. Preferably, such variants also have low or no activity on lyso polar lipids.

Variant lipid acyltransferases may have decreased activity on triglycerides, and/or monoglycerides and/or diglycerides compared with the parent enzyme.

Suitably the variant enzyme may have no activity on triglycerides and/or monoglycerides and/or diglycerides.

Alternatively, the variant enzyme may have increased thermostability.

The variant enzyme may have increased activity on one or more of the following, polar lipids, phospholipids, lecithin, phosphatidylcholine, glycolipids, digalactosyl monoglyceride, monogalactosyl monoglyceride.

Variants of lipid acyltransferases are known, and one or more of such variants may be suitable for use in the methods and uses according to the disclosure and/or in the enzyme compositions according to the disclosure. By way of example only, variants of lipid acyltransferases as described in the following references may be used in accordance with the present invention: Hilton & Buckley J Biol. Chem. 1991 Jan 15: 266 (2) : 997- 1000; Robertson et al J. Biol. Chem. 1994 Jan 21; 269 (3) : 2146- 50; Brumlik et al J. Bacteriol 1996 Apr; 178 (7) : 2060- 4; Peelman et al Protein Sci. 1998 Mar; 7 (3) : 587- 99.

## AMINO ACID SEQUENCES

Disclosed is also the use of amino acid sequences encoded by a nucleotide sequence which encodes a lipid acyltransferase for use in any one of the methods of the present invention.

As used herein, the term "amino acid sequence" is synonymous with the term "polypeptide" and/or the term "protein". In some instances, the term "amino acid sequence" is synonymous with the term "peptide".

The amino acid sequence may be prepared/isolated from a suitable source, or it may be made synthetically or it may be prepared by use of recombinant DNA techniques.

Suitably, the amino acid sequences may be obtained from the isolated polypeptides taught herein by standard techniques.

One suitable method for determining amino acid sequences from isolated polypeptides is as follows:

Purified polypeptide may be freeze-dried and 100 μg of the freeze-dried material may be dissolved in 50 μl of a mixture of 8 M urea and 0.4 M ammonium hydrogen carbonate, pH 8.4. The dissolved protein may be denatured and reduced for 15 minutes at 50°C following overlay with nitrogen and addition of 5 μl of 45 mM dithiothreitol. After cooling to room temperature, 5 μl of 100 mM iodoacetamide may be added for the cysteine residues to be derivatized for 15 minutes at room temperature in the dark under nitrogen.

135 μl of water and 5 μg of endoproteinase Lys-C in 5 μl of water may be added to the above reaction mixture and the digestion may be carried out at 37°C under nitrogen for 24 hours.

The resulting peptides may be separated by reverse phase HPLC on a VYDAC C18 column (0.46x15cm;10μm; The Separation Group, California, USA) using solvent A: 0.1% TFA in water and solvent B: 0.1% TFA in acetonitrile. Selected peptides may be re-chromatographed on a Develosil C18 column using the same solvent system, prior to N-terminal sequencing. Sequencing may be done using an Applied Biosystems 476A sequencer using pulsed liquid fast cycles according to the manufacturer's instructions (Applied Biosystems, California, USA).

SEQUENCE IDENTITY OR SEQUENCE HOMOLOGY

Here, the term "homologue" means an entity having a certain homology with the subject amino acid sequences and the subject nucleotide sequences. Here, the term "homology" can be equated with "identity".

The homologous amino acid sequence and/or nucleotide sequence should provide and/or encode a polypeptide which retains the functional activity and/or enhances the activity of the enzyme.

In the present context, a homologous sequence is taken to include an amino acid sequence which may be at least 75, 85 or 90% identical, preferably at least 95 or 98% identical to the subject sequence. Typically, the homologues will comprise the same active sites etc. as the subject amino acid sequence. Although homology can also be considered in terms of similarity (i.e. amino acid residues having similar chemical properties/functions), in the context of the present invention it is preferred to express homology in terms of sequence identity.

In the present context, a homologous sequence is taken to include a nucleotide sequence which may be at least 75, 85 or 90% identical, preferably at least 95 or 98% identical to a nucleotide sequence encoding a polypeptide of the present invention (the subject sequence). Typically, the homologues will comprise the same sequences that code for the active sites etc. as the subject sequence. Although homology can also be considered in terms of similarity (i.e. amino acid residues having similar chemical properties/functions), in the context of the present invention it is preferred to express homology in terms of sequence identity.

Homology comparisons can be conducted by eye, or more usually, with the aid of readily available sequence comparison programs. These commercially available computer programs can calculate % homology between two or more sequences.

% homology may be calculated over contiguous sequences, i.e. one sequence is aligned with the other sequence and each amino acid in one sequence is directly compared with the corresponding amino acid in the other sequence, one residue at a time. This is called an "ungapped" alignment. Typically, such ungapped alignments are performed only over a relatively short number of residues.

Although this is a very simple and consistent method, it fails to take into consideration that, for example, in an otherwise identical pair of sequences, one insertion or deletion will cause the following amino acid residues to be put out of alignment, thus potentially resulting in a large reduction in % homology when a global alignment is performed. Consequently, most sequence comparison methods are designed to produce optimal alignments that take into consideration possible insertions and deletions without penalising unduly the overall homology score. This is achieved by inserting "gaps" in the sequence alignment to try to maximise local homology.

However, these more complex methods assign "gap penalties" to each gap that occurs in the alignment so that, for the same number of identical amino acids, a sequence alignment with as few gaps as possible- reflecting higher relatedness between the two compared sequences- will achieve a higher score than one with many gaps. "Affine gap costs" are typically used that charge a relatively high cost for the existence of a gap and a smaller penalty for each subsequent residue in the gap. This is the most commonly used gap scoring system. High gap penalties will of course produce optimised alignments with fewer gaps. Most alignment programs allow the gap penalties to be modified. However, it is preferred to use the default values when using such software for sequence comparisons.

Calculation of maximum % homology therefore firstly requires the production of an optimal alignment, taking into consideration gap penalties. A suitable computer program for carrying out such an alignment is the Vector NTI (Invitrogen Corp.). Examples of other software that can perform sequence comparisons include, but are not limited to, the BLAST package (see Ausubel et al 1999 Short Protocols in Molecular Biology, 4th Ed - Chapter 18), and FASTA (Altschul et al 1990 J. Mol. Biol. 403-410). Both BLAST and FASTA are available for offline and online searching (see Ausubel *et al* 1999, pages 7-58 to 7-60). However, for some applications, it is preferred to use the Vector NTI program. A new tool, called BLAST 2 Sequences is also available for comparing protein and nucleotide sequence (see FEMS Microbiol Lett 1999 174(2): 247-50; FEMS Microbiol Lett 1999 177(1): 187-8 and tatiana@ncbi.nlm.nih.gov).

Although the final % homology can be measured in terms of identity, the alignment process itself is typically not based on an all-or-nothing pair comparison. Instead, a scaled similarity score matrix is generally used that assigns scores to each pairwise comparison based on chemical similarity or evolutionary distance. An example of such a matrix commonly used is the BLOSUM62 matrix - the default matrix for the BLAST suite of programs. Vector NTI programs generally use either the public default values or a custom symbol comparison table if supplied (see user manual for further details). For some applications, it is preferred to use the default values for the Vector NTI package.

Alternatively, percentage homologies may be calculated using the multiple alignment feature in Vector NTI (Invitrogen Corp.), based on an algorithm, analogous to CLUSTAL (Higgins DG & Sharp PM (1988), Gene 73 (1), 237-244) .

Once the software has produced an optimal alignment, it is possible to calculate % homology, preferably % sequence identity. The software typically does this as part of the sequence comparison and generates a numerical result.

Should Gap Penalties be used when determining sequence identity, then preferably the following parameters are used for pairwise alignment:

| FOR BLAST | |
|---|---|
| GAP OPEN | 0 |
| GAP EXTENSION | 0 |

| FOR CLUSTAL | DNA | PROTEIN | |
|---|---|---|---|
| WORD SIZE | 2 | 1 | K triple |
| GAP PENALTY | 15 | 10 | |
| GAP EXTENSION | 6.66 | 0.1 | |

In one embodiment, preferably the sequence identity for the nucleotide sequences is determined using CLUSTAL with the gap penalty and gap extension set as defined above.

Suitably, the degree of identity with regard to a nucleotide sequence is determined over at least 20 contiguous nucleotides, preferably over at least 30 contiguous nucleotides, preferably over at least 40 contiguous nucleotides, preferably over at least 50 contiguous nucleotides, preferably over at least 60 contiguous nucleotides, preferably over at least 100 contiguous nucleotides.

Suitably, the degree of identity with regard to a nucleotide sequence may be determined over the whole sequence.

In one embodiment the degree of amino acid sequence identity in accordance with the present invention may be suitably determined by means of computer programs known in the art, such as Vector NTI 10 (Invitrogen Corp.). For pairwise alignment the matrix used is preferably BLOSUM62 with Gap opening penalty of 10.0 and Gap extension penalty of 0.1.

Suitably, the degree of identity with regard to an amino acid sequence is determined over at least 20 contiguous amino acids, preferably over at least 30 contiguous amino acids, preferably over at least 40 contiguous amino acids, preferably over at least 50 contiguous amino acids, preferably over at least 60 contiguous amino acids.

Suitably, the degree of identity with regard to an amino acid sequence may be determined over the whole sequence.

The sequences may also have deletions, insertions or substitutions of amino acid residues which produce a silent change and result in a functionally equivalent substance. Deliberate amino acid substitutions may be made on the basis of similarity in polarity, charge, solubility, hydrophobicity, hydrophilicity, and/or the amphipathic nature of the residues as long as the secondary binding activity of the substance is retained. For example, negatively charged amino acids include aspartic acid and glutamic acid; positively charged amino acids include lysine and arginine; and amino acids with uncharged polar head groups having similar hydrophilicity values include leucine, isoleucine, valine, glycine, alanine, asparagine, glutamine, serine, threonine, phenylalanine, and tyrosine.

Conservative substitutions may be made, for example according to the Table below. Amino acids in the same block in the second column and preferably in the same line in the third column may be substituted for each other:

| | | |
|---|---|---|
| ALIPHATIC | Non-polar | G A P |
| | | I L V |
| | Polar - uncharged | C S T M |
| | | N Q |
| | Polar - charged | D E |
| | | K R |
| AROMATIC | | H F W Y |

The present disclosure also encompasses homologous substitution (substitution and replacement are both used herein to mean the interchange of an existing amino acid residue, with an alternative residue) that may occur i.e. like-for-like substitution such as basic for basic, acidic for acidic, polar for polar etc. Non-homologous substitution may also occur i.e. from one class of residue to another or alternatively involving the inclusion of unnatural amino acids such as omithine (hereinafter referred to as Z), diaminobutyric acid ornithine (hereinafter referred to as B), norleucine ornithine (hereinafter referred to as O), pyriylalanine, thienylalanine, naphthylalanine and phenylglycine.

Replacements may also be made by unnatural amino acids.

Variant amino acid sequences may include suitable spacer groups that may be inserted between any two amino acid residues of the sequence including alkyl groups such as methyl, ethyl or propyl groups in addition to amino acid spacers such as glycine or β-alanine residues. A further form of variation, involves the presence of one or more amino acid residues in peptoid form, will be well understood by those skilled in the art. For the avoidance of doubt, "the peptoid form" is used to refer to variant amino acid residues wherein the α-carbon substituent group is on the residue's nitrogen atom rather than the α-carbon. Processes for preparing peptides in the peptoid form are known in the art, for example Simon RJ et al., PNAS (1992) 89(20), 9367-9371 and Horwell DC, Trends Biotechnol. (1995) 13(4), 132-134. Nucleotide sequences for use in the present invention or encoding a polypeptide having the specific properties defined herein may include within them synthetic or modified nucleotides. A number of different types of modification to oligonucleotides are known in the art. These include methylphosphonate and phosphorothioate backbones and/or the addition of acridine or polylysine chains at the 3' and/or 5' ends of the molecule. For the purposes of the present disclosure, it is to be understood that the nucleotide sequences described herein may be modified by any method available in the art. Such modifications may be carried out in order to enhance the *in vivo* activity or life span of nucleotide sequences.

The present disclosure also encompasses the use of nucleotide sequences that are complementary to the sequences discussed herein, or any derivative, fragment or derivative thereof. If the sequence is complementary to a fragment thereof then that sequence can be used as a probe to identify similar coding sequences in other organisms etc.

Polynucleotides which are not 100% homologous to the sequences of the present disclosure but fall within the scope of the invention can be obtained in a number of ways. Other variants of the sequences described herein may be obtained for example by probing DNA libraries made from a range of individuals, for example individuals from different populations. In addition, other viral/bacterial, or cellular homologues particularly cellular homologues found in mammalian cells (e.g. rat, mouse, bovine and primate cells), may be obtained and such homologues and fragments thereof in general will be capable of selectively hybridising to the sequences shown in the sequence listing herein. Such sequences may be obtained by probing cDNA libraries made from or genomic DNA libraries from other animal species, and probing such libraries with probes comprising all or part of any one of the sequences in the attached sequence listings under conditions of medium to high stringency. Similar considerations apply to obtaining species homologues and allelic variants of the polypeptide or nucleotide sequences of the invention.

Variants and strain/species homologues may also be obtained using degenerate PCR which will use primers designed to target sequences within the variants and homologues encoding conserved amino acid sequences within the sequences of the present disclosure. Conserved sequences can be predicted, for example, by aligning the amino acid sequences from several variants/homologues. Sequence alignments can be performed using computer software known in the art. For example the GCG Wisconsin PileUp program is widely used.

The primers used in degenerate PCR will contain one or more degenerate positions and will be used at stringency conditions lower than those used for cloning sequences with single sequence primers against known sequences.

Alternatively, such polynucleotides may be obtained by site directed mutagenesis of characterised sequences. This may be useful where for example silent codon sequence changes are required to optimise codon preferences for a particular host cell in which the polynucleotide sequences are being expressed. Other sequence changes may be desired in order to introduce restriction polypeptide recognition sites, or to alter the property or function of the polypeptides encoded by the polynucleotides.

Polynucleotides (nucleotide sequences) of the invention may be used to produce a primer, e.g. a PCR primer, a primer for an alternative amplification reaction, a probe e.g. labelled with a revealing label by conventional means using radioactive or nonradioactive labels, or the polynucleotides may be cloned into vectors. Such primers, probes and other fragments will be at least 15, preferably at least 20, for example at least 25, 30 or 40 nucleotides in length, and are also encompassed by the term polynucleotides of the invention as used herein.

Polynucleotides such as DNA polynucleotides and probes according to the invention may be produced recombinantly, synthetically, or by any means available to those of skill in the art. They may also be cloned by standard techniques.

In general, primers will be produced by synthetic means, involving a stepwise manufacture of the desired nucleic acid sequence one nucleotide at a time. Techniques for accomplishing this using automated techniques are readily available in the art.

Longer polynucleotides will generally be produced using recombinant means, for example using a PCR (polymerase chain reaction) cloning techniques. This will involve making a pair of primers (e.g. of about 15 to 30 nucleotides) flanking a region of the lipid targeting sequence which it is desired to clone, bringing the primers into contact with mRNA or cDNA obtained from an animal or human cell, performing a polymerase chain reaction under conditions which bring about amplification of the desired region, isolating the amplified fragment (e.g. by purifying the reaction mixture on an agarose gel) and recovering the amplified DNA. The primers may be designed to contain suitable restriction enzyme recognition sites so that the amplified DNA can be cloned into a suitable cloning vector.

HYBRIDISATION

The present disclosure also encompasses the use of sequences that are complementary to the sequences of the present disclosure or sequences that are capable of hybridising either to the sequences of the present disclosure or to sequences that are complementary thereto.

The term "hybridisation" as used herein shall include "the process by which a strand of nucleic acid joins with a complementary strand through base pairing" as well as the process of amplification as carried out in polymerase chain reaction (PCR) technologies.

The present invention also encompasses the use of nucleotide sequences that are capable of hybridising to the sequences that are complementary to the subject sequences discussed herein, or any derivative, fragment or derivative thereof.

The present disclosure also encompasses sequences that are complementary to sequences that are capable of hybridising to the nucleotide sequences discussed herein.

Hybridisation conditions are based on the melting temperature (Tm) of the nucleotide binding complex, as taught in Berger and Kimmel (1987, Guide to Molecular Cloning Techniques, Methods in Enzymology, Vol. 152, Academic Press, San Diego CA), and confer a defined "stringency" as explained below.

Maximum stringency typically occurs at about Tm-5°C (5°C below the Tm of the probe); high stringency at about 5°C to 10°C below Tm; intermediate stringency at about 10°C to 20°C below Tm; and low stringency at about 20°C to 25°C below Tm. As will be understood by those of skill in the art, a maximum stringency hybridisation can be used to identify or detect identical nucleotide sequences while an intermediate (or low) stringency hybridisation can be used to identify or detect similar or related polynucleotide sequences.

Preferably, the present disclosure encompasses the use of sequences that are complementary to sequences that are capable of hybridising under high stringency conditions or intermediate stringency conditions to nucleotide sequences encoding polypeptides having the specific properties as defined herein.

More preferably, the present disclosure encompasses the use of sequences that are complementary to sequences that are capable of hybridising under high stringency conditions (e.g. 65°C and 0.1xSSC {1xSSC = 0.15 M NaCl, 0.015 M Na-citrate pH 7.0}) to nucleotide sequences encoding polypeptides having the specific properties as defined herein.

The present disclosure also relates to the use of nucleotide sequences that can hybridise to the nucleotide sequences discussed herein (including complementary sequences of those discussed herein).

The present disclosure also relates to the use of nucleotide sequences that are complementary to sequences that can hybridise to the nucleotide sequences discussed herein (including complementary sequences of those discussed herein).

Also included within the scope of the present disclosure are the use of polynucleotide sequences that are capable of hybridising to the nucleotide sequences discussed herein under conditions of intermediate to maximal stringency.

In a preferred aspect, the present disclosure covers the use of nucleotide sequences that can hybridise to the nucleotide sequences discussed herein, or the complement thereof, under stringent conditions (e.g. 50°C and 0.2xSSC).

In a more preferred aspect, the present disclosure covers the use of nucleotide sequences that can hybridise to the nucleotide sequences discussed herein, or the complement thereof, under high stringency conditions (e.g. 65°C and 0.1xSSC).

EXPRESSION OF POLYPEPTIDES

A nucleotide sequence for use in the present invention or for encoding a polypeptide having the specific properties as defined herein can be incorporated into a recombinant replicable vector. The vector may be used to replicate and express the nucleotide sequence, in polypeptide form, in and/or from a compatible host cell. Expression may be controlled using control sequences which include promoters/enhancers and other expression regulation signals. Prokaryotic promoters and promoters functional in eukaryotic cells may be used. Tissue specific or stimuli specific promoters may be used. Chimeric promoters may also be used comprising sequence elements from two or more different promoters described above.

The polypeptide produced by a host recombinant cell by expression of the nucleotide sequence may be secreted or may be contained intracellularly depending on the sequence and/or the vector used. The coding sequences can be designed with signal sequences which direct secretion of the substance coding sequences through a particular prokaryotic or eukaryotic cell membrane.

## CONSTRUCTS

The term "construct" - which is synonymous with terms such as "conjugate", "cassette" and "hybrid" - includes a nucleotide sequence encoding a polypeptide having the specific properties as defined herein for use according to the present invention directly or indirectly attached to a promoter. An example of an indirect attachment is the provision of a suitable spacer group such as an intron sequence, such as the Sh1-intron or the ADH intron, intermediate the promoter and the nucleotide sequence of the present invention. The same is true for the term "fused" in relation to the present invention which includes direct or indirect attachment. In some cases, the terms do not cover the natural combination of the nucleotide sequence coding for the protein ordinarily associated with the wild type gene promoter and when they are both in their natural environment.
The construct may even contain or express a marker which allows for the selection of the genetic construct.
For some applications, preferably the construct comprises at least a nucleotide sequence of the present invention or a nucleotide sequence encoding a polypeptide having the specific properties as defined herein operably linked to a promoter.

## ORGANISM

The term "organism" in relation to the present invention includes any organism that could comprise a nucleotide sequence according to the present invention or a nucleotide sequence encoding for a polypeptide having the specific properties as defined herein and/or products obtained therefrom.
The term "transgenic organism" in relation to the present disclosure includes any organism that comprises a nucleotide sequence coding for a polypeptide having the specific properties as defined herein and/or the products obtained therefrom, and/or wherein a promoter can allow expression of the nucleotide sequence coding for a polypeptide having the specific properties as defined herein within the organism. Preferably the nucleotide sequence is incorporated in the genome of the organism.
The term "transgenic organism" does not cover native nucleotide coding sequences in their natural environment when they are under the control of their native promoter which is also in its natural environment.
Therefore, the transgenic organism of the present disclosure includes an organism comprising any one of, or combinations of, a nucleotide sequence coding for a polypeptide having the specific properties as defined herein, constructs as defined herein, vectors as defined herein, plasmids as defined herein, cells as defined herein, or the products thereof. For example the transgenic organism can also comprise a nucleotide sequence coding for a polypeptide having the specific properties as defined herein under the control of a promoter not associated with a sequence encoding a lipid acyltransferase in nature.

## TRANSFORMATION OF HOST CELLS/ORGANISM

The host organism can be a prokaryotic or a eukaryotic organism.
Examples of suitable prokaryotic hosts include bacteria such as *E. coli* and *Bacillus licheniformis,* preferably *B. licheniformis.*
Teachings on the transformation of prokaryotic hosts is well documented in the art, for example see Sambrook et al (Molecular Cloning: A Laboratory Manual, 2nd edition, 1989, Cold Spring Harbor Laboratory Press). If a prokaryotic host is used then the nucleotide sequence may need to be suitably modified before transformation - such as by removal of introns.
In another embodiment the transgenic organism can be a yeast.
Filamentous fungi cells may be transformed using various methods known in the art - such as a process involving protoplast formation and transformation of the protoplasts followed by regeneration of the cell wall in a manner known. The use of *Aspergillus* as a host microorganism is described in EP 0 238 023.
Another host organism can be a plant. A review of the general techniques used for transforming plants may be found in articles by Potrykus (Annu Rev Plant Physiol Plant Mol Biol [1991] 42: 205- 225) and Christou (Agro- Food-Industry Hi- Tech March/ April 1994 17- 27) . Further teachings on plant transformation may be found in EP- A- 0449375.
General teachings on the transformation of fungi, yeasts and plants are presented in following sections.

## TRANSFORMED FUNGUS

A host organism may be a fungus - such as a filamentous fungus. Examples of suitable such hosts include any member belonging to the genera Thermomyces, Acremonium, Aspergillus, Penicillium, Mucor, Neurospora, Trichoderma and the like.
Teachings on transforming filamentous fungi are reviewed in US-A-5741665 which states that standard techniques for transformation of filamentous fungi and culturing the fungi are well known in the art. An extensive review of techniques as applied to *N. crassa* is found, for example in Davis and de Serres, Methods Enzymol (1971) 17A: 79-143.

Further teachings on transforming filamentous fungi are reviewed in US-A-5674707.

In one aspect, the host organism can be of the genus *Aspergillus,* such as *Aspergillus niger.*

A transgenic *Aspergillus* according to the present invention can also be prepared by following, for example, the teachings of Turner G. 1994 (Vectors for genetic manipulation. In: Martinelli S.D., Kinghorn J.R.(Editors) Aspergillus: 50 years on. Progress in industrial microbiology vol 29. Elsevier Amsterdam 1994. pp. 641-666).

Gene expression in filamentous fungi has been reviewed in Punt et al. (2002) Trends Biotechnol 2002 May; 20 (5) : 200- 6, Archer & Peberdy Crit Rev Biotechnol (1997) 17 (4) : 273- 306.

TRANSFORMED YEAST

In another embodiment, the transgenic organism can be a yeast.

A review of the principles of heterologous gene expression in yeast are provided in, for example, Methods Mol Biol (1995), 49: 341- 54, and Curr Opin Biotechnol (1997) Oct; 8 (5) : 554- 60

In this regard, yeast- such as the species *Saccharomyces cerevisi or Pichia pastoris* (see FEMS Microbiol Rev (2000 24 (1) : 45- 66), may be used as a vehicle for heterologous gene expression.

A review of the principles of heterologous gene expression in *Saccharomyces cerevisiae* and secretion of gene products is given by E Hinchcliffe E Kenny (1993, "Yeast as a vehicle for the expression of heterologous genes", Yeasts, Vol 5, Anthony H Rose and J Stuart Harrison, eds, 2nd edition, Academic Press Ltd.).

For the transformation of yeast, several transformation protocols have been developed. For example, a transgenic Saccharomyces can be prepared by following the teachings of Hinnen et al., (1978, Proceedings of the National Academy of Sciences of the USA 75, 1929); Beggs, J D (1978, Nature, London, 275, 104); and Ito, H et al (1983, J Bacteriology 153, 163-168).

The transformed yeast cells may be selected using various selective markers - such as auxotrophic markers dominant antibiotic resistance markers.

A suitable yeast host organism can be selected from the biotechnologically relevant yeasts species such as, but not limited to, yeast species selected from *Pichia* spp., *Hansenula* spp., *Kluyveromyces*, *Yarrowinia* spp., *Saccharomyces* spp., including *S. cerevisiae,* or *Schizosaccharomyce* spp. including *Schizosaccharomyce pombe.*

A strain of the methylotrophic yeast species *Pichia pastoris* may be used as the host organism.

In one embodiment, the host organism may be a *Hansenula* species, such as *H. polymorpha* (as described in WO01/39544).

TRANSFORMED PLANTS/PLANT CELLS

A host organism suitable for the present disclosure may be a plant. A review of the general techniques may be found in articles by Potrykus (Annu Rev Plant Physiol Plant Mol Biol [1991] 42: 205- 225) and Christou (Agro- Food-Industry Hi- Tech March/ April 1994 17- 27), or in WO01/16308. The transgenic plant may produce enhanced levels of phytosterol esters and phytostanol esters, for example.

Therefore the present disclosure also relates to a method for the production of a transgenic plant with enhanced levels of phytosterol esters and phytostanol esters, comprising the steps of transforming a plant cell with a lipid acyltransferase as defined herein (in particular with an expression vector or construct comprising a lipid acyltransferase as defined herein), and growing a plant from the transformed plant cell.

SECRETION

Often, it is desirable for the polypeptide to be secreted from the expression host into the culture medium from where the enzyme may be more easily recovered. According to the present invention, the secretion leader sequence may be selected on the basis of the desired expression host. Hybrid signal sequences may also be used with the context of the present invention.

Typical examples of secretion leader sequences not associated with a nucleotide sequence encoding a lipid acyltransferase in nature are those originating from the fungal amyloglucosidase (AG) gene (*gla*A - both 18 and 24 amino acid versions e.g. from *Aspergillus*), the α-factor gene (yeasts e.g. *Saccharomyces, Kluyveromyces* and *Hansenula*) or the α-amylase gene (*Bacillus*).

DETECTION

A variety of protocols for detecting and measuring the expression of the amino acid sequence are known in the art. Examples include enzyme-linked immunosorbent assay (ELISA), radioimmunoassay (RIA) and fluorescent activated cell sorting (FACS).

A wide variety of labels and conjugation techniques are known by those skilled in the art and can be used in various nucleic and amino acid assays.

A number of companies such as Pharmacia Biotech (Piscataway, NJ), Promega (Madison, WI), and US Biochemical Corp (Cleveland, OH) supply commercial kits and protocols for these procedures.

Suitable reporter molecules or labels include those radionuclides, enzymes, fluorescent, chemiluminescent, or chromogenic agents as well as substrates, cofactors, inhibitors, magnetic particles and the like. Patents teaching the use of such labels include US- A- 3, 817, 837; US- A- 3, 850, 752; US- A- 3, 939, 350; US- A- 3, 996, 345; US- A- 4, 277, 437; US- A- 4, 275, 149 and US- A- 4, 366, 241.

Also, recombinant immunoglobulins may be produced as shown in US- A- 4, 816, 567.

FUSION PROTEINS

The lipid acyltransferase for use in the present invention may be produced as a fusion protein, for example to aid in extraction and purification thereof. Examples of fusion protein partners include glutathione-S-transferase (GST), 6xHis, GAL4 (DNA binding and/or transcriptional activation domains) and β-galactosidase. It may also be convenient to include a proteolytic cleavage site between the fusion protein partner and the protein sequence of interest to allow removal of fusion protein sequences. Preferably the fusion protein will not hinder the activity of the protein sequence.

Gene fusion expression systems in *E. coli* have been reviewed in Curr. Opin. Biotechnol. (1995) 6 (5) : 501- 6.

The amino acid sequence of a polypeptide having the specific properties as defined herein may be ligated to a non-native sequence to encode a fusion protein. For example, for screening of peptide libraries for agents capable of affecting the substance activity, it may be useful to encode a chimeric substance expressing a non-native epitope that is recognised by a commercially available antibody.

The invention will now be described, by way of example only, with reference to the following Figures and Examples.

Figure 1 shows the amino acid sequence of a mutant *Aeromonas salmonicida* mature lipid acyltransferase (GCAT) with a mutation of Asn80Asp (notably, amino acid 80 is in the mature sequence) (SEQ ID No. 15);

Figure 2 shows an amino acid sequence (SEQ ID No. 1) a lipid acyl transferase from *Aeromonas hydrophila* (ATCC #7965);

Figure 3 shows a pfam00657 consensus sequence from database version 6 (SEQ ID No. 2);

Figure 4 shows an amino acid sequence (SEQ ID No. 3) obtained from the organism *Aeromonas hydrophila* (P10480; GI:121051);

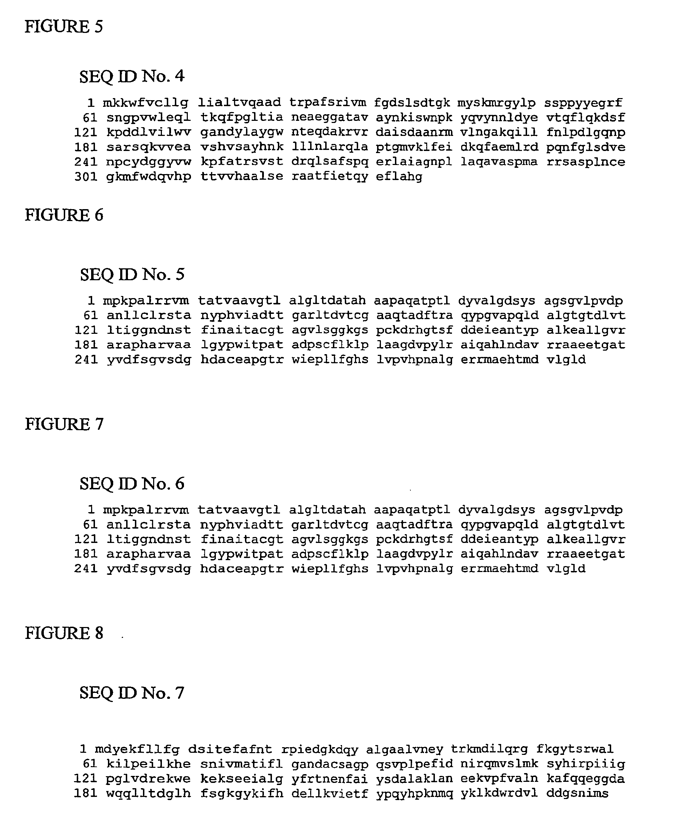

Figure 5 shows an amino acid sequence (SEQ ID No. 4) obtained from the organism *Aeromonas salmonicida* (AAG098404; GI:9964017);

Figure 6 shows an amino acid sequence (SEQ ID No. 5) obtained from the organism *Streptomyces coelicolor* A3 (2) (Genbank accession number NP_631558);

Figure 7 shows an amino acid sequence (SEQ ID No. 6) obtained from the organism *Streptomyces coelicolor* A3 (2) (Genbank accession number: CAC42140);

Figure 8 shows an amino acid sequence (SEQ ID No. 7) obtained from the organism *Saccharomyces cerevisiae* (Genbank accession number P41734);

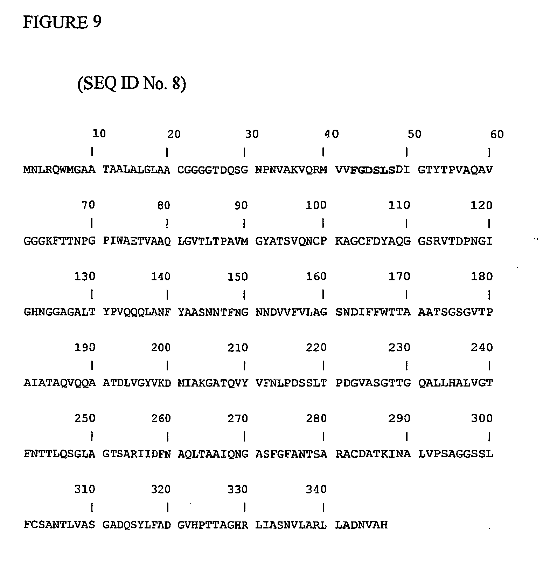

Figure 9 shows an amino acid sequence (SEQ ID No. 8) obtained from the organism *Ralstonia* (Genbank accession number: AL646052);

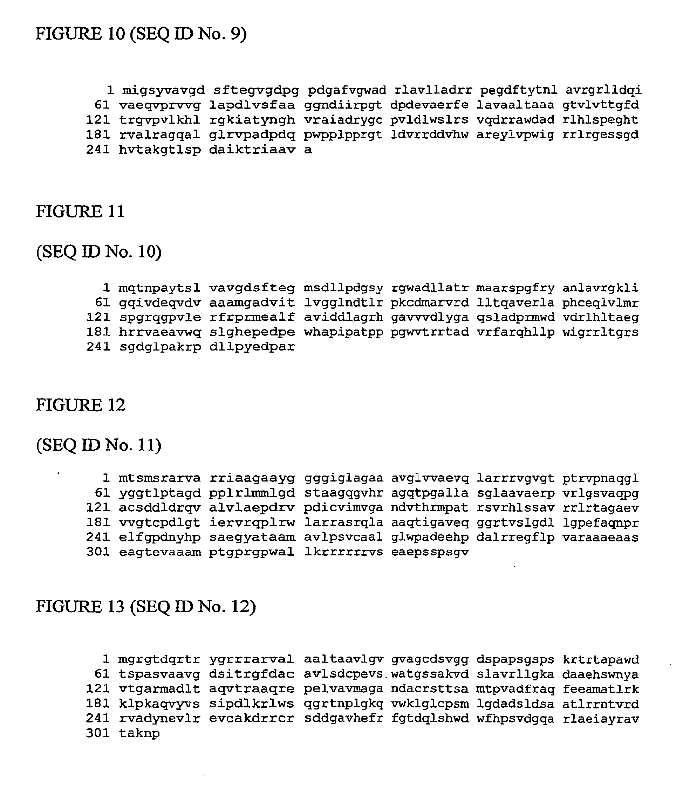

Figure 10 shows SEQ ID No. 9. Scoe1 NCBI protein accession code CAB39707.1 GI:4539178 conserved hypothetical protein [Streptomyces coelicolor A3(2)];

Figure 11 shows an amino acid shown as SEQ ID No. 10. Scoe2 NCBI protein accession code CAC01477.1 GI: 9716139 conserved hypothetical protein [Streptomyces coelicolor A3(2)];

Figure 12 shows an amino acid sequence (SEQ ID No. 11) Scoe4 NCBI protein accession code CAB89450.1 GI: 7672261 putative secreted protein. [Streptomyces coelicolor A3(2)];

Figure 13 shows an amino acid sequence (SEQ ID No. 12) Scoe5 NCBI protein accession code CAB62724.1 GI: 6562793 putative lipoprotein [Streptomyces coelicolor A3(2)];

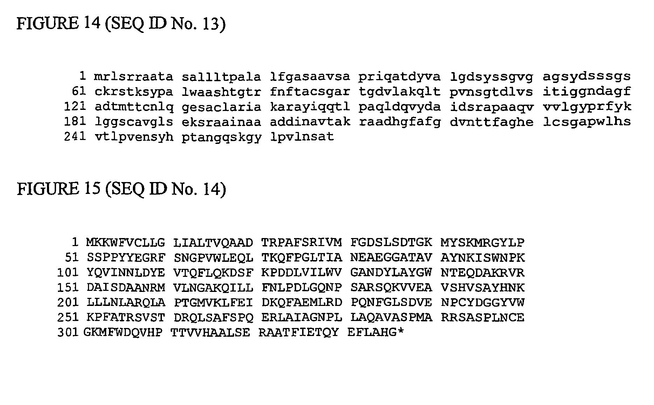

Figure 14 shows an amino acid sequence (SEQ ID No. 13) Srim1 NCBI protein accession code AAK84028.1 GI: 15082088 GDSL-lipase [Streptomyces rimosus];

Figure 15 shows an amino acid sequence (SEQ ID No. 14) of a lipid acyltransferase from *Aeromonas salmonicida* subsp. *Salmonicida* (ATCC#14174);

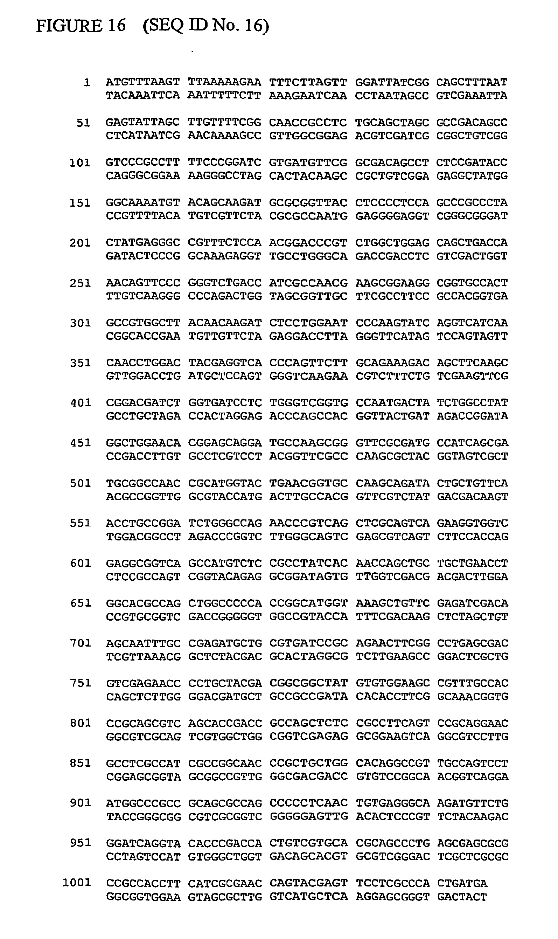

Figure 16 shows a nucleotide sequence (SEQ ID No. 16) encoding an enzyme from *Aeromonas hydrophila* including a xylanase signal peptide;

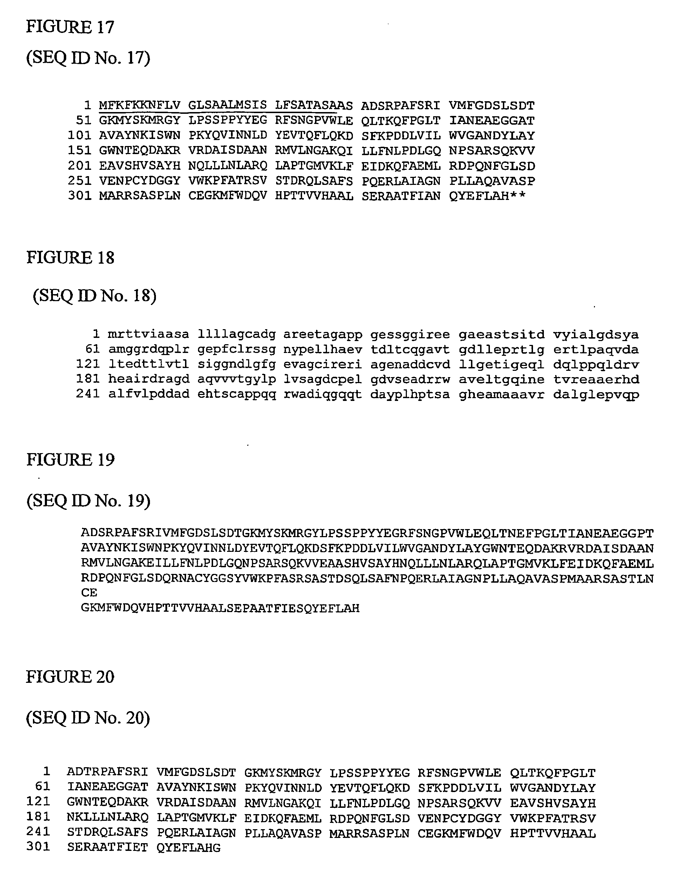

Figure 17 shows an amino acid sequence (SEQ ID No. 17) of the fusion construct used for mutagenesis of the *Aeromonas hydrophila* lipid acyltransferase gene. The underlined amino acids is a xylanase signal peptide;

Figure 18 shows a polypeptide of a lipid acyltransferase enzyme from *Corynebacterium efficiens* GDSx 300 amino acid_(SEQ ID No. 18);

Figure 19 shows an amino acid sequence (SEQ ID No. 19) obtained from the organism *Aeromonas hydrophila* (P10480; GI:121051) (notably, this is the mature sequence);

Figure 20 shows the amino acid sequence (SEQ ID No. 20) of an *Aeromonas salmonicida* mature lipid acyltransferase (GCAT) (notably, this is the mature sequence);

Figure 21 shows a nucleotide sequence (SEQ ID No. 21) from *Streptomyces thermosacchari;*

Figure 22 shows an amino acid sequence (SEQ ID No. 22) from *Streptomyces thermosacchari;*

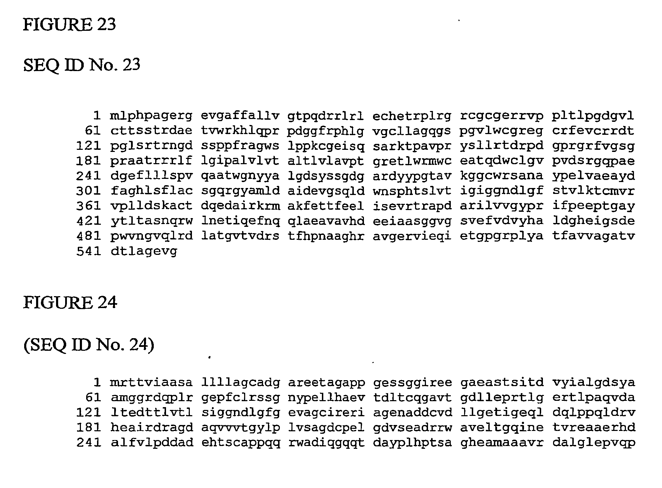

Figure 23 shows an amino acid sequence (SEQ ID No. 23) from *Thermobifida fusca*/*GDSx* 548 amino acid;

Figure 24 shows an amino acid sequence (SEQ ID No. 24) from *Corynebacterium efficiens*/*GDSx* 300 amino acid;

Figure 25 shows a nucleotide sequence (SEQ ID No. 25) from *Corynebacterium efficiens;*

Figure 26 shows an alignment of the L131 and homologues from S. *avermitilis* and *T*. *fusca* illustrates that the conservation of the GDSx motif (GDSY in L131 and *S*. *avermitilis* and *T*. *fusca),* the GANDY box, which is either GGNDA or GGNDL, and the HPT block (considered to be the conserved catalytic histidine). These three conserved blocks are highlighted;

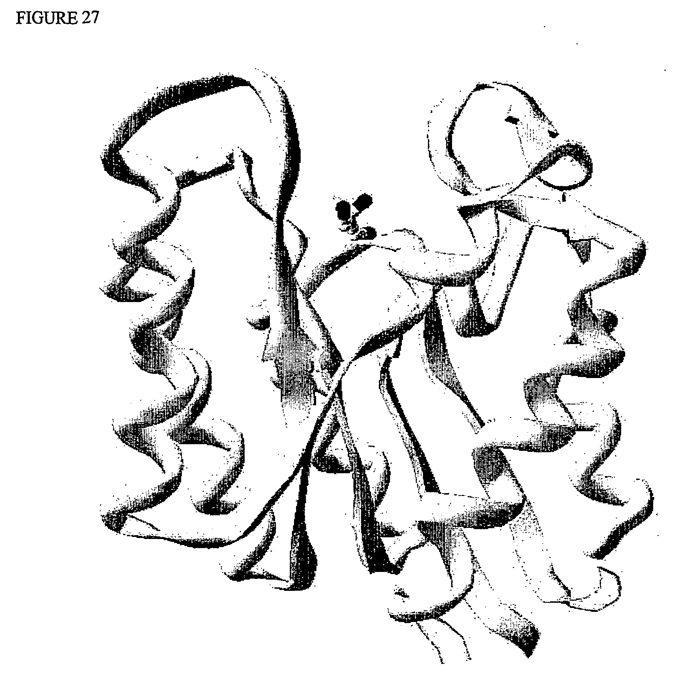

Figure 27 shows a ribbon representation of the 1IVN.PDB crystal structure which has glycerol in the active site. The Figure was made using the Deep View Swiss-PDB viewer;

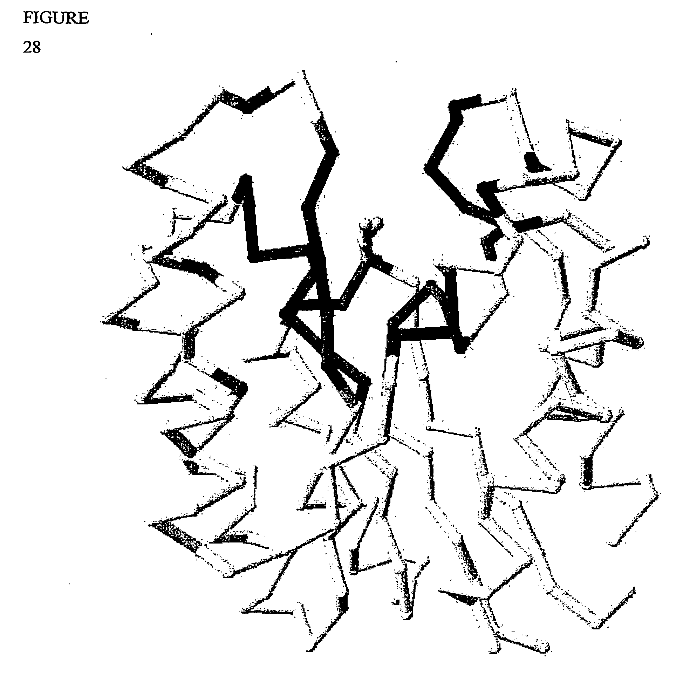

Figure 28 shows 1IVN.PDB Crystal Structure - Side View using Deep View Swiss-PDB viewer, with glycerol in active site - residues within 10Å of active site glycerol are coloured black;

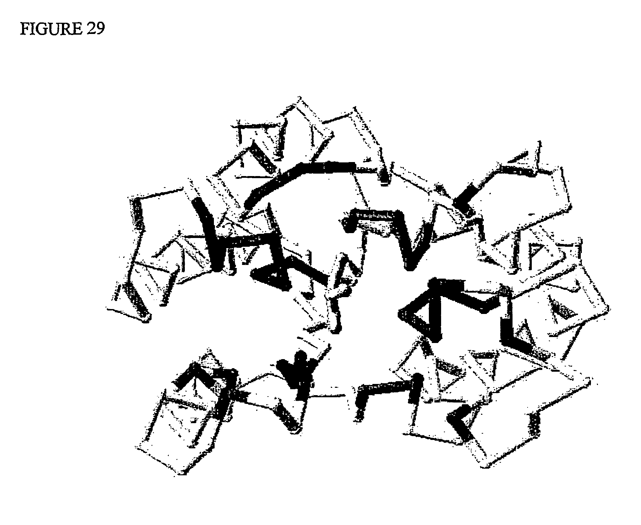

Figure 29 shows 1IVN.PDB Crystal Structure - Top View using Deep View Swiss-PDB viewer, with glycerol in active site - residues within 10Å of active site glycerol are coloured black;

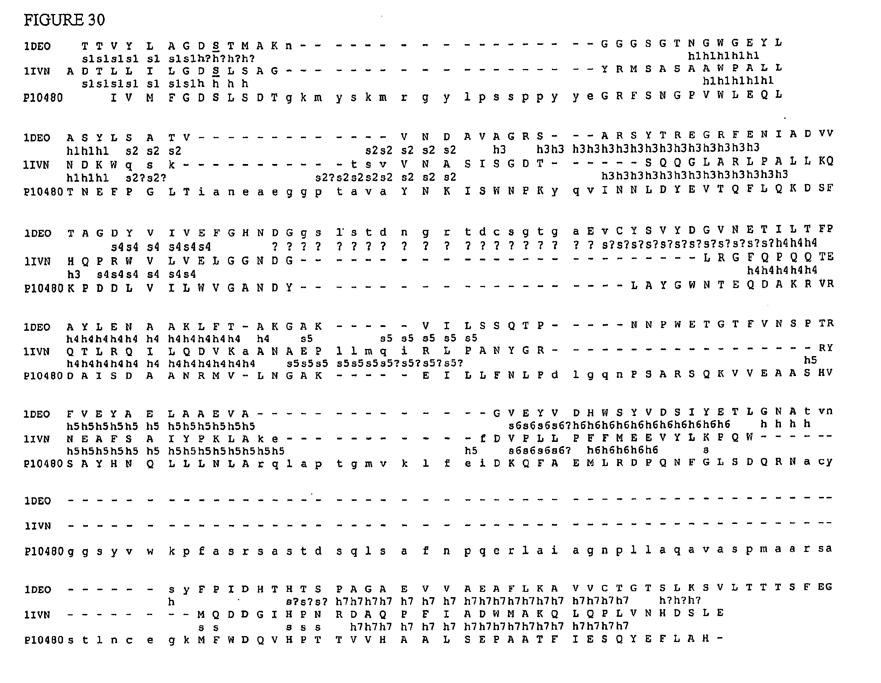

Figure 30 shows alignment 1;

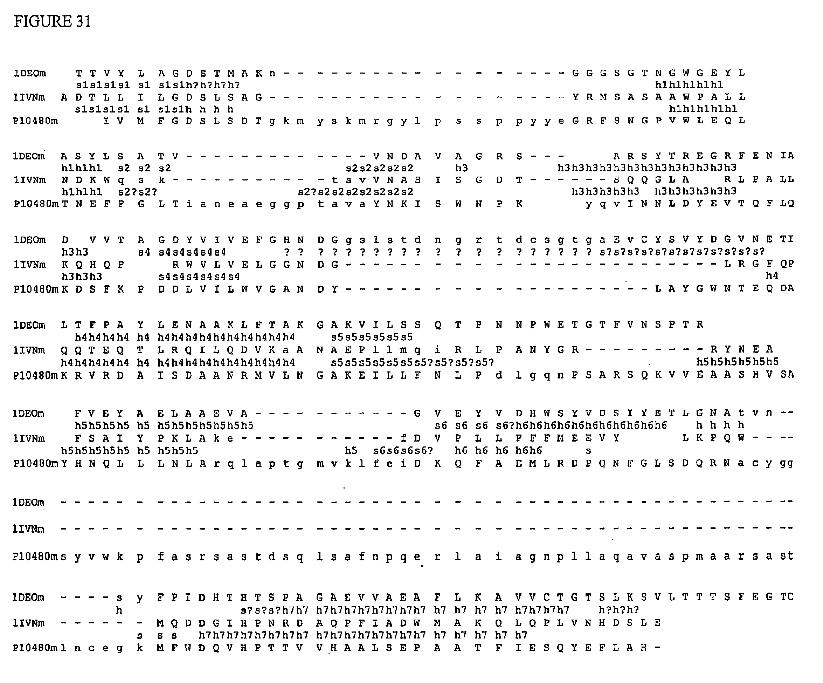

Figure 31 shows alignment 2;

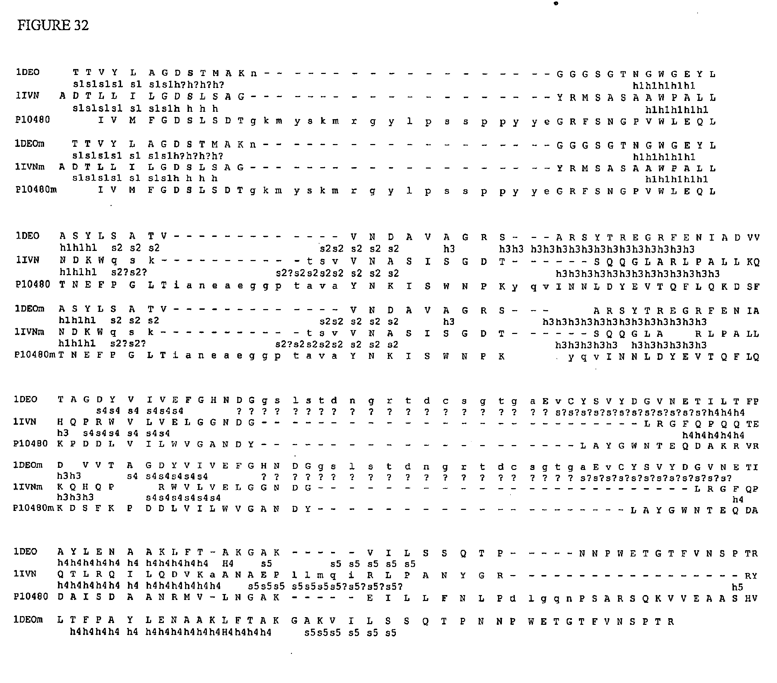

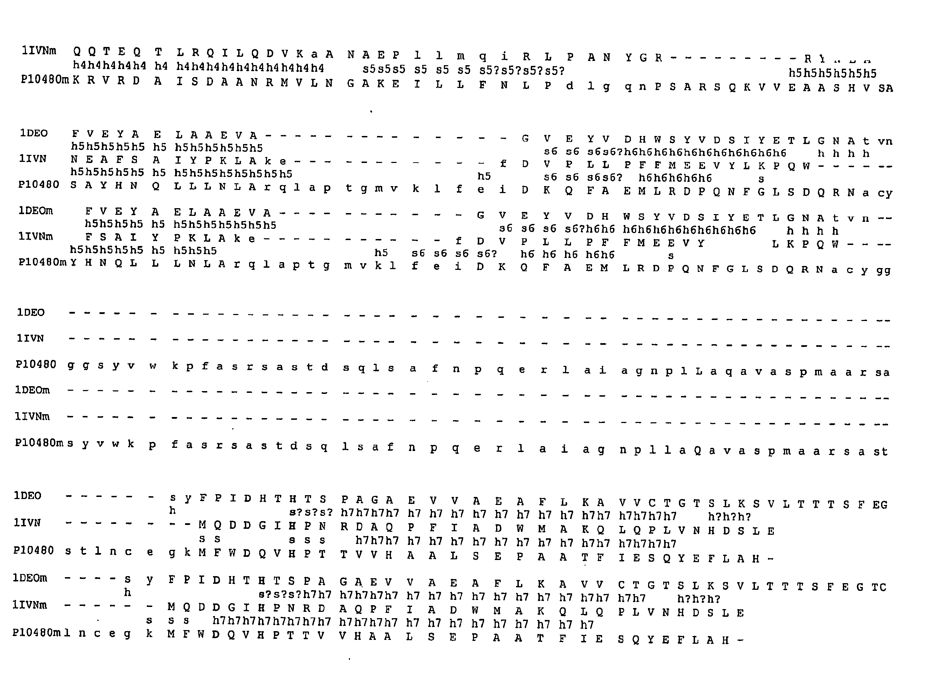

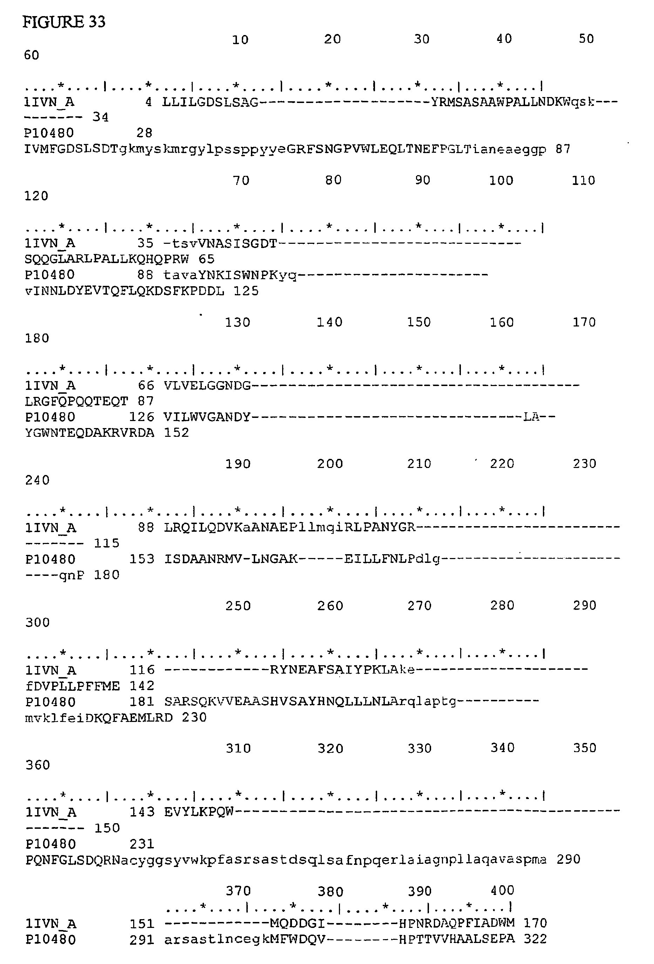

Figures 32 and 33 show an alignment of 1IVN to P10480 (P10480 is the database sequence for *A*. *hydrophila* enzyme), this alignment was obtained from the PFAM database and used in the model building process;

Figure 34 shows an alignment where P10480 is the database sequence for *Aeromonas hydrophila.* This sequence is used for the model construction and the site selection. Note that the full protein (SEQ ID No. 3) is depicted, the mature protein (equivalent to SEQ ID No. 19) starts at residue 19. A. sal is *Aeromonas salmonicida* (SEQ ID No. 4) GDSX lipase, A. hyd is *Aeromonas hydrophila* (SEQ ID No. 19) GDSX lipase. The consensus sequence contains a * at the position of a difference between the listed sequences;

Figure 35 shows a gene construct used in Example 1;

Figure 36 shows a codon optimised gene construct (no. 052907) used in Example 1; and

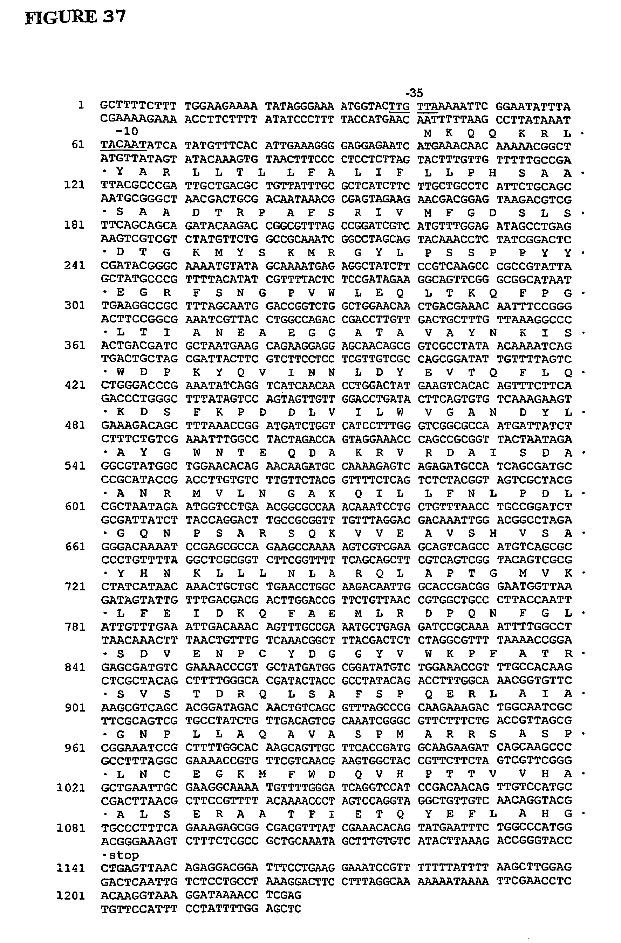

Figure 37 shows the sequence of the XhoI insert containing the LAT-KLM3' precursor gene, the -35 and -10 boxes are underlined;

Figure 38 shows BML780-KLM3'CAP50 (comprising SEQ ID No. 15 - upper colony) and BML780 (the empty host strain - lower colony) after 48h growth at 37°C on 1% tributyrin agar;

Figure 39 shows a nucleotide sequence from *Aeromonas salmonicida* (SEQ ID No. 26) including the signal sequence (preLAT - positions 1 to 87);

Figure 40 shows a nucleotide sequence (SEQ ID No. 27) encoding a lipid acyl transferase according to the present invention obtained from the organism *Aeromonas hydrophila;*

Figure 41 shows a nucleotide sequence (SEQ ID No. 28) encoding a lipid acyl transferase according to the present invention obtained from the organism *Aeromonas salmonicida;*

Figure 42 shows a nucleotide sequence (SEQ ID No. 29) encoding a lipid acyl transferase according to the present invention obtained from the organism *Ralstonia;*

Figure 43 shows a nucleotide sequence shown as SEQ ID No. 30 encoding NCBI protein accession code CAB39707.1 GI:4539178 conserved hypothetical protein [*Streptomyces coelicolor* A3(2)];

Figure 44 shows a nucleotide sequence shown as SEQ ID No. 31 encoding Scoe2 NCBI protein accession code CAC01477.1 GI:9716139 conserved hypothetical protein [*Streptomyces coelicolor* A3(2)];

Figure 45 shows a nucleotide sequence shown as SEQ ID No. 32 encoding Scoe4 NCBI protein accession code CAB89450.1 GI:7672261 putative secreted protein. [*Streptomyces coelicolor* A3(2)];

Figure 46 shows a nucleotide sequence shown as SEQ ID No. 33, encoding Scoe5 NCBI protein accession code CAB62724.1 GI:6562793 putative lipoprotein [*Streptomyces coelicolor* A3(2)]*;*

Figure 47 shows a nucleotide sequence shown as SEQ ID No. 34 encoding Srim1 NCBI protein accession code AAK84028.1 GI:15082088 GDSL-lipase [*Streptomyces rimosus*]*;*

Figure 48 shows a nucleotide sequence (SEQ ID No. 35) encoding a lipid acyltransferase from *Aeromonas hydrophila* (ATCC #7965);

Figure 49 shows a nucleotide sequence (SEQ ID No 36) encoding a lipid acyltransferase from *Aeromonas salmonicida* subsp. *Salmonicida* (ATCC#14174);

Figure 50 shows the amino acid sequence of a mutant *Aeromonas salmonicida* mature lipid acyltransferase (GCAT) with a mutation of Asn80Asp (notably, amino acid 80 is in the mature sequence) - shown herein as SEQ ID No. 15 - and after undergoing post-translational modification as SEQ ID No. 37. The post-translational modification of the mature polypeptide SEQ ID No. 15 comprises cleavage at position 235-A to (and including) position 273-R. 38 amino acids are therefore missing.- amino acid residues 235 and 236 of SEQ ID No. 37 are not covalently linked following post-translational modification. The two peptides formed are held together by one or more S-S bridges. Amino acid 236 in SEQ ID No. 37 corresponds with the amino acid residue number 274 in SEQ ID No. 15 shown herein;

Figure 51 shows a nucleotide sequence (SEQ ID No. 38) encoding a lipid acyl transferase according to the present invention obtained from the organism *Streptomyces coelicolor* A3(2) (Genbank accession number NC_003888.1: 8327480..8328367);

Figure 52 shows a nucleotide sequence (SEQ ID No. 39) encoding a lipid acyl transferase according to the present invention obtained from the organism *Streptomyces coelicolor* A3(2) (Genbank accession number AL939131.1: 265480..266367);

Figure 53 shows a nucleotide sequence (SEQ ID No. 40) encoding a lipid acyl transferase according to the present invention obtained from the organism *Saccharomyces cerevisiae* (Genbank accession number Z75034);

Figure 54 shows an amino acid sequence (SEQ ID No. 41) Scoe3 NCBI protein accession code CAB88833.1 GI: 7635996 putative secreted protein. [Streptomyces coelicolor A3(2)];

Figure 55 shows SEQ ID No 42 which is the amino acid sequence of a lipid acyltransferase from *Candida parapsilosis;*

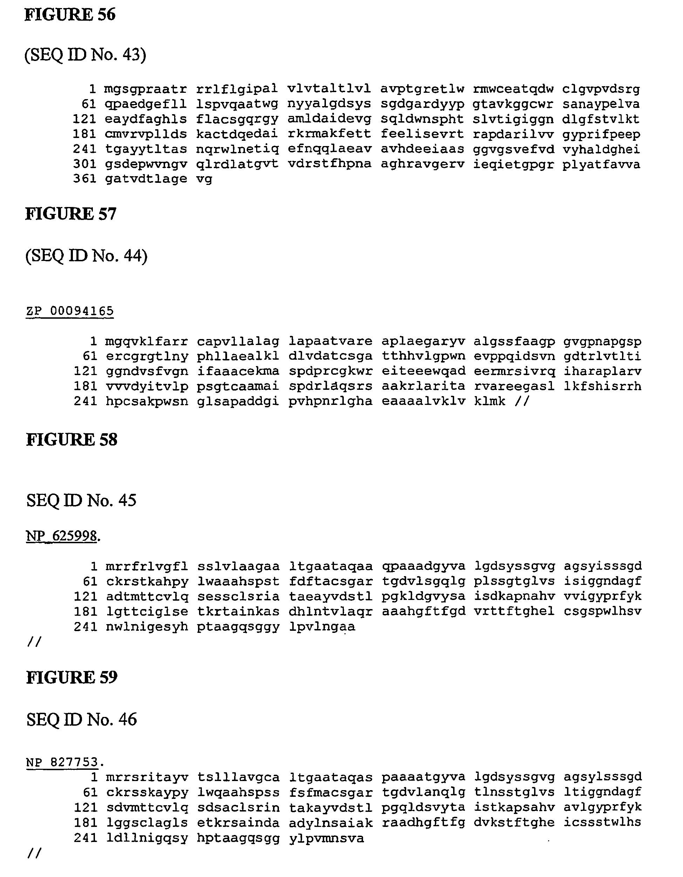

Figure 56 shows a polypeptide sequence of a lipid acyltransferase enzyme from *Thermobifida*_(SEQ ID No. 43);

Figure 57 shows a polypeptide of a lipid acyltransferase enzyme from *Novosphingobium aromaticivorans* 284 amino acid_(SEQ ID No. 44);

Figure 58 shows a polypeptide of a lipid acyltransferase enzyme from *Streptomyces coelicolor* 268 aa (SEQ ID No. 45);

Figure 59 shows a polypeptide of a lipid acyltransferase enzyme from *Streptomyces avermitilis* \ GDSx 269 amino acid (SEQ ID No. 46);

Figure 60 shows a nucleotide sequence (SEQ ID No. 47) from *Thermobifida fusca;*

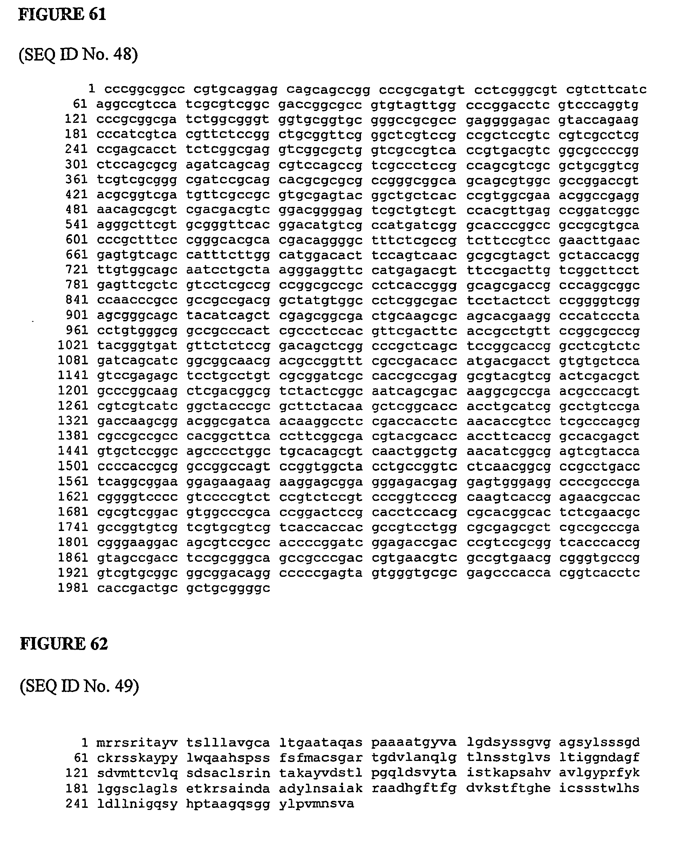

Figure 61 shows a nucleotide sequence (SEQ ID No. 48) from *S. coelicolor,*

Figure 62 shows an amino acid sequence (SEQ ID No. 49) from *S. avermitilis;*

Figure 63 shows a nucleotide sequence (SEQ ID No. 50) from *S. avermitilis;*

Figure 64 shows a nucleotide sequence (SEQ ID No. 51) from *Thermobifida fuscalGDSx;*

Figure 65 shows a nucleotide sequence shown as SEQ ID No. 52 encoding Scoe3 NCBI protein accession code CAB88833.1 GI:7635996 putative secreted protein. [*Streptomyces coelicolor* A3(2)]*;*

Figure 66 shows an amino acid sequence (SEQ ID No. 53) from *Thermobifida fuscal;*

Figure 67 shows a schematic of the reaction catalysed by a lipid acyltransferase with phosphatidylcholine and cholesterol as substrates

Figure 68 shows texture measurements of fine paste meat batter incubated at 40°C for 1 hr (see darker block) or at 2°C for 20 hrs (see lighter block) followed by heat treatment at 75°C for 1 hr; wherein #1) is a control without enzyme addition #2) is with enzyme KLM3' in a dosage of 0.84 TrU/g #3) is with enzyme KLM3' in a dosage of 4.2 TrU/g and #4) is with the phospholipase Lipomod™ in a dosage of 3 LEU/g.

Figure 69 shows the results of a TLC analysis (solvent 6) of lipids from meat samples. PE= phosphatidylethanolamine. PA= phosphatidic acid, PI= phosphatidylinositol, PC= phosphatidylcholine.

Figure 70 shows the results of a TLC analysis (solvent 5) of lipids from meat samples. CHL= cholesterol. FFA= free fatty acids;

Figure 71 shows a photograph of German liver sausages treated with a control emulsifier Citrem, the lipid acyltransferase of the present invention (KLM3') or a negative control (without either enzyme or emulsifier); and

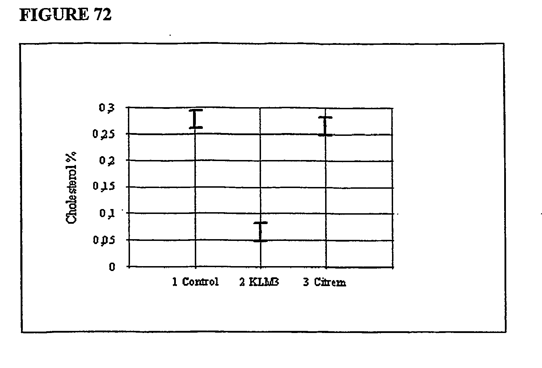

Figure 72 shows the free-cholesterol from HPTLC analysis in liver sausage; 1 = control; 2 = KLM3 - lipid acyltransferase (dosed as per example 3); and 3 = citrem, all % based on dry weight.

EXAMPLE 1

**Expression of a lipid acyltransferase (KLM3') in *Bacillus licheniformis***

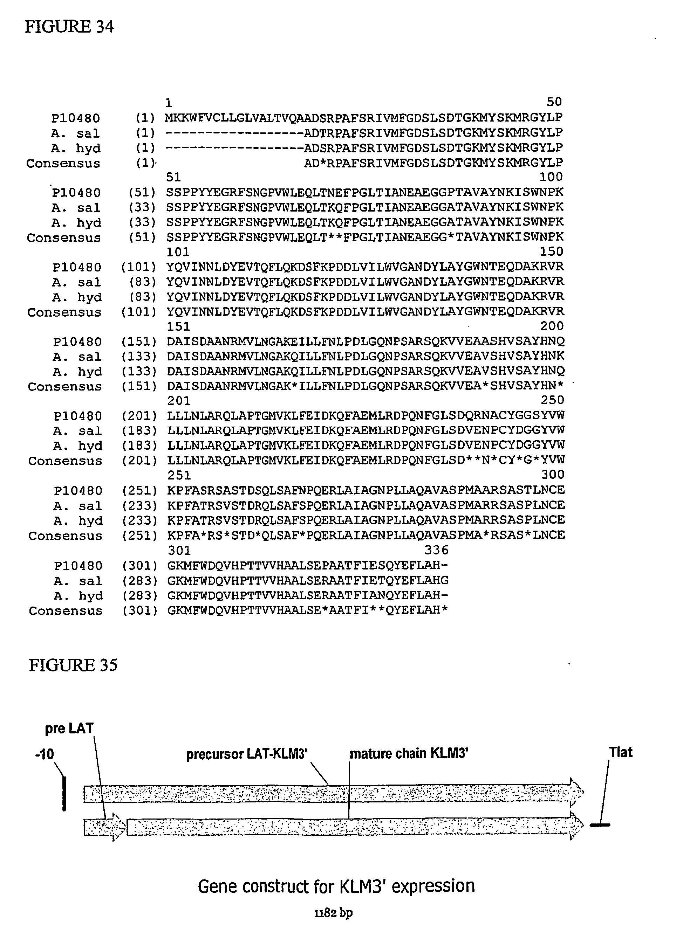

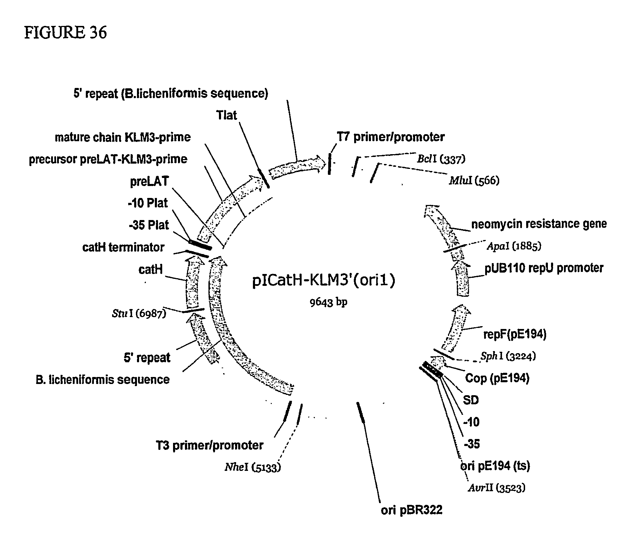

A nucleotide sequence (SEQ ID No. 49) encoding a lipid acyltransferase (SEQ. ID No. 15, hereinafter KLM3') was expressed in *Bacillus licheniformis* as a fusion protein with the signal peptide of *B. licheniformis* [alpha]- amylase (LAT) (see FIGS. 35 and 36) . For optimal expression in Bacillus, a codon optimized gene construct (no. 052907) was ordered at Geneart (Geneart AG, Regensburg, Germany) .

Construct no. 052907 contains an incomplete LAT promoter (only the -10 sequence) in front of the LAT-KLM3' precursor gene and the LAT transcription (Tlat) downstream of the LAT-KLM3' precursor gene (see FIGS 35 and 36). To create a *Xho*I fragment that contains the LAT-KLM3' precursor gene flanked by the complete LAT promoter at the 5' end and the LAT terminator at the 3' end, a PCR (polymerase chain reaction) amplification was performed with the primers Plat5XhoI_FW and EBS2XhoI_RV and gene construct 052907 as template.

Plat5XhoI_FW:

ccccgctcgaggcttttcttttggaagaaaatatagggaaaatggtacttgttaaaaattc
ggaatatttatacaatatcatatgtttcacattgaaagggg

EBS2XhoI_RV: tggaatctcgaggttttatcctttaccttgtctcc

PCR was performed on a thermocycler with Phusion High Fidelity DNA polymerase (Finnzymes OY, Espoo, Finland) according to the instructions of the manufacturer (annealing temperature of 55°C.).

The resulting PCR fragment was digested with restriction enzyme *Xho*I and ligated with T4 DNA ligase into *Xho*I digested pICatH according to the instructions of the supplier (Invitrogen, Carlsbad, Calif. USA).

The ligation mixture was transformed into *B. subtilis* strain SC6.1 as described in U.S. Patent Application US20020182734 (International Publication WO 02/14490) . The sequence of the *Xho*I insert containing the LAT- KLM3' precursor gene was confirmed by DNA sequencing (BaseClear, Leiden, The Netherlands) and one of the correct plasmid clones was designated pICatH- KLM3' (ori1) (Figure 53) . pICatH- KLM3' (ori1) was transformed into *B. licheniformis* strain BML780 (a derivative of BRA7 and BML612, see WO2005111203) at the permissive temperature (37°C.) .

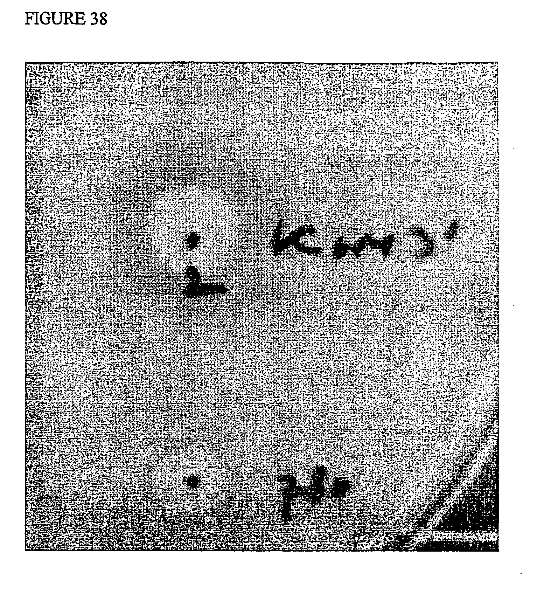

One neomycin resistant (neoR) and chloramphenicol resistant (CmR) transformant was selected and designated BML780 (pICatH- KLM3' (ori1) ) . The plasmid in BML780 (pICatH- KLM3' (ori1) ) was integrated into the catH region on the B. *licheniformis* genome by growing the strain at a non- permissive temperature (50 [deg.] C) in medium with 5 [mu] g/ml chloramphenicol. One CmR resistant clone was selected and designated BML780- pICatH- KLM3' (ori1) . BML780- pICatH- KLM3' (ori1) was grown again at the permissive temperature for several generations without antibiotics to loop- out vector sequences and then one neomycin sensitive (neoS), CmR clone was selected. In this clone, vector sequences of pICatH on the chromosome are excised (including the neomycin resistance gene) and only the catH-LATKLM3' cassette is left. Next, the catH- LATKLM3' cassette on the chromosome was amplified by growing the strain in/on media with increasing concentrations of chloramphenicol. After various rounds of amplification, one clone (resistant against 50 [mu] g/ml chloramphenicol) was selected and designated BML780- KLM3'CAP50. To verify KLM3'expression, BML780- KLM3'CAP50 and BML780 (the empty host strain) were grown for 48h at 37°C on a Heart Infusion (Bacto) agar plate with 1% tributyrin. A clearing zone, indicative for lipid acyltransferase activity, was clearly visible around the colony of BML780- KLM3'CAP50 but not around the host strain BML780 (see Figure 38) . This result shows that a substantial amount of KLM3' is expressed in *B. licheniformis* strain BML780- KLM3'CAP50 and that these KLM3' molecules are functional. The expressed KLM3' protein in a post- translationally clipped sequence- which after post-translational clipping has the amino acid sequence shown in SEQ ID No. 37.

EXAMPLE 2

**Use of a lipid acyltransferase (KLM3') to reduce the cholesterol content of (whilst maintaining or improving weight loss, texture and fat stability) of meat based food products (namely fine paste sausages).**

Enzymes tested:

- Lipid acyltransferase according to the present invention KLM3' having SEQ ID No. 37 (3158TrU/g).
- Lipomod™ 699L (a pancreatin phospholipase) from BioCatalysts, UK (10,000 Units/ml according to the supplied) - tested for comparative purposes.

RECIPE

**Table 1:** Formulation of fine paste meat batters

| | | | | |
|---|---|---|---|---|
| Recipe 1: Control without enzyme | | | | |
| | pork meat S II | | 22,50% | 337,5 |
| | beef meat R II | | 16,50% | 247,5 |
| | Neck fat pork | | 23,00% | 345,0 |
| | ice/ water | | 38,00% | 570,0 |
| | | | 100,00% | 1500,0 |
| | **ingredients** | **Lot Nr.** | | |
| 1 | *nitrite curing salt* | | 1,80% | 27,0 |
| 1 | *STPP* | | 0,10% | 1,5 |
| 2 | ascorbic acid | | 0,05% | 0,8 |
| 2 | dextrose | | 1,40% | 21,0 |
| 3 | 3% NaCl | | | 5 ml |
| Recipe 2: KLM3 (0,84 TrU) | | | | |
| | pork meat S II | | 22,50% | 337,5 |
| | beef meat R II | | 16,50% | 247,5 |
| | Neck fat pork | | 23,00% | 345,0 |
| | ice/ water | | 38,00% | 570,0 |
| | | | 100,00% | 1500,0 |
| | **ingredients** | **Lot Nr.** | | |
| 1 | *nitrite curing salt* | | 1,80% | 27,0 |
| 1 | *STPP* | | 0,10% | 1,5 |
| 2 | ascorbic acid | | 0,05% | 0,8 |
| 2 | dextrose | | 1,40% | 21,0 |
| 3 | KLM3 | | | 0,450 ml |
| 3 | 3% NaCl | | | 4,550 ml |
| Recipe 3: KLM3 (4,2 TrU) | | | | |
| | pork meat S II | | 22,50% | 337,5 |
| | beef meat R II | | 16,50% | 247,5 |
| | Neck fat pork | | 23,00% | 345,0 |
| | ice/ water | | 38,00% | 570,0 |

(continued)

| Recipe 3: KLM3 (4,2 TrU) | | | | |
|---|---|---|---|---|
| | | | 100,00% | 1500,0 |
| | **ingredients** | **Lot Nr.** | | |
| *1* | *nitrite curing salt* | | 1,80% | 27,0 |
| 1 | *STPP* | | 0,10% | 1,5 |
| 2 | ascorbic acid | | 0,05% | 0,8 |
| 2 | dextrose | | 1,40% | 21,0 |
| 3 | KLM3 | | | 1,995 ml |
| 3 | 3% NaCl | | | 3,005 ml |
| Recipe 4: Lipomod (3 LEU/g) | | | | |
| | pork meat S II | | 22,50% | 337,5 |
| | beef meat R II | | 16,50% | 247,5 |
| | Neck fat pork | | 23,00% | 345,0 |
| | ice/ water | | 38,00% | 570,0 |
| | | | 100,00% | 1500,0 |
| | **ingredients** | **Lot Nr.** | | |
| 1 | *nitrite curing salt* | | 1,80% | 27,0 |
| 1 | *STPP* | | 0,10% | 1,5 |
| 2 | ascorbic acid | | 0,05% | 0,8 |
| 2 | dextrose | | 1,40% | 21,0 |
| 3 | Lipomod | | | 0,450 ml |
| 3 | 3% NaCl | | | 4,550 ml |

METHODS

1. Grind meat separately through 3mm plate (MADO MEW 512 D) - mixture, cooling at 2°C
2. Dissolve the enzyme (either KLM3' (dosed at either 0.84 TrU/g meat matter or 4.2 TrU/g meat batter) or Lipomod™ (dosed at 3 LEU/g meat matter)) in 100ml 3% salt water
3. Place meat with curing salt and phosphate in the Stephan cutter (UMC 5), add 1/3 of ice/water and start cutting for 15 sec at 600 U/min and 15 sec at 1500 U/min
4. Add 1/3 of ice/water, the 3% NaCl solution with enzyme (or without enzyme in the case of the control) and the dry blend of all other ingredients, continue cutting for 15 sec at 600 U/min - 15 sec at 1500 U/min - until 5°C at 3000 U/min
5. Add fat/fat emulsion, and the remaining ice/water - 15 sec at 600 U/min and 15 sec at 1500 U/min
6. Scrape the bowl - apply vacuum (80%) - continue chopping for 15 sec at 600 U/min and 15 sec at 1500 U/min - until 12°C at 3000 U/min
7. Temperature at the end of the process 12.5°C.
8. Stuff plastic cups with the meat batter (in total 6 samples X about 220g) and seal them with plastic foil
9. The samples were either a) incubated overnight (i.e. 20h) at 2°C or b) incubated at 40°C for 1 h.
10. After storage, the samples were cooked for 1 h at 75°C in the steamer - to deactivate the enzyme.
11. After cooking (99% HR-75°C to reach 70°C core temperature), store the meat samples in the fridge ~5°C.
12. After overnight cooling, weigh out the cooked meat after drying with absorbent paper.
13. Texture measurement
14. Vacuum pack the samples for 1-week storage test (at ~2°C) and weigh out (storage loss).

Weight loss

Weight loss on standardized meat samples was recorded as follows:

$$\%\text{weight loss} = (\text{g sample before heat treatment} - \text{g sample after heat treatment}) / \text{g}$$

sample before heat treatment

Texture measurement

Instrumental texture measurements were performed using a texture analyzer (TAXT). A penetration test was applied using Ø25 probe positioned 15mm in the meat sample at a speed of 0.5 mm/s and 5g as a trigger force. Three replicates of each batch were measured.

TLC analysis

Materials:

Standards for TLC analysis.
St16.: 0.5% Soy Lecithin Mix Standard no. SLM45 from SpectraLipids, Germany.
St 17: 0.1% Cholesterol, Sigma C3292; 0.1% Oleic acid, Sigma 01008; 0.1% Cholesterol ester
Cholesterol stearate (Sigma C3549)

Lipid extraction:

Meat sample was frozen and lyophilized. The dry test sample was ground in a coffee mill.
0.5g dry meat powder was extracted with chloroform:methanol 2:1 for 30 minutes. The organic phase was isolated and analysed by HPTLC.

HPTLC

HPTLC was used to measure the content of cholesterol (CHL) and phospholipids in the meat samples.
Applicator: CAMAG applicator AST4.
HPTLC plate: 20 x 10cm (Merck no. 1.05641)
The plate was activated before use by drying in an oven at 160°C for 20-30 minutes.
Application: 6.0μl of extracted lipids dissolved in $CHCl_3$:methanol (2:1) were applied to the HPTLC plate using AST4 applicator.
0.1, 0.3, 0.5, 0.8, 1.5μl of a standard solution containing standard components in known concentrations were also applied to the HPTLC plate.
Running buffer 5: Hexane: MTBE (70:30).
Running buffer 6: Chloroform:1-propanol:Methylacetate:Methanol: 0.25% KCl in water 25:25:25:10:9.
Elution: The plate was eluted 7cm using an Automatic Developing Chamber ADC2 from Camag
Elution length: 7cm
Developing fluid: 6% Cupriacetate in 16% $H_3PO_4$
After elution, the plate was dried in an oven at 160°C for 10 minutes, cooled and immersed in the developing fluid (10 sec) and then dried additionally for 6 minutes at 160°C. The plate was evaluated visually and the density was scanned (Camag TLC scanner).

RESULTS:

**Weight Loss**

The table below shows weight loss of fine batter paste incubated at 40°C for 1h followed by heat treatment at 75°C for 1 hr.

| Sample | Weight loss (%) at 40°C |
|---|---|
| Control | 11% |
| KLM3' 0.84 TrU/g | 10.3% |
| Lipomod™ 3LEU/g | 11% |

The table below shows weight loss of fine paste meat batter after 1 week's storage at 2°C incubated at 40°C for 1 hr or 2°C for 20 hrs followed by heat treatment at 75°C for 1 hr.

| Sample | Weight loss (40°C/ 1 hour) | Weight loss (2°C/ 20 hours) |
|---|---|---|
| Control | 14.4% | 12.9% |
| KLM3' 0.84 TrU/g | 13.4% | 12.7% |

The weight losses of the heat-treated fine paste meat batters showed that samples treated with KLM3' had the lowest weight loss as compared to the control (no enzyme) and the Lipomod™ (phospholipase) sample.

From the results of the 1-week storage test, it was observed that the samples treated with KLM3' followed by incubation at 2°C resulted in the lowest weight loss after storage.

**Texture**

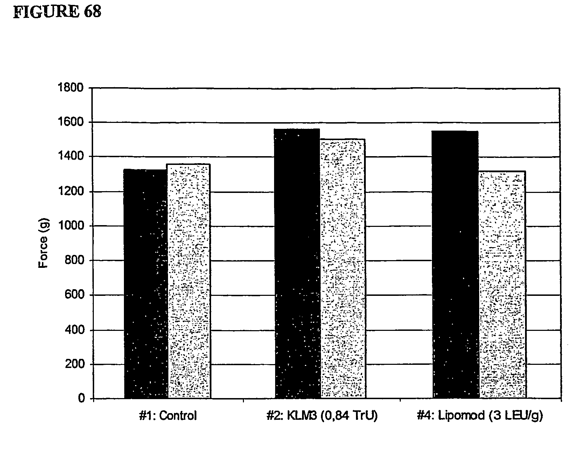

The results from the texture measurements are presented in Figure 68. The fine paste meat batter treated with KLM3' had the firmest (most improved) texture compared to the control and Lipomod™-treated samples.

**Appearance and Greasiness (fat stability)**

The table below shows the results of an assessment of the appearance and greasiness of the meat samples

| Sample Enzyme Units/g | Reaction temperature °C | Comments |
|---|---|---|
| Control | 5 | Extremely greasy |
| | 40 | Not greasy |
| 4.2 TrU/g KLM3' | 5 | Not greasy |
| | 40 | Not greasy |
| 3 Lipomod™ | 5 | Not greasy |
| | 40 | Very greasy |

<u>HPTLC analysis</u>

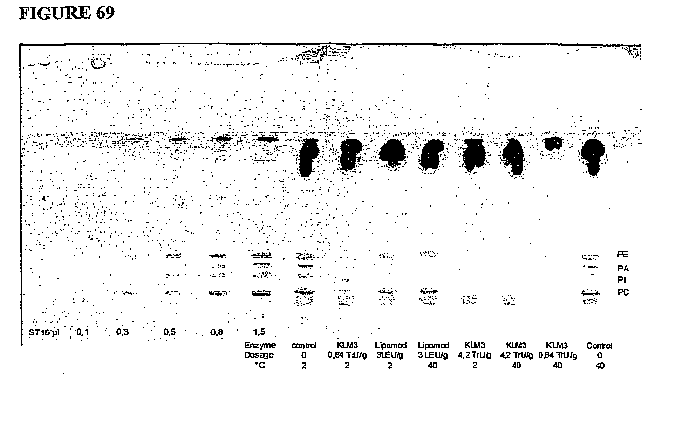

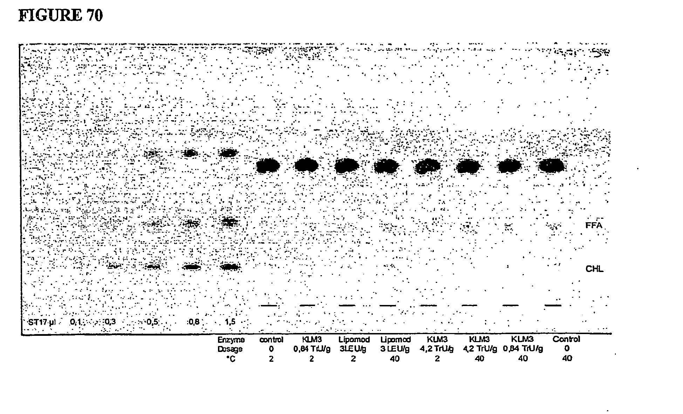

The TLC chromatograms from the analysis are shown in Figures 69 and 70.

Based on the standard mixtures, calibration curves for lipid components were constructed and lipid components calculated with results shown in the table below.

Table: TLC analysis of lipid components from meat samples. % based on dry weight.

| Sample no. | Enzyme | Dosage Units/g | Temp. °C | % CHL | % FFA | % PC | % PA | % PE | % PI | Sum % Phospholip |
|---|---|---|---|---|---|---|---|---|---|---|
| 1 | control | 0 | 5 | 0.0065 | 0.015 | 0.380 | 0.054 | 0.240 | 0.155 | 0.830 |
| 2 | KLM3' | 0.84* | 5 | 0.0042 | 0.028 | 0.033 | 0.019 | 0.017 | 0.019 | 0.087 |
| 3 | Lipomod™ | 3# | 5 | 0.0057 | 0.016 | 0.291 | 0.024 | 0.131 | 0.084 | 0.528 |

(continued)

| Sample no. | Enzyme | Dosage Units/g | Temp. °C | % CHL | % FFA | % PC | % PA | % PE | % PI | Sum % Phospholip |
|---|---|---|---|---|---|---|---|---|---|---|
| 4 | Lipomod™ | 3# | 40 | 0.0062 | 0.018 | 0.344 | 0.022 | 0.156 | 0.094 | 0.615 |
| 5 | KLM3' | 4.2* | 5 | 0.0031 | 0.029 | 0.015 | 0.021 | 0.007 | 0.011 | 0.054 |
| 6 | KLM3' | 4.2* | 40 | 0.0031 | 0.031 | 0.016 | 0.019 | 0.003 | 0.008 | 0.046 |
| 7 | KLM3' | 0.84* | 40 | 0.0032 | 0.020 | 0.000 | 0.000 | 0.005 | 0.000 | 0.005 |
| 8 | Control | 0 | 40 | 0.0056 | 0.015 | 0.401 | 0.054 | 0.214 | 0.095 | 0.764 |

*TrU/g
# LEU/g

The results from figures 69 and 70 and table above confirm activity of KLM3' and Lipomod™ in the meat sample. The activity of KLM3' on phospholipids causes degradation of phospholipids to lysophospholipid. The results also confirm a reduction in free cholesterol caused by the transferase reaction catalysed by KLM3'. Lipomod™, however, did not reduce the cholesterol level significantly. KLM3' did not only catalyse a transferase reaction, because the amount of free fatty acids also increased in the meat samples which indicate a hydrolytic reaction.

The enzyme reactions were conducted at both 5 and 40°C and the results confirmed the activity of KLM3' at 5°C, which for some applications is of interest because it is easier to control microbial growth in meat products at low temperature.

SUMMARY

From the results obtained in this experiment, positive effects on weight loss and texture were observed in the fine paste meat samples treated with KLM3' compared to the control.

Analysis of phospholipid degradation by enzyme treatment revealed an extremely high activity of KLM3', which was not observed with Lipomod™ to the same extent.

The lipid acyltransferase significantly reduced cholesterol in the meat product compared with the control and the Lipomod™ treated sample.

EXAMPLE 3

**Use of a lipid acyltransferase (KLM3') to improve the taste and/or texture (including mouthfeel and/or spreadability) of liver sausage**

Liver sausages are generally produced using an emulsifier in order to reduce the risk of fat separation during thermal processing.

KLM3' emulsifying effect will be tested in this meat application and compared to an emulsifier, Citrem™ N 12 which is conventionally used in liver sausages.

The liver sausage is based on a recipe containing a low amount of liver and high content of fat/water, which stresses the liver protein matrix emulsifying capacity.

MATERIAL

- Citrem™ N 12 veg (Danisco A/S, Denmark)
- A lipid acyltransferase (KLM3') according to the present invention having SEQ ID No. 37

Meat mixture

| | Content meat mixture | |
|---|---|---|
| | (%) | kg |
| Pork liver | 15 | 1,2 |
| Pork skin | 15 | 1,2 |
| Back fat | 20 | 1,6 |
| Water hot/Soup | 50 | 4 |
| Total volume | 100 | 8 |

RECIPE:

| Recipe 1 | ingredients | | |
|---|---|---|---|
| | nitrite curing salt | 1,80% | 144,0g |
| | spices liver sausage | 0,60% | 48,0g |
| | Carmin | 0,05% | 4,0g |
| | Dextrose | 1,00% | 80,0g |
| | ascorbic acid | 0,05% | 4,0g |
| | Control | 0,00% | 0,0g |
| **Recipe 2** | **ingredients** | | |
| | nitrite curing salt | 1,80% | 144,0g |
| | spices liver sausage | 0,60% | 48,0g |
| | Carmin | 0,05% | 4,0g |
| | Dextrose | 0,50% | 40,0g |
| | ascorbic acid | 0,05% | 4,0g |
| | Citrem N 12 veg | 0,50% | 40,0g |
| **Recipe 3** | **ingredients** | | |
| | nitrite curing salt | 1,80% | 144,0g |
| | spices liver sausage | 0,60% | 48,0g |
| | Carmin | 0,05% | 4,0g |
| | Dextrose | 1,00% | 80,0g |
| | ascorbic acid | 0,05% | 4,0g |
| | KLM3 diluted in 3% NaCl | 0,84 TrU/g | 2,7 ml |

METHOD

1. Precook the meat and fat in hot water 75°C for 45 min.
2. Place ½ of hot water (65°C) in the bowl chopper with the meat and fat.
3. Spray the emulsifier or enzyme on and start chopping highest speed and turn on the steam to obtain a slurry (Smooth and homogeneous) approximately 30 rounds (approx. 10mins)
4. Chop until 65°C and a smooth paste is reached.
5. Turn of the steam and the chopper and scrape the lid and continue chopping.
6. Add the rest of the dry ingredients
7. When the temperature is below 50°C, add the liver and the rest of the ingredients.
8. Stop chopping when 40°C is reached
9. Stuff the meat mix in casing F-plus Kal. 60
10. Cook the casings, tins and cups for 1 h with a temp. of 76°C

RESULTS

**Viscosity in bowl chopper**

The viscosity of the meat batter added KLM3' was higher compared with either the control (without enzyme) or the positive control (with the conventional emulsifier Citrem).

**Final products**

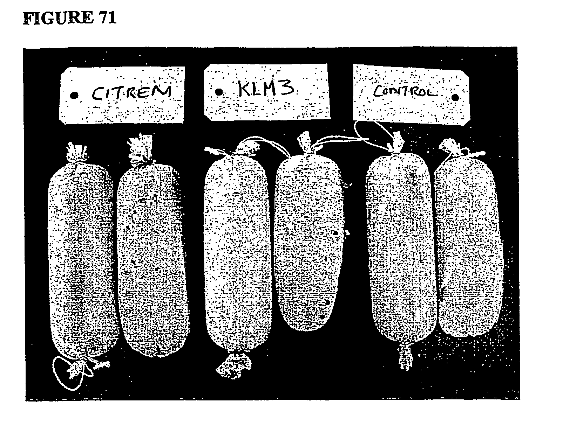

From the visual inspection of the liver sausages presented in figure 71 the liver sausage treated with KLM3' had much less fat extraction compared to the control and liver sausage treated with Citrem™.
Also the colour of the liver sausages treated with KLM3' was much lighter (better) compared to the control and the liver sausage with Citrem™.
The mouthfeel of the liver sausage treated with KLM3' was better than the control.
Also the spreadability of liver sausage treated with KLM3' was much better compared with the control.

**Cholesterol Levels**

Cholesterol analysis in liver sausage Example 3 gave the following results, HPTLC analysis of cholesterol in lever sausage samples. % based on dry weight:

| | | %Cholesterol | %Cholesterol reduction |
|---|---|---|---|
| 1 | Control | 0,277 | 0 |
| 2 | KLM3' | 0,067 | 76 |
| 3 | Citrem | 0,264 | 5 |

Statistical analysis of the results shows no significant differences between control and Citrem.

SUMMARY

The use of the lipid acyltransferase resulted in improved characteristics, such as reduced fat extraction and increased spreadability in the liver sausage.

**Claims**

1. A method for reducing the amount of cholesterol and/or improving the texture and/or reducing weight loss and/or increasing the fat stability of a meat based food product comprising:

   a) contacting meat with a lipid acyltransferase;
   b) incubating the meat contacted with the lipid acyltransferase at a temperature between about 1°C to about 9°C or at a temperature between about 60°C to about 70°C;
   c) producing a food product from the meat;

   wherein step b) is conducted before, during or after step c).

2. A method according to claim 1 wherein meat contacted with the lipid acyltransferase is incubated for between about 1 hour to 24 hours.

3. A method according to claim 1 or claim 2 wherein the meat contacted with the lipid acyltransferase is incubated at a temperature between about 1°C to about 9°C, for example between about 1°C to about 6°C.

4. A method according to claim 3 wherein the meat contacted with the lipid acyltransferase is incubated for between about 10 to about 24 hours.

5. A method according to claim 1 or claim 2 wherein the meat contacted with the lipid acyltransferase is incubated at a temperature between about 60°C to about 70°C, for example between about 60°C to about 68°C.

6. A method according to claim 5 wherein the meat contacted with the lipid acyltransferase is incubated for between about 30 minutes to about 2 hours, preferably for between about 1 hours to about 1.5 hours.

7. A method according to any one of the preceding claims wherein the meat contacted with the lipid acyltransferase and/or the food product derived therefrom is further heated to a temperature and for a sufficient time to inactivate the enzyme, such as heating to a temperature in the range of about 80°C to about 140°C.

8. A method according to any one of the preceding claims wherein the meat to be contacted with the lipid acyltransferase is minced meat.

9. A method according to any one of the preceding claims wherein the food product is an emulsified meat product.

10. A method according to any one of the preceding claims wherein the food product comprises at least 15% meat.

11. A method according to any one of claims 1-10 wherein the lipid acyltransferase is characterised as an enzyme which possesses acyl transferase activity and which comprises the amino acid sequence motif GDSX, wherein X is one or more of the following amino acid residues L, A, V, I, F, Y, H, Q, T, N, M or S.

12. A method according to any one of claims 1-10 wherein said lipid acyltransferase when tested using the "Protocol for the determination of % transferase activity" has a transferase activity in the meat based food product of at least 15%, preferably at least 20%, preferably at least 30%, preferably at least 40%.

13. A method to any one of claims 1-10 wherein said lipid acyltransferase is a polypeptide having lipid acyltransferase activity which polypeptide is obtained by expression of any one of the nucleotide sequences shown as SEQ ID No. 21, SEQ ID No. 47, SEQ ID No. 25, SEQ ID No. 48, SEQ ID No. 50, SEQ ID No. 51, SEQ ID No. 26, SEQ ID No. 27, SEQ ID No. 28, SEQ ID No. 38, SEQ ID No. 39, SEQ ID No. 40, SEQ ID No. 29, SEQ ID No. 30, SEQ ID No. 31, SEQ ID No. 52, SEQ ID No. 32, SEQ ID No. 33, SEQ ID No. 34, SEQ ID No. 35 or SEQ ID No. 36 or a nucleotide sequence which has 75% or more identity therewith.

14. A method according to any one of claims 1-10 wherein said lipid acyltransferase is a polypeptide having lipid acyltransferase activity which polypeptide is obtained by expression of:

a) the nucleotide sequence shown as SEQ ID No. 26 or a nucleotide sequence which as has 75% or more identity therewith;
b) a nucleic acid which encodes said polypeptide wherein said polypeptide is at least 70% identical with the polypeptide sequence shown in SEQ ID No. 15 or with the polypeptide sequence shown in SEQ ID No. 37; or
c) a nucleic acid which hybridises under medium stringency conditions to a nucleic probe comprising the nucleotide sequence shown as SEQ ID No. 26.

15. A method according to any one of claims 1-10 wherein said lipid acyltransferase is a polypeptide having lipid acyltransferase activity which polypeptide comprises any one of the amino acid sequences shown as SEQ ID No. 1, SEQ ID No. 3, SEQ ID No. 4, SEQ ID No. 5, SEQ ID No. 6, SEQ ID No. 7, SEQ ID No. 8, SEQ ID No. 9, SEQ ID No. 10, SEQ ID No. 41, SEQ ID No. 11, SEQ ID No. 12, SEQ ID No. 13, SEQ ID No. 14, SEQ ID No. 42, SEQ ID No. 15, SEQ ID No. 19, SEQ ID No. 20, SEQ ID No. 37 or an amino acid sequence which as has 75% or more identity therewith.

16. A method according to any one of claims 1-10 wherein the lipid acyltransferase comprises the amino acid sequence shown as SEQ ID No. 37, or an amino acid sequence which has 95% or more identity with SEQ ID No. 37, or wherein the lipid acyltransferase comprises an amino acid sequence which has 98% or more identity with SEQ ID No. 37, or wherein the lipid acyltransferase has the amino acid sequence shown as SEQ ID No. 37.

17. A meat based food product obtainable (e.g. obtained) by the method according to any one of claims 1-16.

**Patentansprüche**

1. Verfahren zur Reduktion des Cholesteringehalts und/oder zur Verbesserung der Textur und/oder zur Reduktion des Gewichtsverlusts und/oder zur Erhöhung der Fettstabilität eines Nahrungsmittels auf Fleischbasis, wobei das Verfahren Folgendes umfasst:

   a) Inkontaktbringen von Fleisch mit einer Lipidacyltransferase;
   b) Inkubieren des mit der Lipidacyltransferase in Kontakt gebrachten Fleisches bei einer Temperatur zwischen ungefähr 1°C bis ungefähr 9°C oder einer Temperatur zwischen ungefähr 60°C bis ungefähr 70°C;
   c) Herstellen eines Nahrungsmittels aus dem Fleisch;

   wobei Schritt b) vor, während oder nach Schritt c) durchgeführt wird.

2. Verfahren nach Anspruch 1, wobei mit der Lipidacyltransferase in Kontakt gebrachtes Fleisch zwischen ungefähr 1 Stunde bis ungefähr 24 Stunden inkubiert wird.

3. Verfahren nach Anspruch 1 oder Anspruch 2, wobei das mit der Lipidacyltransferase in Kontakt gebrachte Fleisch bei einer Temperatur zwischen ungefähr 1°C bis ungefähr 9°C, zum Beispiel zwischen ungefähr 1°C bis ungefähr 6°C, inkubiert wird.

4. Verfahren nach Anspruch 3, wobei mit der Lipidacyltransferase in Kontakt gebrachtes Fleisch zwischen ungefähr 10 bis ungefähr 24 Stunden inkubiert wird.

5. Verfahren nach Anspruch 1 oder Anspruch 2, wobei das mit der Lipidacyltransferase in Kontakt gebrachte Fleisch bei einer Temperatur zwischen ungefähr 60°C bis ungefähr 70°C, zum Beispiel zwischen ungefähr 60°C bis ungefähr 68°C, inkubiert wird.

6. Verfahren nach Anspruch 5, wobei das mit der Lipidacyltransferase in Kontakt gebrachte Fleisch zwischen ungefähr 30 Minuten bis ungefähr 2 Stunden, vorzugsweise zwischen ungefähr 1 Stunde bis ungefähr 1,5 Stunden, inkubiert wird.

7. Verfahren nach einem der vorhergehenden Ansprüche, wobei das mit der Lipidacyltransferase in Kontakt gebrachte Fleisch und/oder das davon stammende Nahrungsmittel weiterhin auf eine Temperatur und ausreichend lang, um das Enzym zu inaktivieren, erhitzt wird, wie Erhitzen auf eine Temperatur im Bereich von ungefähr 80°C bis ungefähr 140°C.

8. Verfahren nach einem der vorhergehenden Ansprüche, wobei es sich bei dem mit der Lipidacyltransferase in Kontakt zu bringenden Fleisch um Hackfleisch handelt.

9. Verfahren nach einem der vorhergehenden Ansprüche, wobei es sich bei dem Nahrungsmittel um ein emulgiertes Fleischprodukt handelt.

10. Verfahren nach einem der vorhergehenden Ansprüche, wobei das Nahrungsmittel mindestens 15% Fleisch umfasst.

11. Verfahren nach einem der Ansprüche 1-10, wobei die Lipidacyltransferase als ein Enzym charakterisiert ist, das Acyltransferaseaktivität aufweist und das das Aminosäuresequenzmotiv GDSX umfasst, wobei X einer oder mehrere der folgenden Aminosäurereste ist: L, A, V, I, F, Y, H, Q, T, N, M oder S.

12. Verfahren nach einem der Ansprüche 1-10, wobei die Lipidacyltransferase, wenn sie mit der "Vorschrift für die Bestimmung der %-Transferaseaktivität" getestet wird, eine Transferaseaktivität in dem Nahrungsmittel auf Fleischbasis von mindestens 15%, vorzugweise mindestens 20%, vorzugsweise mindestens 30%, vorzugweise mindestens 40%, aufweist.

13. Verfahren nach einem der Ansprüche 1-10, wobei die Lipidacyltransferase ein Polypeptid mit Lipidacyltransferaseaktivität ist, das durch Expression von einer der Nukleotidsequenzen gemäß SEQ ID No. 21, SEQ ID No. 47, SEQ ID No. 25, SEQ ID No. 48, SEQ ID No. 50, SEQ ID No. 51, SEQ ID No. 26, SEQ ID No. 27, SEQ ID No. 28, SEQ ID No. 38, SEQ ID No. 39, SEQ ID No. 40, SEQ ID No. 29, SEQ ID No. 30, SEQ ID No. 31, SEQ ID No. 52, SEQ ID No. 32, SEQ ID No. 33, SEQ ID No. 34, SEQ ID No. 35 oder SEQ ID No. 36 oder einer Nukleotidsequenz mit 75% oder mehr Identität hierzu erhalten wird.

**14.** Verfahren nach einem der Ansprüche 1-10, wobei die Lipidacyltransferase ein Polypeptid mit Lipidacyltransferaseaktivität ist, wobei das Polypeptid durch Expression der Folgenden erhalten wird:

a) der Nukleotidsequenz gemäß SEQ ID NO. 26 oder einer Nukleotidsequenz mit 75% oder mehr Identität hierzu;
b) einer Nukleinsäure, die für das Polypeptid codiert, wobei das Polypeptid zu mindestens 70% mit der Polypeptidsequenz gemäß SEQ ID No. 15 oder mit der Polypeptidsequenz gemäß SEQ ID No. 37 identisch ist; oder
c) einer Nukleinsäure, die unter mittelstringenten Bedingungen mit einer Nukleinsäuresonde, die die Nukleotidsequenz gemäß SEQ ID No.26 umfasst, hybridisiert.

**15.** Verfahren nach einem der Ansprüche 1-10, wobei die Lipidacyltransferase ein Polypeptid mit Lipidacyltransferaseaktivität ist, das eine beliebige der Aminosäuresequenzen gemäß SEQ ID No. 1, SEQ ID No. 3, SEQ ID No. 4, SEQ ID No. 5, SEQ ID No. 6, SEQ ID No. 7, SEQ ID No. 8, SEQ ID No. 9, SEQ ID No. 10, SEQ ID No. 41, SEQ ID No. 11, SEQ ID No. 12, SEQ ID No. 13, SEQ ID No. 14, SEQ ID No. 42, SEQ ID No. 15, SEQ ID No. 19, SEQ ID No. 20, SEQ ID No. 37 oder eine Aminosäuresequenz mit mindestens 75% oder mehr Identität hierzu umfasst.

**16.** Verfahren nach einem der Ansprüche 1-10, wobei die Lipidacyltransferase die Aminosäuresequenz gemäß SEQ ID No. 37 oder eine Aminosäuresequenz mit 95% oder mehr Identität zu der SEQ ID No. 37 umfasst, oder wobei die Lipidacyltransferase eine Aminosäuresequenz mit 98% oder mehr Identität zu der SEQ ID No. 37 umfasst, oder wobei die Lipidacyltransferase die Aminosäuresequenz gemäß SEQ ID No. 37 aufweist.

**17.** Nahrungsmittel auf Fleischbasis, erhältlich (z.B. erhalten) nach dem Verfahren nach einem der Ansprüche 1-16.

## Revendications

**1.** Procédé pour réduire la quantité de cholestérol et/ou améliorer la texture et/ou réduire la perte de poids et/ou augmenter la stabilité des graisses d'un produit alimentaire à base de viande comprenant :

a) la mise en contact de la viande avec une lipide acyltransférase ;
b) l'incubation de la viande en contact avec la lipide acyltransférase à une température comprise entre environ 1 °C et environ 9 °C ou à une température comprise entre environ 60 °C et environ 70°C ;
c) la production d'un produit alimentaire à partir de la viande ;

l'étape b) étant conduite avant, pendant ou après l'étape c).

**2.** Procédé selon la revendication 1 dans lequel la viande mise en contact avec la lipide acyltransférase est incubée pendant une durée comprise entre environ 1 heure et 24 heures.

**3.** Procédé selon la revendication 1 ou la revendication 2 dans lequel la viande en contact avec la lipide acyltransférase est incubée à une température comprise entre environ 1 °C et environ 9 °C, par exemple entre environ 1 °C et environ 6 °C.

**4.** Procédé selon la revendication 3 dans lequel la viande en contact avec la lipide acyltransférase est incubée pendant une durée comprise entre environ 10 et environ 24 heures.

**5.** Procédé selon la revendication 1 dans lequel la viande en contact avec la lipide acyltransférase est incubée à une température comprise entre environ 60 °C et environ 70 °C, par exemple entre environ 60 °C et environ 68 °C.

**6.** Procédé selon la revendication 5 dans lequel la viande est en contact avec la lipide acyltransférase est incubée pendant une durée comprise entre environ 30 minutes et environ 2 heures, de préférence pendant une durée comprise entre environ 1 heure et environ 1,5 heure.

**7.** Procédé selon l'une quelconque des revendications précédentes dans lequel la viande en contact avec la lipide acyltransférase et/ou le produit dérivé de celle-ci est ensuite chauffé à une température et pendant une durée suffisante pour inactiver l'enzyme, tel que le chauffage à une température dans la plage d'environ 80 °C à environ 140 °C.

8. Procédé selon l'une quelconque des revendications précédentes dans lequel la viande destinée à être mise en contact avec la lipide acyltransférase est de la viande hachée.

9. Procédé selon l'une quelconque des revendications précédentes dans lequel le produit alimentaire est un produit de viande émulsifié.

10. Procédé selon l'une quelconque des revendications précédentes dans lequel le produit alimentaire comprend au moins 15 % de viande.

11. Procédé selon l'une quelconque des revendications 1 à 10 dans lequel la lipide acyltransférase est **caractérisée par** une enzyme qui possède une activité acyltransférase et qui comprend le motif de séquence d'acides aminés GDSX, dans lequel X est un ou plusieurs des résidus d'acide aminé suivants L, A, V, I, F, Y, H, Q, T, N, M ou S.

12. Procédé selon l'une quelconque des revendications 1 à 10 dans lequel ladite lipide acyltransférase lorsqu'elle est testée en utilisant le « protocole pour la détermination du % d'activité transférase » a une activité transférase dans le produit alimentaire à base de viande d'au moins 15 %, de préférence au moins 20 %, de préférence au moins 30 %, de préférence au moins 40 %.

13. Procédé selon l'une quelconque des revendications 1 à 10 dans lequel ladite lipide acyltransférase est un polypeptide ayant une activité lipide acyltransférase, ledit polypeptide étant obtenu par l'expression de l'une quelconque des séquences nucléotidiques décrites dans SEQ ID NO: 21, SEQ ID NO: 47, SEQ ID NO: 25, SEQ ID NO: 48, SEQ ID NO: 50, SEQ ID NO: 51, SEQ ID NO: 26, SEQ ID NO: 27, SEQ ID NO: 28, SEQ ID NO: 38, SEQ ID NO: 39, SEQ ID NO: 40, SEQ ID NO: 29, SEQ ID NO: 30, SEQ ID NO: 31, SEQ ID NO: 52, SEQ ID NO: 32, SEQ ID NO: 33, SEQ ID NO: 34, SEQ ID NO: 35 ou SEQ ID NO: 36 ou une séquence nucléotidique qui a 75 % ou plus d'identité avec celles-ci.

14. Procédé selon l'une quelconque des revendications 1 à 10 dans lequel ladite lipide acyltransférase est un polypeptide ayant une activité lipide acyltransférase, ledit polypeptide étant obtenu par l'expression de :

a) la séquence nucléotidique décrite dans SEQ ID NO: 26 ou une séquence nucléotidique qui a 75 % d'identité ou plus avec celle-ci ;
b) un acide nucléique qui code pour ledit polypeptide, ledit polypeptide ayant au moins 70 % d'identité avec la séquence polypeptidique décrite dans SEQ ID NO: 15 ou avec la séquence polypeptidique décrite dans SEQ ID NO: 37 ; ou
c) un acide nucléique qui s'hybride dans des conditions de stringence moyenne avec une sonde nucléique comprenant la séquence nucléotidique décrite dans SEQ ID NO: 26.

15. Procédé selon l'une quelconque des revendications 1 à 10 dans lequel ladite lipide acyltransférase est un polypeptide ayant une activité lipide acyltransférase, ledit polypeptide comprenant l'une quelconque des séquences d'acides aminés décrites dans SEQ ID NO: 1, SEQ ID NO: 3, SEQ ID NO: 4, SEQ ID NO: 5, SEQ ID NO: 6, SEQ ID NO: 7, SEQ ID NO: 8, SEQ ID NO: 9, SEQ ID NO: 10, SEQ ID NO: 41, SEQ ID NO: 11, SEQ ID NO: 12, SEQ ID NO: 13, SEQ ID NO: 14, SEQ ID NO: 42, SEQ ID NO: 15, SEQ ID NO: 19, SEQ ID NO: 20, SEQ ID NO: 37 ou une séquence d'acides aminés qui a 75 % d'identité ou plus avec celles-ci.

16. Procédé selon l'une quelconque des revendications 1 à 10 dans lequel la lipide acyltransférase comprend la séquence d'acides aminés décrite dans SEQ ID NO: 37, ou une séquence d'acides aminés qui a 95 % d'identité ou plus avec SEQ ID NO: 37, ou dans lequel la lipide acyltransférase comprend une séquence d'acides aminés qui a 98 % d'identité ou plus avec SEQ ID NO: 37, ou dans lequel la lipide acyltransférase a la séquence d'acides aminés décrite dans SEQ ID NO: 37.

17. Produit alimentaire à base de viande pouvant être obtenu (par exemple, obtenu) par le procédé selon l'une quelconque des revendications 1 à 16.

## FIGURE 1

SEQ ID No. 15

```
  1  ADTRPAFSRI VMFGDSLSDT GKMYSKMRGY LPSSPPYYEG RFSNGPVWLE QLTKQFPGLT
 61  IANEAEGGAT AVAYNKISWD PKYQVINNLD YEVTQFLQKD SFKPDDLVIL WVGANDYLAY
121  GWNTEQDAKR VRDAISDAAN RMVLNGAKQI LLFNLPDLGQ NPSARSQKVV EAVSHVSAYH
181  NKLLLNLARQ LAPTGMVKLF EIDKQFAEML RDPQNFGLSD VENPCYDGGY VWKPFATRSV
241  STDRQLSAFS PQERLAIAGN PLLAQAVASP MARRSASPLN CEGKMFWDQV HPTTVVHAAL
301  SERAATFIET QYEFLAHG
```

## FIGURE 2

(SEQ ID No. 1)

```
  1 MKKWFVCLLG LVALTVQAAD SRPAFSRIVM FGDSLSDTGK MYSKMRGYLP
 51 SSPPYYEGRF SNGPVWLEQL TKQFPGLTIA NEAEGGATAV AYNKISWNPK
101 YQVINNLDYE VTQFLQKDSF KPDDLVILWV GANDYLAYGW NTEQDAKRVR
151 DAISDAANRM VLNGAKQILL FNLPDLGQNP SARSQKVVEA VSHVSAYHNQ
201 LLLNLARQLA PTGMVKLFEI DKQFAEMLRD PQNFGLSDVE NPCYDGGYVW
251 KPFATRSVST DRQLSAFSPQ ERLAIAGNPL LAQAVASPMA RRSASPLNCE
301 GKMFWDQVHP TTVVHAALSE RAATFIANQY EFLAH*
```

FIGURE 3

(SEQ ID No. 2)

```
  1 ivafGDSlTd geayygdsdg ggwgagladr Ltallrlrar prgvdvfnrg isGrtsdGrl
 61 ivDalvallF laqslglpnL pPYLsgdflr GANFAsagAt Ilptsgpfli QvqFkdfksq
121 vlelrqalgl lqellrllpv ldakspdlvt imiGtNDlit saffgpkste sdrnvsvpef
181 kdnlrqlikr Lrsnngarii vlitlvilnl gplGClPlkl alalassknv dasgclerln
241 eavadfneal relaiskled qlrkdglpdv kgadvpyvDl ysifqdldgi qnpsayvyGF
301 ettkaCCGyG gryNynrvCG naglcnvtak aCnpssylls flfwDgfHps ekGykavAea
361 l
```

FIGURE 4

(SEQ ID No. 3)

```
  1 mkkwfvcllg lvaltvqaad srpafsrivm fgdslsdtgk myskmrgylp ssppyyegrf
 61 sngpvwleql tnefpgltia neaeggptav aynkiswnpk yqvinnldye vtqflqkdsf
121 kpddlvilwv gandylaygw nteqdakrvr daisdaanrm vlngakeill fnlpdlgqnp
181 sarsqkvvea ashvsayhnq lllnlarqla ptgmvklfei dkqfaemlrd pqnfglsdqr
241 nacyggsyvw kpfasrsast dsqlsafnpq erlaiagnpl laqavaspma arsastlnce
301 gkmfwdqvhp ttvvhaalse paatfiesqy eflah
```

FIGURE 5

SEQ ID No. 4

```
  1 mkkwfvcllg lialtvqaad trpafsrivm fgdslsdtgk myskmrgylp ssppyyegrf
 61 sngpvwleql tkqfpgltia neaeggatav aynkiswnpk yqvynnldye vtqflqkdsf
121 kpddlvilwv gandylaygw nteqdakrvr daisdaanrm vlngakqill fnlpdlgqnp
181 sarsqkvvea vshvsayhnk lllnlarqla ptgmvklfei dkqfaemlrd pqnfglsdve
241 npcydggyvw kpfatrsvst drqlsafspq erlaiagnpl laqavaspma rrsasplnce
301 gkmfwdqvhp ttvvhaalse raatfietqy eflahg
```

FIGURE 6

SEQ ID No. 5

```
  1 mpkpalrrvm tatvaavgtl algltdatah aapaqatptl dyvalgdsys agsgvlpvdp
 61 anllclrsta nyphviadtt garltdvtcg aaqtadftra qypgvapqld algtgtdlvt
121 ltiggndnst finaitacgt agvlsggkgs pckdrhgtsf ddeieantyp alkeallgvr
181 arapharvaa lgypwitpat adpscflklp laagdvpylr aiqahlndav rraaeetgat
241 yvdfsgvsdg hdaceapgtr wiepllfghs lvpvhpnalg errmaehtmd vlgld
```

FIGURE 7

SEQ ID No. 6

```
  1 mpkpalrrvm tatvaavgtl algltdatah aapaqatptl dyvalgdsys agsgvlpvdp
 61 anllclrsta nyphviadtt garltdvtcg aaqtadftra qypgvapqld algtgtdlvt
121 ltiggndnst finaitacgt agvlsggkgs pckdrhgtsf ddeieantyp alkeallgvr
181 arapharvaa lgypwitpat adpscflklp laagdvpylr aiqahlndav rraaeetgat
241 yvdfsgvsdg hdaceapgtr wiepllfghs lvpvhpnalg errmaehtmd vlgld
```

FIGURE 8

SEQ ID No. 7

```
  1 mdyekfllfg dsitefafnt rpiedgkdqy algaalvney trkmdilqrg fkgytsrwal
 61 kilpeilkhe snivmatifl gandacsagp qsvplpefid nirqmvslmk syhirpiiig
121 pglvdrekwe kekseeialg yfrtnenfai ysdalaklan eekvpfvaln kafqqeggda
181 wqqlltdglh fsgkgykifh dellkvietf ypqyhpknmq yklkdwrdvl ddgsnims
```

FIGURE 9

(SEQ ID No. 8)

```
        10         20         30         40         50         60
         |          |          |          |          |          |
MNLRQWMGAA TAALALGLAA CGGGGTDQSG NPNVAKVQRM VVFGDSLSDI GTYTPVAQAV

        70         80         90        100        110        120
         |          |          |          |          |          |
GGGKFTTNPG PIWAETVAAQ LGVTLTPAVM GYATSVQNCP KAGCFDYAQG GSRVTDPNGI

       130        140        150        160        170        180
         |          |          |          |          |          |
GHNGGAGALT YPVQQQLANF YAASNNTFNG NNDVVFVLAG SNDIFFWTTA AATSGSGVTP

       190        200        210        220        230        240
         |          |          |          |          |          |
AIATAQVQQA ATDLVGYVKD MIAKGATQVY VFNLPDSSLT PDGVASGTTG QALLHALVGT

       250        260        270        280        290        300
         |          |          |          |          |          |
FNTTLQSGLA GTSARIIDFN AQLTAAIQNG ASFGFANTSA RACDATKINA LVPSAGGSSL

       310        320        330        340
         |          |          |          |
FCSANTLVAS GADQSYLFAD GVHPTTAGHR LIASNVLARL LADNVAH
```

FIGURE 10 (SEQ ID No. 9)

```
  1 migsyvavgd sftegvgdpg pdgafvgwad rlavlladrr pegdftytnl avrgrlldqi
 61 vaeqvprvvg lapdlvsfaa ggndiirpgt dpdevaerfe lavaaltaaa gtvlvttgfd
121 trgvpvlkhl rgkiatyngh vraiadrygc pvldlwslrs vqdrrawdad rlhlspeght
181 rvalragqal glrvpadpdq pwpplpprgt ldvrrddvhw areylvpwig rrlrgessgd
241 hvtakgtlsp daiktriaav a
```

FIGURE 11

(SEQ ID No. 10)

```
  1 mqtnpaytsl vavgdsfteg msdllpdgsy rgwadllatr maarspgfry anlavrgkli
 61 gqivdeqvdv aaamgadvit lvgglndtlr pkcdmarvrd lltqaverla phceqlvlmr
121 spgrqgpvle rfrprmealf aviddlagrh gavvvdlyga qsladprmwd vdrlhltaeg
181 hrrvaeavwq slghepedpe whapipatpp pgwvtrrtad vrfarqhllp wigrrltgrs
241 sgdglpakrp dllpyedpar
```

FIGURE 12

(SEQ ID No. 11)

```
  1 mtsmsrarva rriaagaayg gggiglagaa avglvvaevq larrrvgvgt ptrvpnaqgl
 61 yggtlptagd pplrlmmlgd staagqgvhr agqtpgalla sglaavaerp vrlgsvaqpg
121 acsddldrqv alvlaepdrv pdicvimvga ndvthrmpat rsvrhlssav rrlrtagaev
181 vvgtcpdlgt iervrqplrw larrasrqla aaqtigaveq ggrtvslgdl lgpefaqnpr
241 elfgpdnyhp saegyataam avlpsvcaal glwpadeehp dalrregflp varaaaeaas
301 eagtevaaam ptgprgpwal lkrrrrrrvs eaepsspsgv
```

FIGURE 13 (SEQ ID No. 12)

```
  1 mgrgtdqrtr ygrrrarval aaltaavlgv gvagcdsvgg dspapsgsps krtrtapawd
 61 tspasvaavg dsitrgfdac avlsdcpevs watgssakvd slavrllgka daaehswnya
121 vtgarmadlt aqvtraaqre pelvavmaga ndacrsttsa mtpvadfraq feeamatlrk
181 klpkaqvyvs sipdlkrlws qgrtnplgkq vwklglcpsm lgdadsldsa atlrrntvrd
241 rvadynevlr evcakdrrcr sddgavhefr fgtdqlshwd wfhpsvdgqa rlaeiayrav
301 taknp
```

FIGURE 14 (SEQ ID No. 13)

```
  1 mrlsrraata sallltpala lfgasaavsa priqatdyva lgdsyssgvg agsydsssgs
 61 ckrstksypa lwaashtgtr fnftacsgar tgdvlakqlt pvnsgtdlvs itiggndagf
121 adtmttcnlq gesaclaria karayiqqtl paqldqvyda idsrapaaqv vvlgyprfyk
181 lggscavgls eksraainaa addinavtak raadhgfafg dvnttfaghe lcsgapwlhs
241 vtlpvensyh ptangqskgy lpvlnsat
```

FIGURE 15 (SEQ ID No. 14)

```
  1 MKKWFVCLLG LIALTVQAAD TRPAFSRIVM FGDSLSDTGK MYSKMRGYLP
 51 SSPPYYEGRF SNGPVWLEQL TKQFPGLTIA NEAEGGATAV AYNKISWNPK
101 YQVINNLDYE VTQFLQKDSF KPDDLVILWV GANDYLAYGW NTEQDAKRVR
151 DAISDAANRM VLNGAKQILL FNLPDLGQNP SARSQKVVEA VSHVSAYHNK
201 LLLNLARQLA PTGMVKLFEI DKQFAEMLRD PQNFGLSDVE NPCYDGGYVW
251 KPFATRSVST DRQLSAFSPQ ERLAIAGNPL LAQAVASPMA RRSASPLNCE
301 GKMFWDQVHP TTVVHAALSE RAATFIETQY EFLAHG*
```

FIGURE 16 (SEQ ID No. 16)

```
   1 ATGTTTAAGT TTAAAAAGAA TTTCTTAGTT GGATTATCGG CAGCTTTAAT
     TACAAATTCA AATTTTTCTT AAAGAATCAA CCTAATAGCC GTCGAAATTA

  51 GAGTATTAGC TTGTTTTCGG CAACCGCCTC TGCAGCTAGC GCCGACAGCC
     CTCATAATCG AACAAAAGCC GTTGGCGGAG ACGTCGATCG CGGCTGTCGG

 101 GTCCCGCCTT TTCCCGGATC GTGATGTTCG GCGACAGCCT CTCCGATACC
     CAGGGCGGAA AAGGGCCTAG CACTACAAGC CGCTGTCGGA GAGGCTATGG

 151 GGCAAAATGT ACAGCAAGAT GCGCGGTTAC CTCCCCTCCA GCCCGCCCTA
     CCGTTTTACA TGTCGTTCTA CGCGCCAATG GAGGGGAGGT CGGGCGGGAT

 201 CTATGAGGGC CGTTTCTCCA ACGGACCCGT CTGGCTGGAG CAGCTGACCA
     GATACTCCCG GCAAAGAGGT TGCCTGGGCA GACCGACCTC GTCGACTGGT

 251 AACAGTTCCC GGGTCTGACC ATCGCCAACG AAGCGGAAGG CGGTGCCACT
     TTGTCAAGGG CCCAGACTGG TAGCGGTTGC TTCGCCTTCC GCCACGGTGA

 301 GCCGTGGCTT ACAACAAGAT CTCCTGGAAT CCCAAGTATC AGGTCATCAA
     CGGCACCGAA TGTTGTTCTA GAGGACCTTA GGGTTCATAG TCCAGTAGTT

 351 CAACCTGGAC TACGAGGTCA CCCAGTTCTT GCAGAAAGAC AGCTTCAAGC
     GTTGGACCTG ATGCTCCAGT GGGTCAAGAA CGTCTTTCTG TCGAAGTTCG

 401 CGGACGATCT GGTGATCCTC TGGGTCGGTG CCAATGACTA TCTGGCCTAT
     GCCTGCTAGA CCACTAGGAG ACCCAGCCAC GGTTACTGAT AGACCGGATA

 451 GGCTGGAACA CGGAGCAGGA TGCCAAGCGG GTTCGCGATG CCATCAGCGA
     CCGACCTTGT GCCTCGTCCT ACGGTTCGCC CAAGCGCTAC GGTAGTCGCT

 501 TGCGGCCAAC CGCATGGTAC TGAACGGTGC CAAGCAGATA CTGCTGTTCA
     ACGCCGGTTG GCGTACCATG ACTTGCCACG GTTCGTCTAT GACGACAAGT

 551 ACCTGCCGGA TCTGGGCCAG AACCCGTCAG CTCGCAGTCA GAAGGTGGTC
     TGGACGGCCT AGACCCGGTC TTGGGCAGTC GAGCGTCAGT CTTCCACCAG

 601 GAGGCGGTCA GCCATGTCTC CGCCTATCAC AACCAGCTGC TGCTGAACCT
     CTCCGCCAGT CGGTACAGAG GCGGATAGTG TTGGTCGACG ACGACTTGGA

 651 GGCACGCCAG CTGGCCCCCA CCGGCATGGT AAAGCTGTTC GAGATCGACA
     CCGTGCGGTC GACCGGGGGT GGCCGTACCA TTTCGACAAG CTCTAGCTGT

 701 AGCAATTTGC CGAGATGCTG CGTGATCCGC AGAACTTCGG CCTGAGCGAC
     TCGTTAAACG GCTCTACGAC GCACTAGGCG TCTTGAAGCC GGACTCGCTG

 751 GTCGAGAACC CCTGCTACGA CGGCGGCTAT GTGTGGAAGC CGTTTGCCAC
     CAGCTCTTGG GGACGATGCT GCCGCCGATA CACACCTTCG GCAAACGGTG

 801 CCGCAGCGTC AGCACCGACC GCCAGCTCTC CGCCTTCAGT CCGCAGGAAC
     GGCGTCGCAG TCGTGGCTGG CGGTCGAGAG GCGGAAGTCA GGCGTCCTTG

 851 GCCTCGCCAT CGCCGGCAAC CCGCTGCTGG CACAGGCCGT TGCCAGTCCT
     CGGAGCGGTA GCGGCCGTTG GGCGACGACC GTGTCCGGCA ACGGTCAGGA

 901 ATGGCCCGCC GCAGCGCCAG CCCCCTCAAC TGTGAGGGCA AGATGTTCTG
     TACCGGGCGG CGTCGCGGTC GGGGGAGTTG ACACTCCCGT TCTACAAGAC

 951 GGATCAGGTA CACCCGACCA CTGTCGTGCA CGCAGCCCTG AGCGAGCGCG
     CCTAGTCCAT GTGGGCTGGT GACAGCACGT GCGTCGGGAC TCGCTCGCGC

1001 CCGCCACCTT CATCGCGAAC CAGTACGAGT TCCTCGCCCA CTGATGA
     GGCGGTGGAA GTAGCGCTTG GTCATGCTCA AGGAGCGGGT GACTACT
```

## FIGURE 17

(SEQ ID No. 17)

1 MFKFKKNFLV GLSAALMSIS LFSATASAAS ADSRPAFSRI VMFGDSLSDT
51 GKMYSKMRGY LPSSPPYYEG RFSNGPVWLE QLTKQFPGLT IANEAEGGAT
101 AVAYNKISWN PKYQVINNLD YEVTQFLQKD SFKPDDLVIL WVGANDYLAY
151 GWNTEQDAKR VRDAISDAAN RMVLNGAKQI LLFNLPDLGQ NPSARSQKVV
201 EAVSHVSAYH NQLLLNLARQ LAPTGMVKLF EIDKQFAEML RDPQNFGLSD
251 VENPCYDGGY VWKPFATRSV STDRQLSAFS PQERLAIAGN PLLAQAVASP
301 MARRSASPLN CEGKMFWDQV HPTTVVHAAL SERAATFIAN QYEFLAH**

## FIGURE 18

(SEQ ID No. 18)

1 mrttviaasa llllagcadg areetagapp gessggiree gaeastsitd vyialgdsya
61 amggrdqplr gepfclrssg nypellhaev tdltcqgavt gdlleprtlg ertlpaqvda
121 ltedttlvtl siggndlgfg evagcireri agenaddcvd llgetigeql dqlppqldrv
181 heairdragd aqvvvtgylp lvsagdcpel gdvseadrrw aveltgqine tvreaaerhd
241 alfvlpddad ehtscappqq rwadiqgqqt dayplhptsa gheamaaavr dalglepvqp

## FIGURE 19

(SEQ ID No. 19)

ADSRPAFSRIVMFGDSLSDTGKMYSKMRGYLPSSPPYYEGRFSNGPVWLEQLTNEFPGLTIANEAEGGPT
AVAYNKISWNPKYQVINNLDYEVTQFLQKDSFKPDDLVILWVGANDYLAYGWNTEQDAKRVRDAISDAAN
RMVLNGAKEILLFNLPDLGQNPSARSQKVVEAASHVSAYHNQLLLNLARQLAPTGMVKLFEIDKQFAEML
RDPQNFGLSDQRNACYGGSYVWKPFASRSASTDSQLSAFNPQERLAIAGNPLLAQAVASPMAARSASTLN
CE
GKMFWDQVHPTTVVHAALSEPAATFIESQYEFLAH

## FIGURE 20

(SEQ ID No. 20)

1 ADTRPAFSRI VMFGDSLSDT GKMYSKMRGY LPSSPPYYEG RFSNGPVWLE QLTKQFPGLT
61 IANEAEGGAT AVAYNKISWN PKYQVINNLD YEVTQFLQKD SFKPDDLVIL WVGANDYLAY
121 GWNTEQDAKR VRDAISDAAN RMVLNGAKQI LLFNLPDLGQ NPSARSQKVV EAVSHVSAYH
181 NKLLLNLARQ LAPTGMVKLF EIDKQFAEML RDPQNFGLSD VENPCYDGGY VWKPFATRSV
241 STDRQLSAFS PQERLAIAGN PLLAQAVASP MARRSASPLN CEGKMFWDQV HPTTVVHAAL
301 SERAATFIET QYEFLAHG

## FIGURE 21

(SEQ ID No. 21)

ACAGGCCGATGCACGGAACCGTACCTTTCCGCAGTGAAGCGCTCTCCCCCCATCGTTCGC
CGGGACTTCATCCGCGATTTTGGCATGAACACTTCCTTCAACGCGCGTAGCTTGCTACAA
GTGCGGCAGCAGACCCGCTCGTTGGAGGCTCAGTGAGATTGACCCGATCCCTGTCGGCCG
CATCCGTCATCGTCTTCGCCCTGCTGCTCGCGCTGCTGGGCATCAGCCCGGCCCAGGCAG
CCGGCCCGGCCTATGTGGCCCTGGGGGATTCCTATTCCTCGGGCAACGGCGCCGGAAGTT
ACATCGATTCGAGCGGTGACTGTCACCGCAGCAACAACGCGTACCCCGCCCGCTGGGCGG
CGGCCAACGCACCGTCCTCCTTCACCTTCGCGGCCTGCTCGGGAGCGGTGACCACGGATG
TGATCAACAATCAGCTGGGCGCCCTCAACGCGTCCACCGGCCTGGTGAGCATCACCATCG
GCGGCAATGACGCGGGCTTCGCGGACGCGATGACCACCTGCGTCACCAGCTCGGACAGCA
CCTGCCTCAACCGGCTGGCCACCGCCACCAACTACATCAACACCACCCTGCTCGCCCGGC
TCGACGCGGTCTACAGCCAGATCAAGGCCCGTGCCCCCAACGCCCGCGTGGTCGTCCTCG
GCTACCCGCGCATGTACCTGGCCTCGAACCCCTGGTACTGCCTGGGCCTGAGCAACACCA
AGCGCGCGGCCATCAACACCACCGCCGACACCCTCAACTCGGTGATCTCCTCCCGGGCCA
CCGCCCACGGATTCCGATTCGGCGATGTCCGCCCGACCTTCAACAACCACGAACTGTTCT
TCGGCAACGACTGGCTGCACTCACTCACCCTGCCGGTGTGGGAGTCGTACCACCCCACCA
GCACGGGCCATCAGAGCGGCTATCTGCCGGTCCTCAACGCCAACAGCTCGACCTGATCAA
CGCACGGCCGTGCCCGCCCCGCGCGTCACGCTCGGCGCGGGCGCCGCAGCGCGTTGATCA
GCCCACAGTGCCGGTGACGGTCCCACCGTCACGGTCGAGGGTGTACGTCACGGTGGCGCC
GCTCCAGAAGTGGAACGTCAGCAGGACCGTGGAGCCGTCCCTGACCTCGTCGAAGAACTC
CGGGGTCAGCGTGATCACCCCTCCCCCGTAGCCGGGGGCGAAGGCGGCGCCGAACTCCTT
GTAGGACGTCCAGTCGTGCGGCCCGGCGTTGCCACCGTCCGCGTAGACCGCTTCCATGGT
CGCCAGCCGGTCCCCGCGGAACTCGGTGGGGATGTCCGTGCCCAAGGTGGTCCCGGTGGT
GTCCGAGAGCACCGGGGGCTCGTACCGGATGATGTGCAGATCCAAAGAATT

## FIGURE 22

(SEQ ID NO. 22):

MRLTRSLSAASVIVFALLLALLGISPAQAAGPAYVALGDSYSSGNGAGSYIDSSGDCHRSN
NAYPARWAAANAPSSFTFAACSGAVTTDVINNQLGALNASTGLVSITIGGNDAGFADAMTT
CVTSSDSTCLNRLATATNYINTTLLARLDAVYSQIKARAPNARVVVLGYPRMYLASNPWYC
LGLSNTKRAAINTTADTLNSVISSRATAHGFRFGDVRPTFNNHELFFGNDWLHSLTLPVWE
SYHPTSTGHQSGYLPVLNANSST

FIGURE 23

SEQ ID No. 23

```
  1 mlphpagerg evgaffallv gtpqdrrlrl echetrplrg rcgcgerrvp pltlpgdgvl
 61 cttsstrdae tvwrkhlqpr pdggfrphlg vgcllagqgs pgvlwcgreg crfevcrrdt
121 pglsrtrngd ssppfragws lppkcgeisq sarktpavpr ysllrtdrpd gprgrfvgsg
181 praatrrrlf lgipalvlvt altlvlavpt gretlwrmwc eatqdwclgv pvdsrgqpae
241 dgeflllspv qaatwgnyya lgdsyssgdg ardyypgtav kggcwrsana ypelvaeayd
301 faghlsflac sgqrgyamld aidevgsqld wnsphtslvt igiggndlgf stvlktcmvr
361 vplldskact dqedairkrm akfettfeel isevrtrapd arilvvgypr ifpeeptgay
421 ytltasnqrw lnetiqefnq qlaeavavhd eeiaasggvg svefvdvyha ldgheigsde
481 pwvngvqlrd latgvtvdrs tfhpnaaghr avgervieqi etgpgrplya tfavvagatv
541 dtlagevg
```

FIGURE 24

(SEQ ID No. 24)

```
  1 mrttviaasa llllagcadg areetagapp gessggiree gaeastsitd vyialgdsya
 61 amggrdqplr gepfclrssg nypellhaev tdltcqgavt gdlleprtlg ertlpaqvda
121 ltedttlvtl siggndlgfg evagcireri agenaddcvd llgetigeql dqlppqldrv
181 heairdragd aqvvvtgylp lvsagdcpel gdvseadrrw aveltgqine tvreaaerhd
241 alfvlpddad ehtscappqq rwadiqgqqt dayplhptsa gheamaaavr dalglepvqp
```

FIGURE 25

(SEQ ID No. 25)

```
   1 ttctggggtg ttatggggtt gttatcggct cgtcctgggt ggatcccgcc aggtggggta
  61 ttcacggggg acttttgtgt ccaacagccg agaatgagtg ccctgagcgg tgggaatgag
 121 gtgggcgggg ctgtgtcgcc atgagggggc ggcgggctct gtggtgcccc gcgacccccg
 181 gccccggtga gcggtgaatg aaatccggct gtaatcagca tcccgtgccc accccgtcgg
 241 ggaggtcagc gcccggagtg tctacgcagt cggatcctct cggactcggc catgctgtcg
 301 gcagcatcgc gctcccgggt cttggcgtcc ctcggctgtt ctgcctgctg tccctggaag
 361 gcgaaatgat caccggggag tgatacaccg gtggtctcat cccggatgcc cacttcggcg
 421 ccatccggca attcgggcag ctccgggtgg aagtaggtgg catccgatgc gtcggtgacg
 481 ccatagtggg cgaagatctc atcctgctcg agggtgctca ggccactctc cggatcgata
 541 tcgggggcgt ccttgatggc gtccttgctg aaaccgaggt gcagcttgtg ggcttccaat
 601 ttcgcaccac ggagcgggac gaggctggaa tgacggccga agagcccgtg gtggacctca
 661 acgaaggtgg gtagtcccgt gtcatcattg aggaacacgc cctccaccgc acccagcttg
 721 tggccggagt tgtcgtaggc gctggcatcc agaagggaaa cgatctcata tttgtcggtg
 781 tgctcagaca tgatcttcct ttgctgtcgg tgtctggtac taccacggta gggctgaatg
 841 caactgttat ttttctgtta ttttaggaat tggtccatat cccacaggct ggctgtggtc
 901 aaatcgtcat caagtaatcc ctgtcacaca aaatgggtgg tgggagccct ggtcgcggtt
 961 ccgtgggagg cgccgtgccc cgcaggatcg tcggcatcgg cggatctggc cggtaccccg
1021 cggtgaataa aatcattctg taaccttcat cacggttggt tttaggtatc cgcccctttc
1081 gtcctgaccc cgtccccggc gcgcgggagc ccgcgggttg cggtagacag gggagacgtg
1141 gacaccatga ggacaacggt catcgcagca agcgcattac tccttctcgc cggatgcgcg
1201 gatggggccc gggaggagac cgccggtgca ccgccgggtg agtcctccgg gggcatccgg
1261 gaggaggggg cggaggcgtc gacaagcatc accgacgtct acatcgccct cggggattcc
1321 tatgcggcga tgggcgggcg ggatcagccg ttacggggtg agccgttctg cctgcgctcg
1381 tccggtaatt acccggaact cctccacgca gaggtcaccg atctcacctg ccagggggcg
1441 gtgaccgggg atctgctcga acccaggacg ctgggggagc gcacgctgcc ggcgcaggtg
1501 gatgcgctga cggaggacac caccctggtc accctctcca tcgggggcaa tgacctcgga
1561 ttcggggagg tggcgggatg catccgggaa cggatcgccg gggagaacgc tgatgattgc
1621 gtggacctgc tgggggaaac catcggggag cagctcgatc agcttccccc gcagctggac
1681 cgcgtgcacg aggctatccg ggaccgcgcc ggggacgcgc aggttgtggt caccggttac
1741 ctgccgctcg tgtctgccgg ggactgcccc gaactggggg atgtctccga ggcggatcgt
1801 cgttgggcgg ttgagctgac cgggcagatc aacgagaccg tgcgcgaggc ggccgaacga
1861 cacgatgccc tctttgtcct gcccgacgat gccgatgagc acaccagttg tgcacccccca
1921 cagcagcgct gggcggatat ccagggccaa cagaccgatg cctatccgct gcacccgacc
1981 tccgccggcc atgaggcgat ggccgccgcc gtccgggacg cgctgggcct ggaaccggtc
2041 cagccgtagc gccgggcgcg cgcttgtcga cgaccaaccc atgccaggct gcagtcacat
2101 ccgcacatag cgcgcgcggg cgatggagta cgcaccatag aggatgagcc cgatgccgac
2161 gatgatgagc agcacactgc cgaagggttg ttccccgagg gtgcgcagag ccgagtccag
2221 acctgcggcc tgctccggat catgggccca accggcgatg acgatcaaca cccccaggat
2281 cccgaaggcg ataccacggg cgacataacc ggctgttccg gtgatgatga tcgcggtccc
2341 gacctgccct gaccccgcac ccgcctccag atcctcccgg aaatcccggg tggccccctt
2401 ccagaggttg tagacacccg cccccagtac caccagcccg gcgaccacaa ccagcaccac
2461 accccagggt tgggatagga cggtggcggt gacatcggtg gcggtctccc catcggaggt
2521 gctgccgccc cgggcgaagg tggaggtggt caccgccagg gagaagtaga ccatggccat
2581 gaccgccccc ttggcccttt ccttgaggtc ctcgcccgcc agcagctggc tcaattgcca
2641 gagtcccagg gccgccaggg cgatgacggc aacccacagg aggaactgcc cacccggagc
2701 ctccgcgatg gtggccaggg cacctgaatt cgaggcctca tcacccgaac cgccggatcc
2761 agtggcgatg cgcaccgcga tccacccgat gaggatgtgc agtatgccca ggacaatgaa
2821 accacctctg gccagggtgg tcagcgcggg gtggtcctcg gcctggtcgg cagcccgttc
2881 gatcgtccgt ttcgcggatc tggtgtcgcc cttatccata gctcccattg aaccgccttg
2941 aggggtgggc ggccactgtc agggcggatt gtgatctgaa ctgtgatgtt ccatcaaccc
```

# FIGURE 26

1. L131
2. S.avermitilis
3. T.fusca
4. Consensus

```
             1                                                   50
1  (1)  --------MRLTRSLSAASVIVFALLLALLGISPAQAAG-----------
2  (1)  --------MRRSRITAYVTSLLLAVGCALTGAATAQASPA----------
3  (1)  VGSGPRAATRRRLFLGIPALVLVTALTLVLAVPTGRETLWRMWCEATQDW
4  (1)          MRRSRFLA  ALILLTLA AL GAA ARAAP

             51                                                  100
1  (32)  ---------------------------P-AYVALGDSYSSGNGAGSYID
2  (33)  -------------------------AAATGYVALGDSYSSGVGAGSYLS
3  (51)  CLGVPVDSRGQPAEDGEFLLLSPVQAATWGNYYALGDSYSSGDGARDYYP
4  (51)                           A A  YVALGDSYSSG GAGSY

              101                                                 150
1   (53)  SSGD---CHRSNNAYPARWAAANAP---SSFTFAACSGAVTTDVIN----
2   (57)  SSGD---CKRSSKAYPYLWQAAHSP---SSFSFMACSGARTGDVLA----
3  (101)  GTAVKGGCWRSANAYPELVAEAYDFA--GHLSFLACSGQRGYAMLDAIDE
4  (101)  SSGD   C RSTKAYPALWAAAHA    SSFSF ACSGARTYDVLA

              151                                                 200
1   (93)  --NQLGALNAST--GLVSITIGGNDAGFADAMTTCVTS------SDSTCL
2   (97)  --NQLGTLNSST--GLVSLTIGGNDAGFSDVMTTCVLQ------SDSACL
3  (149)  VGSQLDWNSPHT--SLVTIGIGGNDLGFSTVLKTCMVR------VPLLDS
4  (151)    QL  LNS T    LVSITIGGNDAGFAD MTTCVL        SDSACL

              201                                                 250
1  (133)  NRLATATNYINTTLLA-------RLDAVYSQIKARAPNARVVVLGYPRMY
2  (137)  SRINTAKAYVDSTLPG-------QLDSVYTAISTKAPSAHVAVLGYPRFY
3  (191)  KACTDQEDAIRKRMAKF----ETTFEELISEVRTRAPDARILVVGYPRIF
4  (201)   RIA AK YI  TLPA       RLDSVYSAI TRAP ARVVVLGYPRIY

              251                                                 300
1  (176)  LASNPWYCLGLSNTKRAAINTTADTLNSVISSRATAH-----------GF
2  (180)  KLGG-SCLAGLSETKRSAINDAADYLNSAIAKRAADH-----------GF
3  (237)  PEEPTGAYYTLTASNQRWLNETIQEFNQQLAEAVAVHDEEIAASGGVGSV
4  (251)    SG    LGLS TKRAAINDAAD LNSVIAKRAADH           GF

              301                                                 350
1  (215)  RFGDVRPTFNNHELFFGNDWLHSLTLP-----------------VWESYH
2  (218)  TFGDVKSTFTGHEICSSSTWLHSLDLLN----------------IGQSYH
3  (287)  EFVDVYHALDGHEIGSDEPWVNGVQLRDLATG---------VTVDRSTFH
4  (301)  TFGDV  TF GHELCSA PWLHSLTLP                 V  SYH

              351                                          395
1  (248)  PTSTGHQSGYLPVLNANSST------------------------
2  (252)  PTAAGQSGGYLPVMNSVA--------------------------
3  (328)  PNAAGHRAVGERVIEQIETGPGRPLYATFAVVAGATVDTLAGEVG
4  (351)  PTA GHAAGYLPVLNSI T
```

FIGURE 27

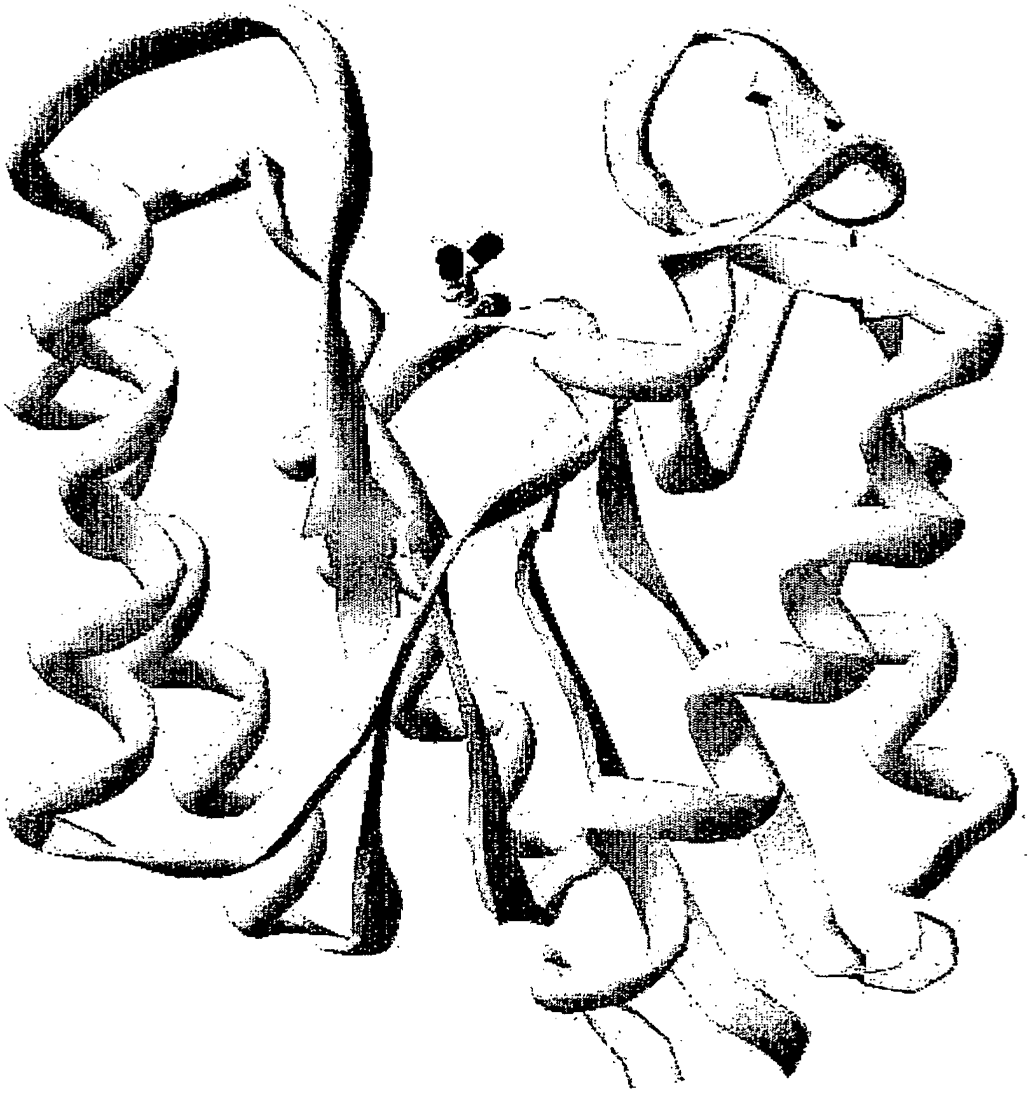

FIGURE
28

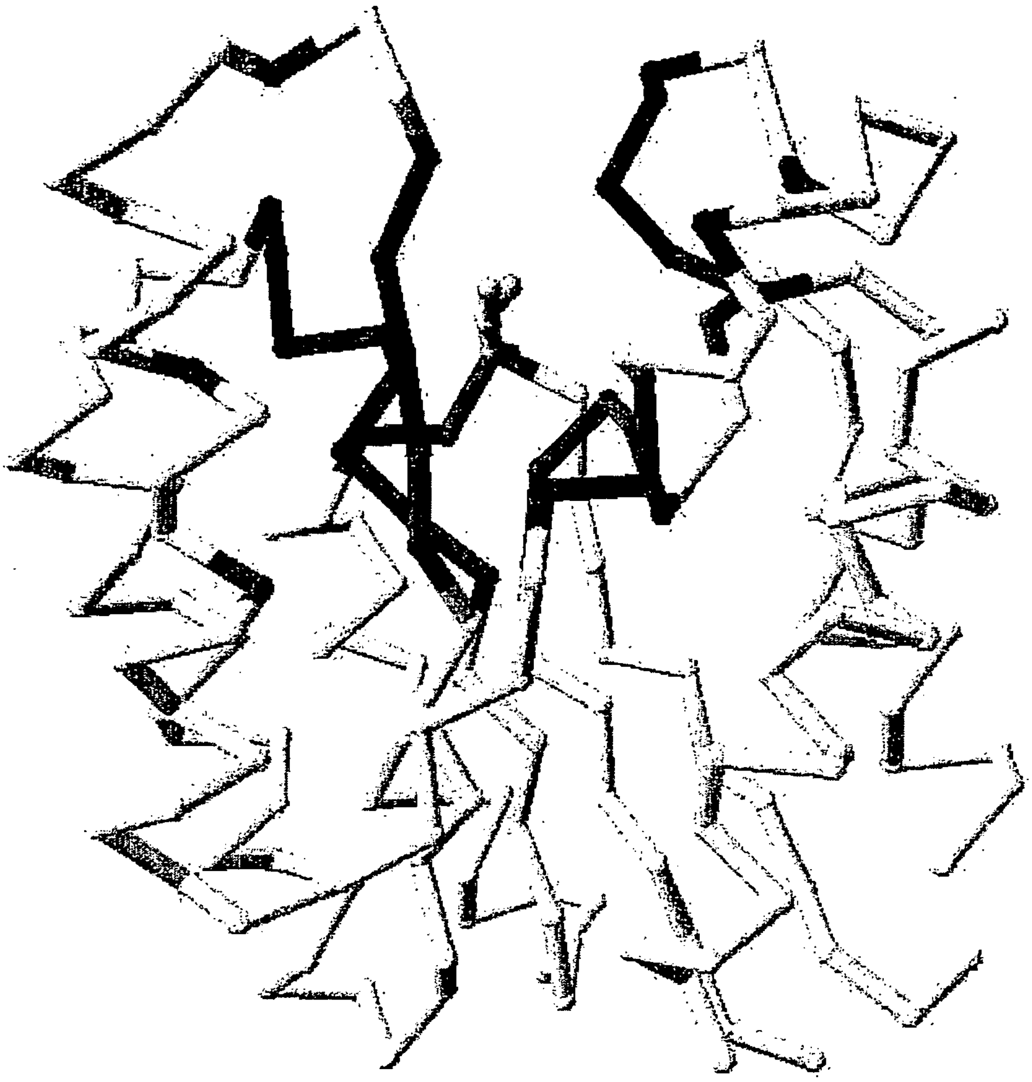

FIGURE 29

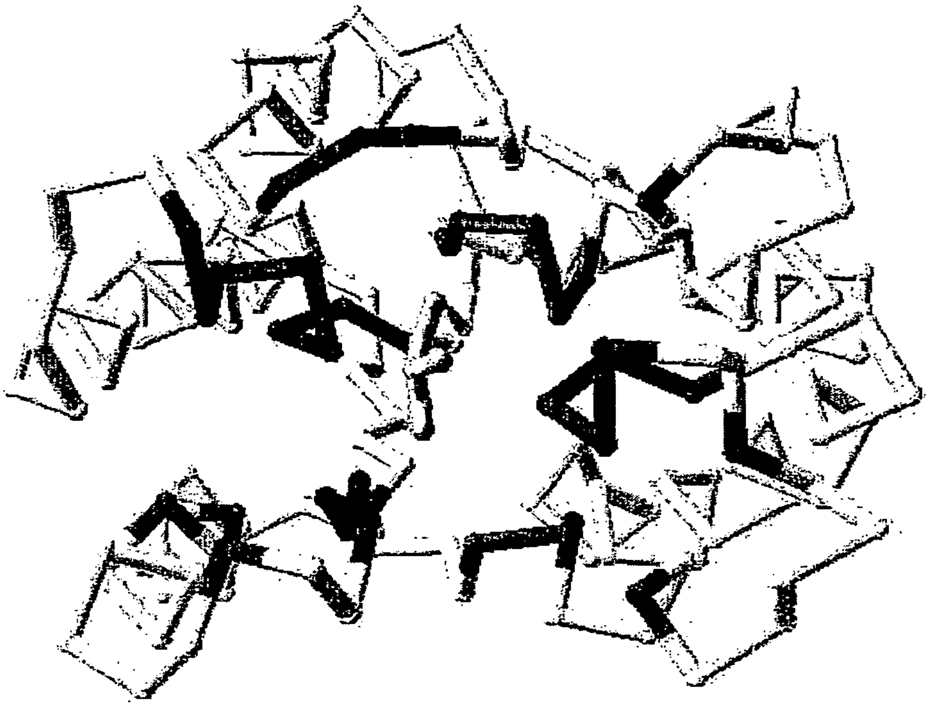

FIGURE 30

```
1DEO    T T V Y L A G D S T M A K n - - - - - - - - - - - - - - - - - - - - - - - G G G S G T N G W G E Y L
        s1s1s1s1 s1 s1s1h?h?h?h?                                                   h1h1h1h1h1
1IVN    A D T L L I L G D S L S A G - - - - - - - - - - - - - - - - - - - - - - - Y R M S A S A A W P A L L
        s1s1s1s1 s1 s1s1h h h h                                                       h1h1h1h1h1
P10480  I V M F G D S L S D T g k m y s k m r g y l p s s p p y y e G R F S N G P V W L E Q L

1DEO    A S Y L S A T V - - - - - - - - - - - - - - - V N D A V A G R S - - - A R S Y T R E G R F E N I A D VV
        h1h1h1 s2 s2 s2                       s2s2 s2 s2 s2   h3   h3h3 h3h3h3h3h3h3h3h3h3h3h3h3h3
1IVN    N D K W q s k - - - - - - - - - - - - t s v V N A S I S G D T - - - - - - S Q Q G L A R L P A L L KQ
        h1h1h1 s2?s2?                    s2?s2s2s2s2 s2 s2 s2                h3h3h3h3h3h3h3h3h3h3h3h3h3
P10480  T N E F P G L T i a n e a e g g p t a v a Y N K I S W N P K y q v I N N L D Y E V T Q F L Q K D SF

1DEO    T A G D Y V I V E F G H N D G g s l s t d n g r t d c s g t g a E v C Y S V Y D G V N E T I L T FP
            s4s4 s4 s4s4s4     ? ? ? ? ? ? ? ? ? ? ? ? ? ? ? ? ? ? ? ? s?s?s?s?s?s?s?s?s?s?s?s?h4h4h4
1IVN    H Q P R W V L V E L G G N D G - - - - - - - - - - - - - - - - - - - - - - - - - - - L R G F Q P Q Q TE
        h3 s4s4s4 s4 s4s4                                                              h4h4h4h4h4
P10480  K P D D L V I L W V G A N D Y - - - - - - - - - - - - - - - - - - - - - - - - L A Y G W N T E Q D A K R VR

1DEO    A Y L E N A A K L F T - A K G A K - - - - - V I L S S Q T P - - - - - - N N P W E T G T F V N S P TR
        h4h4h4h4h4 h4 h4h4h4h4h4 h4 s5       s5 s5 s5 s5 s5
1IVN    Q T L R Q I L Q D V K a A N A E P l l m q i R L P A N Y G R - - - - - - - - - - - - - - - - - - - RY
        h4h4h4h4h4 h4 h4h4h4h4h4h4 s5s5s5 s5s5s5s5?s5?s5?s5?s5?                                        h5
P10480  D A I S D A A N R M V - L N G A K - - - - - E I L L F N L P d l g q n P S A R S Q K V V E A A S HV

1DEO    F V E Y A E L A A E V A - - - - - - - - - - - - - - - - G V E Y V D H W S Y V D S I Y E T L G N A t vn
        h5h5h5h5h5 h5 h5h5h5h5h5h5                     s6s6s6s6?h6h6h6h6h6h6h6h6h6h6h6 h h h h
1IVN    N E A F S A I Y P K L A k e - - - - - - - - - - - - - f D V P L L P F F M E E V Y L K P Q W - - - - - - --
        h5h5h5h5h5 h5 h5h5h5h5h5h5h5h5       h5   s6s6s6s6? h6h6h6h6h6   s
P10480  S A Y H N Q L L L N L A r q l a p t g m v k l f e i D K Q F A E M L R D P Q N F G L S D Q R N a cy

1DEO    - - - - - - - - - - - - - - - - - - - - - - - - - - - - - - - - - - - - - - - - - - - - - - - - - - --

1IVN    - - - - - - - - - - - - - - - - - - - - - - - - - - - - - - - - - - - - - - - - - - - - - - - - - - --

P10480  g g s y v w k p f a s r s a s t d s q l s a f n p q e r l a i a g n p l l a q a v a s p m a a r sa

1DEO    - - - - - - s y F P I D H T H T S P A G A E V V A E A F L K A V V C T G T S L K S V L T T T S F EG
                    h         s?s?s? h7h7h7h7 h7 h7 h7 h7h7h7h7h7h7h7 h7h7h7h7   h?h?h?
1IVN    - - - - - - - - M Q D D G I H P N R D A Q P F I A D W M A K Q L Q P L V N H D S L E
                        s s       s s s   h7h7h7 h7 h7 h7 h7h7h7h7h7h7h7 h7h7h7h7
P10480  s t l n c e g k M F W D Q V H P T T V V H A A L S E P A A T F I E S Q Y E F L A H -
```

FIGURE 31

```
1DEOm     T T V Y  L  A G D S T M A K n - -  - - - - - - - - - -  -  -  -  -  - - - - G G G S G T N G W G E Y L
          s1s1s1s1 s1 s1s1h?h?h?h?                                                            h1h1h1h1h1
1IVNm   A D T L L  I  L G D S L S A G - - -  - - - - - - - - - -  -  -  -  -  - - - - Y R M S A S A A W P A L L
          s1s1s1s1 s1 s1s1h h h h                                                               h1h1h1h1h1
P10480m     I V  M  F G D S L S D T g k m  y s k m r g y l  p  s  s  p  p y y e G R F S N G P V W L E Q L

1DEOm   A S Y L S  A  T V - - - - - - - - - -  - - - - V N D A  V  A  G  R  S - - -     A R S Y T R E G R F E N IA
        h1h1h1  s2 s2 s2                     s2s2s2s2s2     h3                 h3h3h3h3h3h3h3h3h3h3h3h3
1IVNm   N D K W q  s  k - - - - - - - - - - -  - t s v V N A S  I  S  G  D  T - - - - - - S Q Q G L A    R L P A LL
        h1h1h1  s2?s2?                   s2?s2s2s2s2s2s2s2                           h3h3h3h3h3  h3h3h3h3h3
P10480m T N E F P  G  L T i a n e a e g g p  t a v a Y N K I  S  W  N  P  K          y q v I N N L D Y E V T Q F LQ

1DEOm   D   V V T  A  G D Y V I V E F G H N  D G g s l s t d  n  g  r  t  d c s g t g a E v C Y S V Y D G V N E TI
        h3h3       s4 s4s4s4s4s4         ? ?  ? ? ? ? ? ? ? ?  ?  ?  ?  ?  ? ? ? ? ? ? s?s?s?s?s?s?s?s?s?s?s?s?
1IVNm   K Q H Q P       R W V L V E L G G N  D G - - - - - - -  -  -  -  -  - - - - - - - - - - - - - - - - L R G F QP
        h3h3h3        s4s4s4s4s4s4                                                                       h4
P10480m K D S F K  P  D D L V I L W V G A N  D Y - - - - - - -  -  -  -  -  - - - - - - - - - - - L A Y G W N T E Q DA

1DEOm   L T F P A  Y  L E N A A K L F T A K  G A K V I L S S  Q  T  P  N  N P W E T G T F V N S P T R
          h4h4h4h4 h4 h4h4h4h4h4h4h4h4h4h4    s5s5s5s5s5s5
1IVNm   Q Q T E Q  T  L R Q I L Q D V K a A  N A E P l l m q  i  R  L  P  A N Y G R - - - - - - - - - R Y N E A
        h4h4h4h4h4 h4 h4h4h4h4h4h4h4h4h4h4    s5s5s5s5s5s5s5?s5?s5?s5?s5?                          h5h5h5h5h5h5
P10480m K R V R D  A  I S D A A N R M V L N  G A K E I L L F  N  L  P  d  l g q n P S A R S Q K V V E A A S H V SA

1DEOm     F V E Y  A  E L A A E V A - - - -  - - - - - - - G  V  E  Y  V  D H W S Y V D S I Y E T L G N A t v n --
          h5h5h5h5 h5 h5h5h5h5h5h5h5                        s6 s6 s6 s6?h6h6h6h6h6h6h6h6h6h6   h h h h
1IVNm     F S A I  Y  P K L A k e - - - - -  - - - - - - f D  V  P  L  L  P F F M E E V Y       L K P Q W - - --
        h5h5h5h5h5 h5 h5h5h5                   h5  s6s6s6s6?  h6 h6 h6 h6h6      s
P10480m Y H N Q L  L  L N L A r q l a p t g  m v k l f e i D  K  Q  F  A  E M L R D P Q N F G L S D Q R N a c y gg

1DEOm   - - - - -  -  - - - - - - - - - - -  - - - - - - - -  -  -  -  -  - - - - - - - - - - - - - - - - - - - --

1IVNm   - - - - -  -  - - - - - - - - - - -  - - - - - - - -  -  -  -  -  - - - - - - - - - - - - - - - - - - - --

P10480m s y v w k  p  f a s r s a s t d s q  l s a f n p q e  r  l  a  i  a g n p l l a q a v a s p m a a r s a st

1DEOm   - - - - s  y  F P I D H T H T S P A  G A E V V A E A  F  L  K  A  V V C T G T S L K S V L T T T S F E G TC
                h               s?s?s?h7h7  h7h7h7h7h7h7h7h7  h7 h7 h7 h7 h7h7h7h7    h?h?h?
1IVNm   - - - - -  -  M Q D D G I H P N R D  A Q P F I A D W  M  A  K  Q  L Q P L V N H D S L E
                   s  s s   h7h7h7h7h7h7h7h7  h7h7h7h7h7h7h7h7  h7 h7 h7 h7 h7
P10480m l n c e g  k  M F W D Q V H P T T V  V H A A L S E P  A  A  T  F  I E S Q Y E F L A H -
```

FIGURE 32

```
1DEO     T T V Y L A G D S T M A K n - - - - - - - - - - - - - - - - - - - - G G G S G T N G W G E Y L
         s1s1s1s1 s1 s1s1h?h?h?h?                                              h1h1h1h1h1
1IVN   A D T L L I L G D S L S A G - - - - - - - - - - - - - - - - - - - - - Y R M S A S A A W P A L L
         s1s1s1s1 s1 s1s1h h h h                                                 h1h1h1h1h1
P10480     I V M F G D S L S D T g k m y s k m r g y l p s s p p y y e G R F S N G P V W L E Q L

1DEOm    T T V Y L A G D S T M A K n - - - - - - - - - - - - - - - - - - - - G G G S G T N G W G E Y L
         s1s1s1s1 s1 s1s1h?h?h?h?                                              h1h1h1h1h1
1IVNm  A D T L L I L G D S L S A G - - - - - - - - - - - - - - - - - - - - - Y R M S A S A A W P A L L
         s1s1s1s1 s1 s1s1h h h h                                                 h1h1h1h1h1
P10480m    I V M F G D S L S D T g k m y s k m r g y l p s s p p y y e G R F S N G P V W L E Q L

1DEO     A S Y L S A T V - - - - - - - - - - - - - - V N D A V A G R S - - - A R S Y T R E G R F E N I A D VV
         h1h1h1 s2 s2 s2                          s2s2 s2 s2 s2    h3    h3h3 h3h3h3h3h3h3h3h3h3h3h3h3
1IVN     N D K W q s k - - - - - - - - - - - t s v V N A S I S G D T - - - - - - S Q Q G L A R L P A L L KQ
         h1h1h1 s2?s2?                 s2?s2s2s2s2 s2 s2 s2                h3h3h3h3h3h3h3h3h3h3h3h3
P10480   T N E F P G L T i a n e a e g g p t a v a Y N K I S W N P K y q v I N N L D Y E V T Q F L Q K D SF

1DEOm    A S Y L S A T V - - - - - - - - - - - - - - V N D A V A G R S - - -    A R S Y T R E G R F E N IA
         h1h1h1 s2 s2 s2                          s2s2 s2 s2 s2    h3          h3h3h3h3h3h3h3h3h3h3h3h3
1IVNm    N D K W q s k - - - - - - - - - - - t s v V N A S I S G D T - - - - - - S Q Q G L A    R L P A LL
         h1h1h1 s2?s2?                 s2?s2s2s2s2 s2 s2 s2                h3h3h3h3h3  h3h3h3h3h3h3
P10480m  T N E F P G L T i a n e a e g g p t a v a Y N K I S W N P K         y q v I N N L D Y E V T Q F LQ

1DEO     T A G D Y V I V E F G H N D G g s l s t d n g r t d c s g t g a E v C Y S V Y D G V N E T I L T FP
              s4s4 s4 s4s4s4           ? ? ? ? ? ? ? ? ? ? ? ? ? ? ? ? ? ? ? ? s?s?s?s?s?s?s?s?s?s?s?h4h4h4
1IVN     H Q P R W V L V E L G G N D G - - - - - - - - - - - - - - - - - - - - - - - - - L R G F Q P Q Q TE
         h3  s4s4s4 s4 s4s4                                                          h4h4h4h4h4
P10480   K P D D L V I L W V G A N D Y - - - - - - - - - - - - - - - - - - - - - L A Y G W N T E Q D A K R VR

1DEOm    D  V V T A G D Y V I V E F G H N D G g s l s t d n g r t d c s g t g a E v C Y S V Y D G V N E TI
         h3h3      s4 s4s4s4s4s4        ? ? ? ? ? ? ? ? ? ? ? ? ? ? ? ? ? ? ? ? ? s?s?s?s?s?s?s?s?s?s?s?
1IVNm    K Q H Q P      R W V L V E L G G N D G - - - - - - - - - - - - - - - - - - - - - - - - - - L R G F QP
         h3h3h3         s4s4s4s4s4s4                                                                  h4
P10480m  K D S F K P D D L V I L W V G A N D Y - - - - - - - - - - - - - - - - - - - - - L A Y G W N T E Q DA

1DEO     A Y L E N A A K L F T - A K G A K - - - - - V I L S S Q T P - - - - - N N P W E T G T F V N S P TR
         h4h4h4h4h4 h4 h4h4h4h4h4  H4   s5       s5 s5 s5 s5 s5
1IVN     Q T L R Q I L Q D V K a A N A E P l l m q i R L P A N Y G R - - - - - - - - - - - - - - - - - - RY
         h4h4h4h4h4 h4 h4h4h4h4h4h4   s5s5s5 s5s5s5s5?s5?s5?s5?                                        h5
P10480   D A I S D A A N R M V - L N G A K - - - - - E I L L F N L P d l g q n P S A R S Q K V V E A A S HV

1DEOm    L T F P A Y L E N A A K L F T A K G A K V I L S S Q T P N N P W E T G T F V N S P T R
           h4h4h4h4 h4 h4h4h4h4h4h4H4h4h4h4     s5s5s5 s5 s5 s5
```

```
1IVNm    Q Q T E Q  T  L R Q I L Q D V K a A  N A E P  l  l  m  q  i  R  L  P  A N  Y G R - - - - - - - - - - R Y
         h4h4h4h4h4 h4 h4h4h4h4h4h4h4h4h4h4     s5s5s5 s5 s5 s5 s5?s5?s5?s5?                               h5h5h5h5h5h5
P10480m  K R V R D  A  I S D A A N R M V L N  G A K E  I  L  L  F  N  L  P  d  l  g  q n P S A R S Q K V V E A A S H V SA

1DEO     F V E Y A  E  L A A E V A - - - - - - - - - - - - - - - - G  V  E  Y V  D H W S Y V D S I Y E T L G N A t vn
         h5h5h5h5h5 h5 h5h5h5h5h5h5                                   s6 s6 s6s6?h6h6h6h6h6h6h6h6h6h6h6  h h h h
1IVN     N E A F S  A  I Y P K L A k e - - - - - - - - - - - - - f  D  V  P  L L  P F F M E E V Y L K P Q W - - - - --
         h5h5h5h5h5 h5 h5h5h5h5h5h5h5h5                      h5       s6 s6 s6s6?  h6h6h6h6h6      s
P10480   S A Y H N  Q  L L L N L A r q l a p  t g m v  k  l  f  e  i  D  K  Q  F A  E M L R D P Q N F G L S D Q R N a cy

1DEOm     F V E Y   A  E L A A E V A - - - - - - - - - - - - - G  V  E  Y  V  D H  W S Y V D S I Y E T L G N A t v n --
          h5h5h5h5  h5 h5h5h5h5h5h5h5                             s6 s6 s6 s6?h6h6 h6h6h6h6h6h6h6h6h6  h h h h
1IVNm     F S A I   Y  P K L A k e - - - - - - - - - - - - f  D  V  P  L  L  P F  F M E E V Y        L K P Q W - - --
         h5h5h5h5h5 h5 h5h5h5                     h5   s6 s6 s6 s6?  h6 h6 h6 h6h6    s
P10480m  Y H N Q L  L  L N L A r q l a p t g  m v k l  f  e  i  D  K  Q  F  A  E M  L R D P Q N F G L S D Q R N a c y gg

1DEO     - - - - -  -  - - - - - - - - - - - - - - - - - - - - - - - - - - - - - - - - - - - - - - - - - - - - - --
1IVN     - - - - -  -  - - - - - - - - - - - - - - - - - - - - - - - - - - - - - - - - - - - - - - - - - - - - - --
P10480   g g s y v  w  k p f a s r s a s t d  s q l s  a  f  n  p  q  e  r  l  a i  a g n p l L a q a v a s p m a a r sa
1DEOm    - - - - -  -  - - - - - - - - - - - - - - - - - - - - - - - - - - - - - - - - - - - - - - - - - - - - - --
1IVNm    - - - - -  -  - - - - - - - - - - - - - - - - - - - - - - - - - - - - - - - - - - - - - - - - - - - - - --
P10480m  s y v w k  p  f a s r s a s t d s q  l s a f  n  p  q  e  r  l  a  i  a g  n p l l a Q a v a s p m a a r s a st

1DEO     - - - - -  -  s y F P I D H T H T S  P A G A  E  V  V  A  E  A  F  L  K A  V V C T G T S L K S V L T T T S F EG
                       h                  s?s?s?  h7h7h7h7 h7 h7 h7 h7 h7 h7 h7 h7 h7h7 h7h7h7h7    h?h?h?
1IVN     - - - - -  -  - - M Q D D G I H P N  R D A Q  P  F  I  A  D  W  M  A  K Q  L Q P L V N H D S L E
                           s s        s s s     h7h7h7 h7 h7 h7 h7 h7 h7 h7 h7 h7h7 h7h7h7h7
P10480   s t l n c  e  g k M F W D Q V H P T  T V V H  A  A  L  S  E  P  A  A  T F  I E S Q Y E F L A H -

1DEOm    - - - - s  y  F P I D H T H T S P A  G A E V  V  A  E  A  F  L  K  A  V V  C T G T S L K S V L T T T S F E G TC
                 h                s?s?s?h7h7 h7h7h7h7 h7 h7 h7 h7 h7 h7 h7 h7 h7h7 h7h7    h?h?h?
1IVNm    - - - - -  -  M Q D D G I H P N R D  A Q P F  I  A  D  W  M  A  K  Q  L Q  P L V N H D S L E
                    s  s s  h7h7h7h7h7h7h7h7  h7h7h7h7 h7 h7 h7 h7 h7 h7 h7 h7 h7
P10480m  l n c e g  k  M F W D Q V H P T T V  V H A A  L  S  E  P  A  A  T  F  I E  S Q Y E F L A H -
```

FIGURE 33

```
                    10        20        30        40        50
60

....*....|....*....|....*....|....*....|....*....|....*....|
1IVN_A        4 LLILGDSLSAG-------------------YRMSASAAWPALLNDKWqsk---
------- 34
P10480       28
IVMFGDSLSDTgkmyskmrgylpssppyyeGRFSNGPVWLEQLTNEFPGLTianeaeggp 87

                    70        80        90       100       110
120

....*....|....*....|....*....|....*....|....*....|....*....|
1IVN_A       35 -tsvVNASISGDT----------------------------
SQQGLARLPALLKQHQPRW 65
P10480       88 tavaYNKISWNPKyq----------------------
vINNLDYEVTQFLQKDSFKPDDL 125

                   130       140       150       160       170
180

....*....|....*....|....*....|....*....|....*....|....*....|
1IVN_A       66 VLVELGGNDG-------------------------------------
LRGFQPQQTEQT 87
P10480      126 VILWVGANDY-------------------------------LA--
YGWNTEQDAKRVRDA 152

                   190       200       210       220       230
240

....*....|....*....|....*....|....*....|....*....|....*....|
1IVN_A       88 LRQILQDVKaANAEPllmqiRLPANYGR------------------------
------- 115
P10480      153 ISDAANRMV-LNGAK-----EILLFNLPdlg----------------------
----qnP 180

                   250       260       270       280       290
300

....*....|....*....|....*....|....*....|....*....|....*....|
1IVN_A      116 ------------RYNEAFSAIYPKLAke---------------------
fDVPLLPFFME 142
P10480      181 SARSQKVVEAASHVSAYHNQLLLNLArqlaptg----------
mvklfeiDKQFAEMLRD 230

                   310       320       330       340       350
360

....*....|....*....|....*....|....*....|....*....|....*....|
1IVN_A      143 EVYLKPQW---------------------------------------------
------- 150
P10480      231
PQNFGLSDQRNacyggsyvwkpfasrsastdsqlsafnpqerlaiagnpllaqavaspma 290

                   370       380       390       400
                ....*....|....*....|....*....|....*....|
1IVN_A      151 ------------MQDDGI---------HPNRDAQPFIADWM 170
P10480      291 arsastlncegkMFWDQV---------HPTTVVHAALSEPA 322
```

FIGURE 34

```
                      1                                                 50
   P10480       (1) MKKWFVCLLGLVALTVQAADSRPAFSRIVMFGDSLSDTGKMYSKMRGYLP
   A. sal       (1) ------------------ADTRPAFSRIVMFGDSLSDTGKMYSKMRGYLP
   A. hyd       (1) ------------------ADSRPAFSRIVMFGDSLSDTGKMYSKMRGYLP
Consensus       (1)                   AD*RPAFSRIVMFGDSLSDTGKMYSKMRGYLP
                    51                                               100
   P10480      (51) SSPPYYEGRFSNGPVWLEQLTNEFPGLTIANEAEGGPTAVAYNKISWNPK
   A. sal      (33) SSPPYYEGRFSNGPVWLEQLTKQFPGLTIANEAEGGATAVAYNKISWNPK
   A. hyd      (33) SSPPYYEGRFSNGPVWLEQLTKQFPGLTIANEAEGGATAVAYNKISWNPK
Consensus      (51) SSPPYYEGRFSNGPVWLEQLT**FPGLTIANEAEGG*TAVAYNKISWNPK
                    101                                              150
   P10480     (101) YQVINNLDYEVTQFLQKDSFKPDDLVILWVGANDYLAYGWNTEQDAKRVR
   A. sal      (83) YQVINNLDYEVTQFLQKDSFKPDDLVILWVGANDYLAYGWNTEQDAKRVR
   A. hyd      (83) YQVINNLDYEVTQFLQKDSFKPDDLVILWVGANDYLAYGWNTEQDAKRVR
Consensus     (101) YQVINNLDYEVTQFLQKDSFKPDDLVILWVGANDYLAYGWNTEQDAKRVR
                    151                                              200
   P10480     (151) DAISDAANRMVLNGAKEILLFNLPDLGQNPSARSQKVVEAASHVSAYHNQ
   A. sal     (133) DAISDAANRMVLNGAKQILLFNLPDLGQNPSARSQKVVEAVSHVSAYHNK
   A. hyd     (133) DAISDAANRMVLNGAKQILLFNLPDLGQNPSARSQKVVEAVSHVSAYHNQ
Consensus     (151) DAISDAANRMVLNGAK*ILLFNLPDLGQNPSARSQKVVEA*SHVSAYHN*
                    201                                              250
   P10480     (201) LLLNLARQLAPTGMVKLFEIDKQFAEMLRDPQNFGLSDQRNACYGGSYVW
   A. sal     (183) LLLNLARQLAPTGMVKLFEIDKQFAEMLRDPQNFGLSDVENPCYDGGYVW
   A. hyd     (183) LLLNLARQLAPTGMVKLFEIDKQFAEMLRDPQNFGLSDVENPCYDGGYVW
Consensus     (201) LLLNLARQLAPTGMVKLFEIDKQFAEMLRDPQNFGLSD**N*CY*G*YVW
                    251                                              300
   P10480     (251) KPFASRSASTDSQLSAFNPQERLAIAGNPLLAQAVASPMAARSASTLNCE
   A. sal     (233) KPFATRSVSTDRQLSAFSPQERLAIAGNPLLAQAVASPMARRSASPLNCE
   A. hyd     (233) KPFATRSVSTDRQLSAFSPQERLAIAGNPLLAQAVASPMARRSASPLNCE
Consensus     (251) KPFA*RS*STD*QLSAF*PQERLAIAGNPLLAQAVASPMA*RSAS*LNCE
                    301                                 336
   P10480     (301) GKMFWDQVHPTTVVHAALSEPAATFIESQYEFLAH-
   A. sal     (283) GKMFWDQVHPTTVVHAALSERAATFIETQYEFLAHG
   A. hyd     (283) GKMFWDQVHPTTVVHAALSERAATFIANQYEFLAH-
Consensus     (301) GKMFWDQVHPTTVVHAALSE*AATFI**QYEFLAH*
```

FIGURE 35

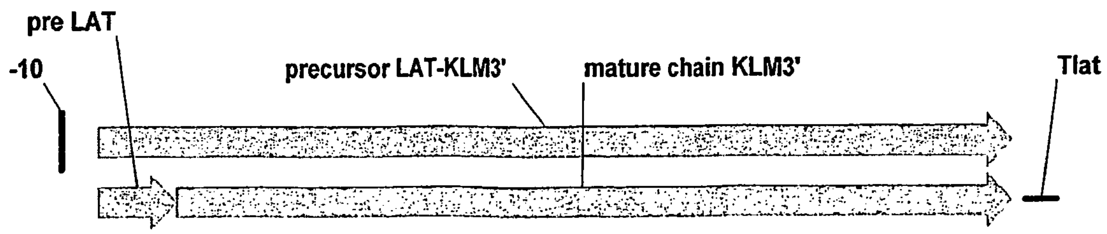


Gene construct for KLM3' expression

1182 bp

FIGURE 36

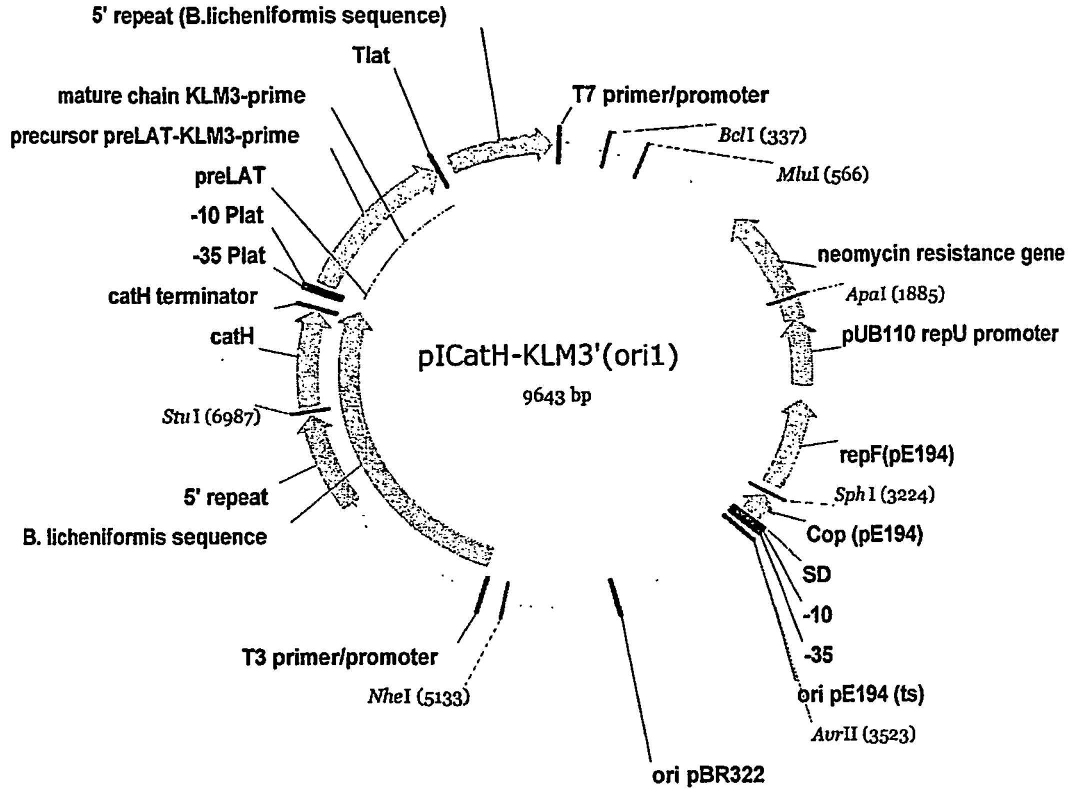
5' repeat (B.licheniformis sequence)
Tlat
mature chain KLM3-prime
precursor preLAT-KLM3-prime
preLAT
-10 Plat
-35 Plat
catH terminator
catH
StuI (6987)
5' repeat
B. licheniformis sequence
T3 primer/promoter
NheI (5133)
ori pBR322
T7 primer/promoter
BclI (337)
MluI (566)
neomycin resistance gene
ApaI (1885)
pUB110 repU promoter
repF(pE194)
SphI (3224)
Cop (pE194)
SD
-10
-35
ori pE194 (ts)
AvrII (3523)
pICatH-KLM3'(ori1)
9643 bp

# FIGURE 37

```
                                                          -35
   1  GCTTTTCTTT TGGAAGAAAA TATAGGGAAA ATGGTACTTG TTAAAAATTC GGAATATTTA
      CGAAAAGAAA ACCTTCTTTT ATATCCCTTT TACCATGAAC AATTTTTAAG CCTTATAAAT
       -10                                        M  K  Q  Q  K  R  L ·
  61  TACAATATCA TATGTTTCAC ATTGAAAGGG GAGGAGAATC ATGAAACAAC AAAAACGGCT
      ATGTTATAGT ATACAAAGTG TAACTTTCCC CTCCTCTTAG TACTTTGTTG TTTTTGCCGA
      · Y  A  R  L  L  T  L  L  F  A  L  I  F  L  L  P  H  S  A  A ·
 121  TTACGCCCGA TTGCTGACGC TGTTATTTGC GCTCATCTTC TTGCTGCCTC ATTCTGCAGC
      AATGCGGGCT AACGACTGCG ACAATAAACG CGAGTAGAAG AACGACGGAG TAAGACGTCG
      · S  A  A  D  T  R  P  A  F  S  R  I  V  M  F  G  D  S  L  S ·
 181  TTCAGCAGCA GATACAAGAC CGGCGTTTAG CCGGATCGTC ATGTTTGGAG ATAGCCTGAG
      AAGTCGTCGT CTATGTTCTG GCCGCAAATC GGCCTAGCAG TACAAACCTC TATCGGACTC
      · D  T  G  K  M  Y  S  K  M  R  G  Y  L  P  S  S  P  P  Y  Y ·
 241  CGATACGGGC AAAATGTATA GCAAAATGAG AGGCTATCTT CCGTCAAGCC CGCCGTATTA
      GCTATGCCCG TTTTACATAT CGTTTTACTC TCCGATAGAA GGCAGTTCGG GCGGCATAAT
      · E  G  R  F  S  N  G  P  V  W  L  E  Q  L  T  K  Q  F  P  G ·
 301  TGAAGGCCGC TTTAGCAATG GACCGGTCTG GCTGGAACAA CTGACGAAAC AATTTCCGGG
      ACTTCCGGCG AAATCGTTAC CTGGCCAGAC CGACCTTGTT GACTGCTTTG TTAAAGGCCC
      · L  T  I  A  N  E  A  E  G  G  A  T  A  V  A  Y  N  K  I  S ·
 361  ACTGACGATC GCTAATGAAG CAGAAGGAGG AGCAACAGCG GTCGCCTATA ACAAAATCAG
      TGACTGCTAG CGATTACTTC GTCTTCCTCC TCGTTGTCGC CAGCGGATAT TGTTTTAGTC
      · W  D  P  K  Y  Q  V  I  N  N  L  D  Y  E  V  T  Q  F  L  Q ·
 421  CTGGGACCCG AAATATCAGG TCATCAACAA CCTGGACTAT GAAGTCACAC AGTTTCTTCA
      GACCCTGGGC TTTATAGTCC AGTAGTTGTT GGACCTGATA CTTCAGTGTG TCAAAGAAGT
      · K  D  S  F  K  P  D  D  L  V  I  L  W  V  G  A  N  D  Y  L ·
 481  GAAAGACAGC TTTAAACCGG ATGATCTGGT CATCCTTTGG GTCGGCGCCA ATGATTATCT
      CTTTCTGTCG AAATTTGGCC TACTAGACCA GTAGGAAACC CAGCCGCGGT TACTAATAGA
      · A  Y  G  W  N  T  E  Q  D  A  K  R  V  R  D  A  I  S  D  A ·
 541  GGCGTATGGC TGGAACACAG AACAAGATGC CAAAAGAGTC AGAGATGCCA TCAGCGATGC
      CCGCATACCG ACCTTGTGTC TTGTTCTACG GTTTTCTCAG TCTCTACGGT AGTCGCTACG
      · A  N  R  M  V  L  N  G  A  K  Q  I  L  L  F  N  L  P  D  L ·
 601  CGCTAATAGA ATGGTCCTGA ACGGCGCCAA ACAAATCCTG CTGTTTAACC TGCCGGATCT
      GCGATTATCT TACCAGGACT TGCCGCGGTT TGTTTAGGAC GACAAATTGG ACGGCCTAGA
      · G  Q  N  P  S  A  R  S  Q  K  V  V  E  A  V  S  H  V  S  A ·
 661  GGGACAAAAT CCGAGCGCCA GAAGCCAAAA AGTCGTCGAA GCAGTCAGCC ATGTCAGCGC
      CCCTGTTTTA GGCTCGCGGT CTTCGGTTTT TCAGCAGCTT CGTCAGTCGG TACAGTCGCG
      · Y  H  N  K  L  L  L  N  L  A  R  Q  L  A  P  T  G  M  V  K ·
 721  CTATCATAAC AAACTGCTGC TGAACCTGGC AAGACAATTG GCACCGACGG GAATGGTTAA
      GATAGTATTG TTTGACGACG ACTTGGACCG TTCTGTTAAC CGTGGCTGCC CTTACCAATT
      · L  F  E  I  D  K  Q  F  A  E  M  L  R  D  P  Q  N  F  G  L ·
 781  ATTGTTTGAA ATTGACAAAC AGTTTGCCGA AATGCTGAGA GATCCGCAAA ATTTTGGCCT
      TAACAAACTT TAACTGTTTG TCAAACGGCT TTACGACTCT CTAGGCGTTT TAAAACCGGA
      · S  D  V  E  N  P  C  Y  D  G  G  Y  V  W  K  P  F  A  T  R ·
 841  GAGCGATGTC GAAAACCCGT GCTATGATGG CGGATATGTC TGGAAACCGT TTGCCACAAG
      CTCGCTACAG CTTTTGGGCA CGATACTACC GCCTATACAG ACCTTTGGCA AACGGTGTTC
      · S  V  S  T  D  R  Q  L  S  A  F  S  P  Q  E  R  L  A  I  A ·
 901  AAGCGTCAGC ACGGATAGAC AACTGTCAGC GTTTAGCCCG CAAGAAAGAC TGGCAATCGC
      TTCGCAGTCG TGCCTATCTG TTGACAGTCG CAAATCGGGC GTTCTTTCTG ACCGTTAGCG
      · G  N  P  L  L  A  Q  A  V  A  S  P  M  A  R  R  S  A  S  P ·
 961  CGGAAATCCG CTTTTGGCAC AAGCAGTTGC TTCACCGATG GCAAGAAGAT CAGCAAGCCC
      GCCTTTAGGC GAAAACCGTG TTCGTCAACG AAGTGGCTAC CGTTCTTCTA GTCGTTCGGG
      · L  N  C  E  G  K  M  F  W  D  Q  V  H  P  T  T  V  V  H  A ·
1021  GCTGAATTGC GAAGGCAAAA TGTTTTGGGA TCAGGTCCAT CCGACAACAG TTGTCCATGC
      CGACTTAACG CTTCCGTTTT ACAAAACCCT AGTCCAGGTA GGCTGTTGTC AACAGGTACG
      · A  L  S  E  R  A  A  T  F  I  E  T  Q  Y  E  F  L  A  H  G ·
1081  TGCCCTTTCA GAAAGAGCGG CGACGTTTAT CGAAACACAG TATGAATTTC TGGCCCATGG
      ACGGGAAAGT CTTTCTCGCC GCTGCAAATA GCTTTGTGTC ATACTTAAAG ACCGGGTACC
      ·stop
1141  CTGAGTTAAC AGAGGACGGA TTTCCTGAAG GAAATCCGTT TTTTTATTTT AAGCTTGGAG
      GACTCAATTG TCTCCTGCCT AAAGGACTTC CTTTAGGCAA AAAAATAAAA TTCGAACCTC
1201  ACAAGGTAAA GGATAAAACC TCGAG
      TGTTCCATTT CCTATTTTGG AGCTC
```

FIGURE 38

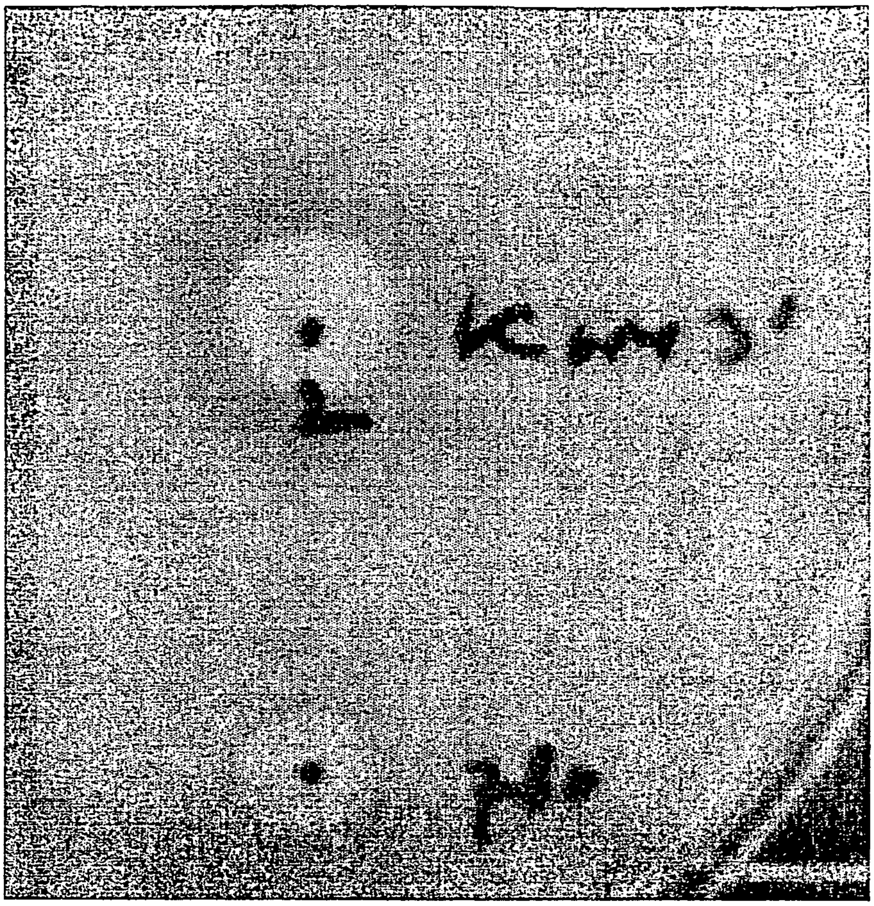

# FIGURE 39 (SEQ ID No 26)

1 ATGAAACAAC AAAAACGGCT TTACGCCCGA TTGCTGACGC TGTTATTTGC
TACTTTGTTG TTTTTGCCGA AATGCGGGCT AACGACTGCG ACAATAAACG

51 GCTCATCTTC TTGCTGCCTC ATTCTGCAGC TTCAGCAGCA GATACAAGAC
CGAGTAGAAG AACGACGGAG TAAGACGTCG AAGTCGTCGT CTATGTTCTG

101 CGGCGTTTAG CCGGATCGTC ATGTTTGGAG ATAGCCTGAG CGATACGGGC
GCCGCAAATC GGCCTAGCAG TACAAACCTC TATCGGACTC GCTATGCCCG

151 AAAATGTATA GCAAAATGAG AGGCTATCTT CCGTCAAGCC CGCCGTATTA
TTTTACATAT CGTTTTACTC TCCGATAGAA GGCAGTTCGG GCGGCATAAT

201 TGAAGGCCGC TTTAGCAATG GACCGGTCTG GCTGGAACAA CTGACGAAAC
ACTTCCGGCG AAATCGTTAC CTGGCCAGAC CGACCTTGTT GACTGCTTTG

251 AATTTCCGGG ACTGACGATC GCTAATGAAG CAGAAGGAGG AGCAACAGCG
TTAAAGGCCC TGACTGCTAG CGATTACTTC GTCTTCCTCC TCGTTGTCGC

301 GTCGCCTATA ACAAAATCAG CTGGGACCCG AAATATCAGG TCATCAACAA
CAGCGGATAT TGTTTTAGTC GACCCTGGGC TTTATAGTCC AGTAGTTGTT

351 CCTGGACTAT GAAGTCACAC AGTTTCTTCA GAAAGACAGC TTTAAACCGG
GGACCTGATA CTTCAGTGTG TCAAAGAAGT CTTTCTGTCG AAATTTGGCC

401 ATGATCTGGT CATCCTTTGG GTCGGCGCCA ATGATTATCT GGCGTATGGC
TACTAGACCA GTAGGAAACC CAGCCGCGGT TACTAATAGA CCGCATACCG

451 TGGAACACAG AACAAGATGC CAAAAGAGTC AGAGATGCCA TCAGCGATGC
ACCTTGTGTC TTGTTCTACG GTTTTCTCAG TCTCTACGGT AGTCGCTACG

501 CGCTAATAGA ATGGTCCTGA ACGGCGCCAA ACAAATCCTG CTGTTTAACC
GCGATTATCT TACCAGGACT TGCCGCGGTT TGTTTAGGAC GACAAATTGG

551 TGCCGGATCT GGGACAAAAT CCGAGCGCCA GAAGCCAAAA AGTCGTCGAA
ACGGCCTAGA CCCTGTTTTA GGCTCGCGGT CTTCGGTTTT TCAGCAGCTT

601 GCAGTCAGCC ATGTCAGCGC CTATCATAAC AAACTGCTGC TGAACCTGGC
CGTCAGTCGG TACAGTCGCG GATAGTATTG TTTGACGACG ACTTGGACCG

651 AAGACAATTG GCACCGACGG GAATGGTTAA ATTGTTTGAA ATTGACAAAC
TTCTGTTAAC CGTGGCTGCC CTTACCAATT TAACAAACTT TAACTGTTTG

701 AGTTTGCCGA AATGCTGAGA GATCCGCAAA ATTTTGGCCT GAGCGATGTC
TCAAACGGCT TTACGACTCT CTAGGCGTTT TAAAACCGGA CTCGCTACAG

751 GAAAACCCGT GCTATGATGG CGGATATGTC TGGAAACCGT TTGCCACAAG
CTTTTGGGCA CGATACTACC GCCTATACAG ACCTTTGGCA AACGGTGTTC

801 AAGCGTCAGC ACGGATAGAC AACTGTCAGC GTTTAGCCCG CAAGAAAGAC
TTCGCAGTCG TGCCTATCTG TTGACAGTCG CAAATCGGGC GTTCTTTCTG

851 TGGCAATCGC CGGAAATCCG CTTTTGGCAC AAGCAGTTGC TTCACCGATG
ACCGTTAGCG GCCTTTAGGC GAAAACCGTG TTCGTCAACG AAGTGGCTAC

901 GCAAGAAGAT CAGCAAGCCC GCTGAATTGC GAAGGCAAAA TGTTTTGGGA
CGTTCTTCTA GTCGTTCGGG CGACTTAACG CTTCCGTTTT ACAAAACCCT

951 TCAGGTCCAT CCGACAACAG TTGTCCATGC TGCCCTTTCA GAAAGAGCGG
AGTCCAGGTA GGCTGTTGTC AACAGGTACG ACGGGAAAGT CTTTCTCGCC

1001 CGACGTTTAT CGAAACACAG TATGAATTTC TGGCCCATGG CTGA
GCTGCAAATA GCTTTGTGTC ATACTTAAAG ACCGGGTACC GACT

**FIGURE 40** (SEQ ID No. 27)

```
1   ATGAAAAAAT GGTTTGTGTG TTTATTGGGA TTGGTCGCGC TGACAGTTCA GGCAGCCGAC
61  AGCCGTCCCG CCTTCTCCCG GATCGTGATG TTTGGCGACA GCCTCTCCGA TACCGGCAAG
121 ATGTACAGCA AGATGCGCGG TTACCTCCCC TCCAGCCCCC CCTACTATGA GGGCCGCTTC
181 TCCAACGGGC CCGTCTGGCT GGAGCAGCTG ACCAACGAGT TCCCGGGCCT GACCATAGCC
241 AACGAGGCGG AAGGCGGACC GACCGCCGTG GCTTACAACA AGATCTCCTG GAATCCCAAG
301 TATCAGGTCA TCAACAACCT GGACTACGAG GTCACCCAGT TCCTGCAAAA AGACAGCTTC
361 AAGCCGGACG ATCTGGTGAT CCTCTGGGTC GGCGCCAACG ACTATCTGGC CTATGGCTGG
421 AACACAGAGC AGGATGCCAA GCGGGTGCGC GACGCCATCA GCGATGCGGC CAACCGCATG
481 GTGCTGAACG GCGCCAAGGA GATACTGCTG TTCAACCTGC CGGATCTGGG CCAGAACCCC
541 TCGGCCCGCA GCCAGAAGGT GGTCGAGGCG GCCAGCCATG TCTCCGCCTA CCACAACCAG
601 CTGCTGCTGA ACCTGGCACG CCAGCTGGCT CCCACCGGCA TGGTGAAGCT GTTCGAGATC
661 GACAAGCAGT TTGCCGAGAT GCTGCGTGAT CCGCAGAACT TCGGCCTGAG CGACCAGAGG
721 AACGCCTGCT ACGGTGGCAG CTATGTATGG AAGCCGTTTG CCTCCCGCAG CGCCAGCACC
781 GACAGCCAGC TCTCCGCCTT CAACCCGCAG GAGCGCCTCG CCATCGCCGG CAACCCGCTG
841 CTGGCCCAGG CCGTCGCCAG CCCCATGGCT GCCCGCAGCG CCAGCACCCT CAACTGTGAG
901 GGCAAGATGT TCTGGGATCA GGTCCACCCC ACCACTGTCG TGCACGCCGC CCTGAGCGAG
961 CCCGCCGCCA CCTTCATCGA GAGCCAGTAC GAGTTCCTCG CCCAC
```

**FIGURE 41** (SEQ ID No. 28)

```
1   ATGAAAAAAT GGTTTGTTTG TTTATTGGGG TTGATCGCGC TGACAGTTCA GGCAGCCGAC
61  ACTCGCCCCG CCTTCTCCCG GATCGTGATG TTCGGCGACA GCCTCTCCGA TACCGGCAAA
121 ATGTACAGCA AGATGCGCGG TTACCTCCCC TCCAGCCCGC CCTACTATGA GGGCCGTTTC
181 TCCAACGGAC CCGTCTGGCT GGAGCAGCTG ACCAAGCAGT TCCCGGGTCT GACCATCGCC
241 AACGAAGCGG AAGGCGGTGC CACTGCCGTG GCTTACAACA AGATCTCCTG GAATCCCAAG
301 TATCAGGTCT ACAACAACCT GGACTACGAG GTCACCCAGT TCTTGCAGAA AGACAGCTTC
361 AAGCCGGACG ATCTGGTGAT CCTCTGGGTC GGTGCCAATG ACTATCTGGC ATATGGCTGG
421 AATACGGAGC AGGATGCCAA GCGAGTTCGC GATGCCATCA GCGATGCGGC CAACCGCATG
481 GTACTGAACG GTGCCAAGCA GATACTGCTG TTCAACCTGC CGGATCTGGG CCAGAACCCG
541 TCAGCCCGCA GTCAGAAGGT GGTCGAGGCG GTCAGCCATG TCTCCGCCTA TCACAACAAG
601 CTGCTGCTGA ACCTGGCACG CCAGCTGGCC CCCACCGGCA TGGTAAAGCT GTTCGAGATC
661 GACAAGCAAT TTGCCGAGAT GCTGCGTGAT CCGCAGAACT TCGGCCTGAG CGACGTCGAG
721 AACCCCTGCT ACGACGGCGG CTATGTGTGG AAGCCGTTTG CCACCCGCAG CGTCAGCACC
781 GACCGCCAGC TCTCCGCCTT CAGTCCGCAG GAACGCCTCG CCATCGCCGG CAACCCGCTG
841 CTGGCACAGG CCGTTGCCAG TCCTATGGCC CGCCGCAGCG CCAGCCCCCT CAACTGTGAG
901 GGCAAGATGT TCTGGGATCA GGTACACCCG ACCACTGTCG TGCACGCAGC CCTGAGCGAG
961 CGCGCCGCCA CCTTCATCGA GACCCAGTAC GAGTTCCTCG CCCACGGATG A
```

## FIGURE 42 (SEQ ID No. 29)

```
atgaacctgc gtcaatggat gggcgccgcc acggctgccc ttgccttggg cttggccgcg     60
tgcgggggcg gtgggaccga ccagagcggc aatcccaatg tcgccaaggt gcagcgcatg    120
gtggtgttcg gcgacagcct gagcgatatc ggcacctaca cccccgtcgc gcaggcggtg    180
ggcggcggca agttcaccac caacccgggc ccgatctggg ccgagaccgt ggccgcgcaa    240
ctgggcgtga cgctcacgcc ggcggtgatg ggctacgcca cctccgtgca gaattgcccc    300
aaggccggct gcttcgacta tgcgcagggc ggctcgcgcg tgaccgatcc gaacggcatc    360
ggccacaacg gcggcgcggg ggcgctgacc tacccggttc agcagcagct cgccaacttc    420
tacgcggcca gcaacaacac attcaacggc aataacgatg tcgtcttcgt gctggccggc    480
agcaacgaca ttttcttctg gaccactgcg gcggccacca gcggctccgg cgtgacgccc    540
gccattgcca cggcccaggt gcagcaggcc gcgacggacc tggtcggcta tgtcaaggac    600
atgatcgcca agggtgcgac gcaggtctac gtgttcaacc tgcccgacag cagcctgacg    660
ccggacggcg tggcaagcgg cacgaccggc caggcgctgc tgcacgcgct ggtgggcacg    720
ttcaacacga cgctgcaaag cgggctggcc ggcacctcgg cgcgcatcat cgacttcaac    780
gcacaactga ccgcggcgat ccagaatggc gcctcgttcg gcttcgccaa caccagcgcc    840
cgggcctgcg acgccaccaa gatcaatgcc ctggtgccga gcgccggcgg cagctcgctg    900
ttctgctcgg ccaacacgct ggtggcttcc ggtgcggacc agagctacct gttcgccgac    960
ggcgtgcacc cgaccacggc cggccatcgc ctgatcgcca gcaacgtgct ggcgcgcctg   1020
ctggcggata acgtcgcgca ctga                                           1044
```

## FIGURE 43 (SEQ ID No. 30)

```
  1 gtgatcgggt cgtacgtggc ggtgggggac agcttcaccg agggcgtcgg cgaccccggc
 61 cccgacgggg cgttcgtcgg ctgggccgac cggctcgccg tactgctcgc ggaccggcgc
121 cccgagggcg acttcacgta cacgaacctc gccgtgcgcg gcaggctcct cgaccagatc
181 gtggcggaac aggtcccgcg ggtcgtcgga ctcgcgcccg acctcgtctc gttcgcggcg
241 ggcggcaacg acatcatccg gcccggcacc gatcccgacg aggtcgccga gcggttcgag
301 ctggcggtgg ccgcgctgac cgccgcggcc ggaaccgtcc tggtgaccac cgggttcgac
361 acccgggggg tgcccgtcct caagcacctg cgcggcaaga tcgccacgta caacgggcac
421 gtccgcgcca tcgccgaccg ctacggctgc ccggtgctcg acctgtggtc gctgcggagc
481 gtccaggacc gcagggcgtg ggacgccgac cggctgcacc tgtcgccgga ggggcacacc
541 cgggtggcgc tgcgcgcggg gcaggccctg ggcctgcgcg tcccggccga ccctgaccag
601 ccctggccgc ccctgccgcc gcgcggcacg ctcgacgtcc ggcgcgacga cgtgcactgg
661 gcgcgcgagt acctggtgcc gtggatcggg cgccggctgc ggggcgagtc gtcgggcgac
721 cacgtgacgg ccaaggggac gctgtcgccg gacgccatca agacgcggat cgccgcggtg
781 gcctga
```

## FIGURE 44 (SEQ ID No. 31)

```
  1 atgcagacga accccgcgta caccagtctc gtcgccgtcg gcgactcctt caccgagggc
 61 atgtcggacc tgctgcccga cggctcctac cgtggctggg ccgacctcct cgccaccccgg
121 atggcggccc gctcccccgg cttccggtac gccaacctgg cggtgcgcgg gaagctgatc
181 ggacagatcg tcgacgagca ggtggacgtg gccgccgcca tgggagccga cgtgatcacg
241 ctggtcggcg ggctcaacga cacgctgcgg cccaagtgcg acatggcccg ggtgcgggac
301 ctgctgaccc aggccgtgga acggctcgcc ccgcactgcg agcagctggt gctgatgcgc
361 agtcccggtc gccagggtcc ggtgctggag cgcttccgcc cccgcatgga ggccctgttc
421 gccgtgatcg acgacctggc cgggcggcac ggcgccgtgg tcgtcgacct gtacggggcc
481 cagtcgctgg ccgaccctcg gatgtgggac gtggaccggc tgcacctgac cgccgagggc
541 caccgccggg tcgcggaggc ggtgtggcag tcgctcggcc acgagcccga ggaccccgag
601 tggcacgcgc cgatcccggc gacgccgccg ccggggtggg tgacgcgcag gaccgcggac
661 gtccggttcg cccggcagca cctgctgccc tggataggcc gcaggctgac cgggcgctcg
721 tccggggacg gcctgccggc caagcgcccg gacctgctgc cctacgagga ccccgcacgg
781 tga
```

## FIGURE 45 (SEQ ID No. 32)

```
   1 atgacgagca tgtcgagggc gagggtggcg cggcggatcg cggccggcgc ggcgtacggc
  61 ggcggcggca tcggcctggc gggagcggcg gcggtcggtc tggtggtggc cgaggtgcag
 121 ctggccagac gcagggtggg ggtgggcacg ccgacccggg tgccgaacgc gcagggactg
 181 tacggcggca ccctgcccac ggccggcgac ccgccgctgc ggctgatgat gctgggcgac
 241 tccacggccg ccgggcaggg cgtgcaccgg gccgggcaga cgccgggcgc gctgctggcg
 301 tccgggctcg cggcggtggc ggagcggccg gtgcggctgg ggtcggtcgc ccagccgggg
 361 gcgtgctcgg acgacctgga ccggcaggtg gcgctggtgc tcgccgagcc ggaccgggtg
 421 cccgacatct gcgtgatcat ggtcggcgcc aacgacgtca cccaccggat gccggcgacc
 481 cgctcggtgc ggcacctgtc ctcggcggta cggcggctgc gcacggccgg tgcggaggtg
 541 gtggtcggca cctgtccgga cctgggcacg atcgagcggg tgcggcagcc gctgcgctgg
 601 ctggcccggc gggcctcacg gcagctcgcg gcggcacaga ccatcggcgc cgtcgagcag
 661 ggcgggcgca cggtgtcgct gggcgacctg ctgggtccgg agttcgcgca gaacccgcgg
 721 gagctcttcg gccccgacaa ctaccacccc tccgccgagg ggtacgccac ggccgcgatg
 781 gcggtactgc cctcggtgtg cgccgcgctc ggcctgtggc cggccgacga ggagcacccg
 841 gacgcgctgc gccgcgaggg cttcctgccg gtggcgcgcg cggcggcgga ggcggcgtcc
 901 gaggcgggta cggaggtcgc cgccgccatg cctacggggc ctcgggggcc ctgggcgctg
 961 ctgaagcgcc ggagacggcg tcgggtgtcg gaggcggaac cgtccagccc gtccggcgtt
1021 tga
```

## FIGURE 46 (SEQ ID No. 33)

```
   1 atgggtcgag ggacggacca gcggacgcgg tacggccgtc gccgggcgcg tgtcgcgctc
  61 gccgccctga ccgccgccgt cctgggcgtg ggcgtggcgg gctgcgactc cgtgggcggc
 121 gactcacccg ctccttccgg cagcccgtcg aagcggacga ggacggcgcc cgcctgggac
 181 accagcccgg cgtccgtcgc cgccgtgggc gactccatca cgcgcggctt cgacgcctgt
 241 gcggtgctgt cggactgccc ggaggtgtcg tgggcgaccg gcagcagcgc gaaggtcgac
 301 tcgctggccg tacggctgct ggggaaggcg gacgcggccg agcacagctg gaactacgcg
 361 gtcaccgggg cccggatggc ggacctgacc gctcaggtga cgcgggcggc gcagcgcgag
 421 ccggagctgg tggcggtgat ggccggggcg aacgacgcgt gccggtccac gacctcggcg
 481 atgacgccgg tggcggactt ccgggcgcag ttcgaggagg cgatggccac cctgcgcaag
 541 aagctcccca aggcgcaggt gtacgtgtcg agcatcccgg acctcaagcg gctctggtcc
 601 cagggccgca ccaacccgct gggcaagcag gtgtggaagc tcggcctgtg cccgtcgatg
 661 ctgggcgacg cggactccct ggactcggcg gcgaccctgc ggcgcaacac ggtgcgcgac
 721 cgggtggcgg actacaacga ggtgctgcgg gaggtctgcg cgaaggaccg gcggtgccgc
 781 agcgacgacg gcgcggtgca cgagttccgg ttcggcacgg accagttgag ccactgggac
 841 tggttccacc cgagtgtgga cggccaggcc cggctggcgg agatcgccta ccgcgcggtc
 901 accgcgaaga atccctga
```

## FIGURE 47 (SEQ ID No. 34)

```
   1 ttcatcacaa cgatgtcaca acaccggcca tccgggtcat ccctgatcgt gggaatgggt
  61 gacaagcctt cccgtgacga aagggtcctg ctacatcaga aatgacagaa atcctgctca
 121 gggaggttcc atgagactgt cccgacgcgc ggccacggcg tccgcgctcc tcctcacccc
 181 ggcgctcgcg ctcttcggcg cgagcgccgc cgtgtccgcg ccgcgaatcc aggccaccga
 241 ctacgtggcc ctcggcgact cctactcctc gggggtcggc gcgggcagct acgacagcag
 301 cagtggctcc tgtaagcgca gcaccaagtc ctacccggcc ctgtgggccg cctcgcacac
 361 cggtacgcgg ttcaacttca ccgcctgttc gggcgcccgc acaggagacg tgctggccaa
 421 gcagctgacc ccggtcaact ccggcaccga cctggtcagc attaccatcg gcggcaacga
 481 cgcgggcttc gccgacacca tgaccacctg caacctccag ggcgagagcg cgtgcctggc
 541 gcggatcgcc aaggcgcgcg cctacatcca gcagacgctg cccgcccagc tggaccaggt
 601 ctacgacgcc atcgacagcc gggcccccgc agcccaggtc gtcgtcctgg gctacccgcg
 661 cttctacaag ctgggcggca gctgcgccgt cggtctctcg gagaagtccc gcgcggccat
 721 caacgccgcc gccgacgaca tcaacgccgt caccgccaag cgcgccgccg accacggctt
 781 cgccttcggg gacgtcaaca cgaccttcgc cgggcacgag ctgtgctccg gcgcccccctg
 841 gctgcacagc gtcacccttc ccgtggagaa ctcctaccac cccacggcca acggacagtc
 901 caagggctac ctgcccgtcc tgaactccgc cacctgatct cgcggctact ccgcccctga
 961 cgaagtcccg cccccgggcg gggcttcgcc gtaggtgcgc gtaccgccgt cgcccgtcgc
1021 gccggtggcc ccgccgtacg tgccgccgcc cccggacgcg gtcggttc
```

# FIGURE 48 (SEQ ID No. 35)

```
   1  ATGAAAAAAT GGTTTGTGTG TTTATTGGGA TTGGTCGCGC TGACAGTTCA
      TACTTTTTTA CCAAACACAC AAATAACCCT AACCAGCGCG ACTGTCAAGT

  51  GGCAGCCGAC AGTCGCCCCG CCTTTTCCCG GATCGTGATG TTCGGCGACA
      CCGTCGGCTG TCAGCGGGGC GGAAAAGGGC CTAGCACTAC AAGCCGCTGT

 101  GCCTCTCCGA TACCGGCAAA ATGTACAGCA AGATGCGCGG TTACCTCCCC
      CGGAGAGGCT ATGGCCGTTT TACATGTCGT TCTACGCGCC AATGGAGGGG

 151  TCCAGCCCGC CCTACTATGA GGGCCGTTTC TCCAACGGAC CCGTCTGGCT
      AGGTCGGGCG GGATGATACT CCCGGCAAAG AGGTTGCCTG GGCAGACCGA

 201  GGAGCAGCTG ACCAAACAGT TCCCGGGTCT GACCATCGCC AACGAAGCGG
      CCTCGTCGAC TGGTTTGTCA AGGGCCCAGA CTGGTAGCGG TTGCTTCGCC

 251  AAGGCGGTGC CACTGCCGTG GCTTACAACA AGATCTCCTG GAATCCCAAG
      TTCCGCCACG GTGACGGCAC CGAATGTTGT TCTAGAGGAC CTTAGGGTTC

 301  TATCAGGTCA TCAACAACCT GGACTACGAG GTCACCCAGT TCTTGCAGAA
      ATAGTCCAGT AGTTGTTGGA CCTGATGCTC CAGTGGGTCA AGAACGTCTT

 351  AGACAGCTTC AAGCCGGACG ATCTGGTGAT CCTCTGGGTC GGTGCCAATG
      TCTGTCGAAG TTCGGCCTGC TAGACCACTA GGAGACCCAG CCACGGTTAC

 401  ACTATCTGGC CTATGGCTGG AACACGGAGC AGGATGCCAA GCGGGTTCGC
      TGATAGACCG GATACCGACC TTGTGCCTCG TCCTACGGTT CGCCCAAGCG

 451  GATGCCATCA GCGATGCGGC CAACCGCATG GTACTGAACG GTGCCAAGCA
      CTACGGTAGT CGCTACGCCG GTTGGCGTAC CATGACTTGC CACGGTTCGT

 501  GATACTGCTG TTCAACCTGC CGGATCTGGG CCAGAACCCG TCAGCTCGCA
      CTATGACGAC AAGTTGGACG GCCTAGACCC GGTCTTGGGC AGTCGAGCGT

 551  GTCAGAAGGT GGTCGAGGCG GTCAGCCATG TCTCCGCCTA TCACAACCAG
      CAGTCTTCCA CCAGCTCCGC CAGTCGGTAC AGAGGCGGAT AGTGTTGGTC

 601  CTGCTGCTGA ACCTGGCACG CCAGCTGGCC CCCACCGGCA TGGTAAAGCT
      GACGACGACT TGGACCGTGC GGTCGACCGG GGGTGGCCGT ACCATTTCGA

 651  GTTCGAGATC GACAAGCAAT TTGCCGAGAT GCTGCGTGAT CCGCAGAACT
      CAAGCTCTAG CTGTTCGTTA AACGGCTCTA CGACGCACTA GGCGTCTTGA

 701  TCGGCCTGAG CGACGTCGAG AACCCCTGCT ACGACGGCGG CTATGTGTGG
      AGCCGGACTC GCTGCAGCTC TTGGGGACGA TGCTGCCGCC GATACACACC

 751  AAGCCGTTTG CCACCCGCAG CGTCAGCACC GACCGCCAGC TCTCCGCCTT
      TTCGGCAAAC GGTGGGCGTC GCAGTCGTGG CTGGCGGTCG AGAGGCGGAA

 801  CAGTCCGCAG GAACGCCTCG CCATCGCCGG CAACCCGCTG CTGGCACAGG
      GTCAGGCGTC CTTGCGGAGC GGTAGCGGCC GTTGGGCGAC GACCGTGTCC

 851  CCGTTGCCAG TCCTATGGCC CGCCGCAGCG CCAGCCCCCT CAACTGTGAG
      GGCAACGGTC AGGATACCGG GCGGCGTCGC GGTCGGGGGA GTTGACACTC

 901  GGCAAGATGT TCTGGGATCA GGTACACCCG ACCACTGTCG TGCACGCAGC
      CCGTTCTACA AGACCCTAGT CCATGTGGGC TGGTGACAGC ACGTGCGTCG

 951  CCTGAGCGAG CGCGCCGCCA CCTTCATCGC GAACCAGTAC GAGTTCCTCG
      GGACTCGCTC GCGCGGCGGT GGAAGTAGCG CTTGGTCATG CTCAAGGAGC

1001  CCCAC TGA
      GGGTG ACT
```

**FIGURE 49** (SEQ ID No. 36)

```
1     ATGAAAAAAT GGTTTGTTTG TTTATTGGGG TTGATCGCGC TGACAGTTCA
      TACTTTTTTA CCAAACAAAC AAATAACCCC AACTAGCGCG ACTGTCAAGT

51    GGCAGCCGAC ACTCGCCCCG CCTTCTCCCG GATCGTGATG TTCGGCGACA
      CCGTCGGCTG TGAGCGGGGC GGAAGAGGGC CTAGCACTAC AAGCCGCTGT

101   GCCTCTCCGA TACCGGCAAA ATGTACAGCA AGATGCGCGG TTACCTCCCC
      CGGAGAGGCT ATGGCCGTTT TACATGTCGT TCTACGCGCC AATGGAGGGG

151   TCCAGCCCGC CCTACTATGA GGGCCGTTTC TCCAACGGAC CCGTCTGGCT
      AGGTCGGGCG GGATGATACT CCCGGCAAAG AGGTTGCCTG GGCAGACCGA

201   GGAGCAGCTG ACCAAGCAGT TCCCGGGTCT GACCATCGCC AACGAAGCGG
      CCTCGTCGAC TGGTTCGTCA AGGGCCCAGA CTGGTAGCGG TTGCTTCGCC

251   AAGGCGGTGC CACTGCCGTG GCTTACAACA AGATCTCCTG GAATCCCAAG
      TTCCGCCACG GTGACGGCAC CGAATGTTGT TCTAGAGGAC CTTAGGGTTC

301   TATCAGGTCA TCAACAACCT GGACTACGAG GTCACCCAGT TCTTGCAGAA
      ATAGTCCAGT AGTTGTTGGA CCTGATGCTC CAGTGGGTCA AGAACGTCTT

351   AGACAGCTTC AAGCCGGACG ATCTGGTGAT CCTCTGGGTC GGTGCCAATG
      TCTGTCGAAG TTCGGCCTGC TAGACCACTA GGAGACCCAG CCACGGTTAC

401   ACTATCTGGC ATATGGCTGG AATACGGAGC AGGATGCCAA GCGAGTTCGC
      TGATAGACCG TATACCGACC TTATGCCTCG TCCTACGGTT CGCTCAAGCG

451   GATGCCATCA GCGATGCGGC CAACCGCATG GTACTGAACG GTGCCAAGCA
      CTACGGTAGT CGCTACGCCG GTTGGCGTAC CATGACTTGC CACGGTTCGT

501   GATACTGCTG TTCAACCTGC CGGATCTGGG CCAGAACCCG TCAGCCCGCA
      CTATGACGAC AAGTTGGACG GCCTAGACCC GGTCTTGGGC AGTCGGGCGT

551   GTCAGAAGGT GGTCGAGGCG GTCAGCCATG TCTCCGCCTA TCACAACAAG
      CAGTCTTCCA CCAGCTCCGC CAGTCGGTAC AGAGGCGGAT AGTGTTGTTC

601   CTGCTGCTGA ACCTGGCACG CCAGCTGGCC CCCACCGGCA TGGTAAAGCT
      GACGACGACT TGGACCGTGC GGTCGACCGG GGGTGGCCGT ACCATTTCGA

651   GTTCGAGATC GACAAGCAAT TTGCCGAGAT GCTGCGTGAT CCGCAGAACT
      CAAGCTCTAG CTGTTCGTTA AACGGCTCTA CGACGCACTA GGCGTCTTGA

701   TCGGCCTGAG CGACGTCGAG AACCCCTGCT ACGACGGCGG CTATGTGTGG
      AGCCGGACTC GCTGCAGCTC TTGGGGACGA TGCTGCCGCC GATACACACC

751   AAGCCGTTTG CCACCCGCAG CGTCAGCACC GACCGCCAGC TCTCCGCCTT
      TTCGGCAAAC GGTGGGCGTC GCAGTCGTGG CTGGCGGTCG AGAGGCGGAA

801   CAGTCCGCAG GAACGCCTCG CCATCGCCGG CAACCCGCTG CTGGCACAGG
      GTCAGGCGTC CTTGCGGAGC GGTAGCGGCC GTTGGGCGAC GACCGTGTCC

851   CCGTTGCCAG TCCTATGGCC CGCCGCAGCG CCAGCCCCCT CAACTGTGAG
      GGCAACGGTC AGGATACCGG GCGGCGTCGC GGTCGGGGGA GTTGACACTC

901   GGCAAGATGT TCTGGGATCA GGTACACCCG ACCACTGTCG TGCACGCAGC
      CCGTTCTACA AGACCCTAGT CCATGTGGGC TGGTGACAGC ACGTGCGTCG

951   CCTGAGCGAG CGCGCCGCCA CCTTCATCGA GACCCAGTAC GAGTTCCTCG
      GGACTCGCTC GCGCGGCGGT GGAAGTAGCT CTGGGTCATG CTCAAGGAGC

1001  CCCACGGATG A
      GGGTGCCTAC T
```

## FIGURE 50

SEQ ID No. 37

```
  1  ADTRPAFSRI VMFGDSLSDT GKMYSKMRGY LPSSPPYYEG RFSNGPVWLE QLTKQFPGLT
 61  IANEAEGGAT AVAYNKISWD PKYQVINNLD YEVTQFLQKD SFKPDDLVIL WVGANDYLAY
121  GWNTEQDAKR VRDAISDAAN RMVLNGAKQI LLFNLPDLGQ NPSARSQKVV EAVSHVSAYH
181  NKLLLNLARQ LAPTGMVKLF EIDKQFAEML RDPQNFGLSD VENPCYDGGY VWKPF

236  RSASPLNCEG KMFWDQVHPT TVVHAALSER AATFIETQYE FLAHG
```

## FIGURE 51

(SEQ ID No. 38)

```
  1  ATGCCGAAGC CTGCCCTTCG CCGTGTCATG ACCGCGACAG TCGCCGCCGT CGGCACGCTC
 61  GCCCTCGGCC TCACCGACGC CACCGCCCAC GCCGCGCCCG CCCAGGCCAC TCCGACCCTG
121  GACTACGTCG CCCTCGGCGA CAGCTACAGC GCCGGCTCCG GCGTCCTGCC CGTCGACCCC
181  GCCAACCTGC TCTGTCTGCG CTCGACGGCC AACTACCCCC ACGTCATCGC GGACACGACG
241  GGCGCCCGCC TCACGGACGT CACCTGCGGC GCCGCGCAGA CCGCCGACTT CACGCGGGCC
301  CAGTACCCGG GCGTCGCACC CCAGTTGGAC GCGCTCGGCA CCGGCACGGA CCTGGTCACG
361  CTCACCATCG GCGGCAACGA CAACAGCACC TTCATCAACG CCATCACGGC CTGCGGCACG
421  GCGGGTGTCC TCAGCGGCGG CAAGGGCAGC CCCTGCAAGG ACAGGCACGG CACCTCCTTC
481  GACGACGAGA TCGAGGCCAA CACGTACCCC GCGCTCAAGG AGGCGCTGCT CGGCGTCCGC
541  GCCAGGGCTC CCCACGCCAG GGTGGCGGCT CTCGGCTACC CGTGGATCAC CCCGGCCACC
601  GCCGACCCGT CCTGCTTCCT GAAGCTCCCC CTCGCCGCCG GTGACGTGCC CTACCTGCGG
661  GCCATCCAGG CACACCTCAA CGACGCGGTC CGGCGGGCCG CCGAGGAGAC CGGAGCCACC
721  TACGTGGACT TCTCCGGGGT GTCCGACGGC CACGACGCCT GCGAGGCCCC CGGCACCCGC
781  TGGATCGAAC CGCTGCTCTT CGGGCACAGC CTCGTTCCCG TCCACCCCAA CGCCCTGGGC
841  GAGCGGCGCA TGGCCGAGCA CACGATGGAC GTCCTCGGCC TGGACTGA
```

## FIGURE 52

(SEQ ID No. 39)

```
  1  TCAGTCCAGG CCGAGGACGT CCATCGTGTG CTCGGCCATG CGCCGCTCGC CCAGGGCGTT
 61  GGGGTGGACG GGAACGAGGC TGTGCCCGAA GAGCAGCGGT TCGATCCAGC GGGTGCCGGG
121  GGCCTCGCAG GCGTCGTGGC CGTCGGACAC CCCGGAGAAG TCCACGTAGG TGGCTCCGGT
181  CTCCTCGGCG GCCCGCCGGA CCGCGTCGTT GAGGTGTGCC TGGATGGCCC GCAGGTAGGG
241  CACGTCACCG GCGGCGAGGG GGAGCTTCAG GAAGCAGGAC GGGTCGGCGG TGGCCGGGGT
301  GATCCACGGG TAGCCGAGAG CCGCCACCCT GGCGTGGGGA GCCCTGGCGC GGACGCCGAG
361  CAGCGCCTCC TTGAGCGCGG GGTACGTGTT GGCCTCGATC TCGTCGTCGA AGGAGGTGCC
421  GTGCCTGTCC TTGCAGGGGC TGCCCTTGCC GCCGCTGAGG ACACCCGCCG TGCCGCAGGC
481  CGTGATGGCG TTGATGAAGG TGCTGTTGTC GTTGCCGCCG ATGGTGAGCG TGACCAGGTC
541  CGTGCCGGTG CCGAGCGCGT CCAACTGGGG TGCGACGCCC GGGTACTGGG CCCGCGTGAA
601  GTCGGCGGTC TGCGCGGCGC CGCAGGTGAC GTCCGTGAGG CGGGCGCCCG TCGTGTCCGC
661  GATGACGTGG GGGTAGTTGG CCGTCGAGCG CAGACAGAGC AGGTTGGCGG GGTCGACGGG
721  CAGGACGCCG GAGCCGGCGC TGTAGCTGTC GCCGAGGGCG ACGTAGTCCA GGGTCGGAGT
781  GGCCTGGGCG GGCGCGGCGT GGGCGGTGGC GTCGGTGAGG CCGAGGGCGA GCGTGCCGAC
841  GGCGGCGACT GTCGCGGTCA TGACACGGCG AAGGGCAGGC TTCGGCAT
```

## FIGURE 53

(SEQ ID No. 40)

```
  1 ATGGATTACG AGAAGTTTCT GTTATTTGGG GATTCCATTA CTGAATTTGC TTTTAATACT
 61 AGGCCCATTG AAGATGGCAA AGATCAGTAT GCTCTTGGAG CCGCATTAGT CAACGAATAT
121 ACGAGAAAAA TGGATATTCT TCAAAGAGGG TTCAAAGGGT ACACTTCTAG ATGGGCGTTG
181 AAAATACTTC CTGAGATTTT AAAGCATGAA TCCAATATTG TCATGGCCAC AATATTTTTG
241 GGTGCCAACG ATGCATGCTC AGCAGGTCCC CAAAGTGTCC CCCTCCCCGA ATTTATCGAT
301 AATATTCGTC AAATGGTATC TTTGATGAAG TCTTACCATA TCCGTCCTAT TATAATAGGA
361 CCGGGGCTAG TAGATAGAGA GAAGTGGGAA AAAGAAAAAT CTGAAGAAAT AGCTCTCGGA
421 TACTTCCGTA CCAACGAGAA CTTTGCCATT TATTCCGATG CCTTAGCAAA ACTAGCCAAT
481 GAGGAAAAAG TTCCCTTCGT GGCTTTGAAT AAGGCGTTTC AACAGGAAGG TGGTGATGCT
541 TGGCAACAAC TGCTAACAGA TGGACTGCAC TTTTCCGGAA AAGGGTACAA AATTTTTCAT
601 GACGAATTAT TGAAGGTCAT TGAGACATTC TACCCCCAAT ATCATCCCAA AAACATGCAG
661 TACAAACTGA AAGATTGGAG AGATGTGCTA GATGATGGAT CTAACATAAT GTCTTGA
```

## FIGURE 54

(SEQ ID No. 41)

```
  1 mtrgrdggag apptkhrall aaivtlivai saaiyagasa ddgsrdhalq aggrlprgda
 61 apastgawvg awatapaaae pgtettglag rsvrnvvhts vggtgaritl snlygqsplt
121 vthasialaa gpdtaaaiad tmrrltfggs arviipaggq vmsdtarlai pyganvlvtt
181 yspipsgpvt yhpqarqtsy ladgdrtadv tavayttptp ywryltaldv lsheadgtvv
241 afgdsitdga rsqsdanhrw tdvlaarlhe aagdgrdtpr ysvvnegisg nrlltsrpgr
301 padnpsglsr fqrdvlertn vkavvvvlgv ndvlnspela drdailtglr tlvdraharg
361 lrvvgatitp fggyggytea retmrqevne eirsgrvfdt vvdfdkalrd pydprrmrsd
421 ydsgdhlhpg dkgyarmgav idlaalkgaa pvka
```

## FIGURE 55

SEQ ID No 42 which is the amino acid sequence of a lipid acyltransferase from *Candida parapsilosis*;

```
MRYFAIAFLL INTISAFVLA PKKPSQDDFY TPPQGYEAQP LGSILKTRNV PNPLTNVFTP VKVQNAWQLL
VRSEDTFGNP NAIVTTIIQP FNAKKDKLVS YQTFEDSGKL DCAPSYAIQY GSDISTLTTQ GEMYYISALL
DQGYYVVTPD YEGPKSTFTV GLQSGRATLN SLRATLKSGN LTGVSSDAET LLWGYSGGSL ASGWAAAIQK
EYAPELSKNL LGAALGGFVT NITATAEAVD SGPFAGIISN ALAGIGNEYP DFKNYLLKKV SPLLSITYRL
GNTHCLLDGG IAYFGKSFFS
RIIRYFPDGW DLVNQEPIKT ILQDNGLVYQ PKDLTPQIPL FIYHGTLDAI VPIVNSRKTF QQWCDWGLKS
GEYNEDLTNG HITESIVGAP AALTWIINRF NGQPPVDGCQ HNVRASNLEY PGTPQSIKNY FEAALHAILG
FDLGPDVKRD KVTLGGLLKL ERFAF
```

# FIGURE 56

(SEQ ID No. 43)

```
  1 mgsgpraatr rrlflgipal vlvtaltlvl avptgretlw rmwceatqdw clgvpvdsrg
 61 qpaedgefll lspvqaatwg nyyalgdsys sgdgardyyp gtavkggcwr sanaypelva
121 eaydfaghls flacsgqrgy amldaidevg sqldwnspht slvtigiggn dlgfstvlkt
181 cmvrvpllds kactdqedai rkrmakfett feelisevrt rapdarilvv gyprifpeep
241 tgayytltas nqrwlnetiq efnqqlaeav avhdeeiaas ggvgsvefvd vyhaldghei
301 gsdepwvngv qlrdlatgvt vdrstfhpna aghravgerv ieqietgpgr plyatfavva
361 gatvdtlage vg
```

# FIGURE 57

(SEQ ID No. 44)

ZP_00094165

```
  1 mgqvklfarr capvllalag lapaatvare aplaegaryv algssfaagp gvgpnapgsp
 61 ercgrgtlny phllaealkl dlvdatcsga tthhvlgpwn evppqidsvn gdtrlvtlti
121 ggndvsfvgn ifaaacekma spdprcgkwr eiteeewqad eermrsivrq iharaplarv
181 vvvdyitvlp psgtcaamai spdrlaqsrs aakrlarita rvareegasl lkfshisrrh
241 hpcsakpwsn glsapaddgi pvhpnrlgha eaaaalvklv klmk //
```

# FIGURE 58

SEQ ID No. 45

NP_625998.

```
  1 mrrfrlvgfl sslvlaagaa ltgaataqaa qpaaadgyva lgdsyssgvg agsyisssgd
 61 ckrstkahpy lwaaahspst fdftacsgar tgdvlsgqlg plssgtglvs isiggndagf
121 adtmttcvlq sessclsria taeayvdstl pgkldgvysa isdkapnahv vvigyprfyk
181 lgttciglse tkrtainkas dhlntvlaqr aaahgftfgd vrttftghel csgspwlhsv
241 nwlnigesyh ptaagqsggy lpvlngaa
//
```

# FIGURE 59

SEQ ID No. 46

NP_827753.

```
  1 mrrsritayv tslllavgca ltgaataqas paaaatgyva lgdsyssgvg agsylsssgd
 61 ckrsskaypy lwqaahspss fsfmacsgar tgdvlanqlg tlnsstglvs ltiggndagf
121 sdvmttcvlq sdsaclsrin takayvdstl pgqldsvyta istkapsahv avlgyprfyk
181 lggsclagls etkrsainda adylnsaiak raadhgftfg dvkstftghe icssstwlhs
241 ldllnigqsy hptaagqsgg ylpvmnsva
//
```

# FIGURE 60

(SEQ ID No. 47)

```
   1 ggtggtgaac cagaacaccc ggtcgtcggc gtgggcgtcc aggtgcaggt gcaggttctt
  61 caactgctcc agcaggatgc cgccgtggcc gtgcacgatg gccttgggca ggcctgtggt
 121 ccccgacgag tacagcaccc atagcggatg gtcgaacggc agcggggtga actccagttc
 181 cgcgccttcg cccgcggctt cgaactccgc ccaggacagg gtgtcggcga cagggccgca
 241 gcccaggtac ggcaggacga cggtgtgctg caggctgggc atgccgtcgc gcagggcttt
 301 gagcacgtca cggcggtcga agtccttacc gccgtagcgg tagccgtcca cggccagcag
 361 cactttcggt tcgatctgcg cgaaccggtc gaggacgctg cgcaccccga agtcggggga
 421 acaggacgac caggtcgcac cgatcgcggc gcaggcgagg aatgcggccg tcgcctcggc
 481 gatgttcggc aggtaggcca cgacccggtc gccgggcccc accccgaggc tgcggagggc
 541 cgcagcgatc gcggcggtgc gggtccgcag ttctccccag gtccactcgg tcaacggccg
 601 gagttcggac gcgtgccgga tcgccacggc tgatgggtca cggtcgcgga agatgtgctc
 661 ggcgtagttg agggtggcgc cggggaacca gacggcgccg ggcatggcgt cggaggcgag
 721 cactgtggtg tacggggtgg cggcgcgcac ccggtagtac tcccagatcg cggaccagaa
 781 tccttcgagg tcggttaccg accagcgcca cagtgcctcg tagtccggtg cgtccacacc
 841 gcggtgctcc cgcacccagc gggtgaacgc ggtgaggttg gcgcgttctt tgcgctcctc
 901 gtcgggactc cacaggatcg gcggctgcgg cttgagtgtc atgaaacgcg acccccttcgt
 961 ggacggtgcg gatgcggtga gcgtcgggtg cctcccctaa cgctccccgg tgacggagtg
1021 ttgtgcacca catctagcac gcgggacgcg gaaaccgtat ggagaaaaca cctacaaccc
1081 cggccggacg gtgggtttcg gccacactta ggggtcggt gcctgcttgc cgggcagggc
1141 agtcccgggg tgctgtggtg cgggcgggag ggctgtcgct tcgaggtgtg ccggcgggac
1201 actccgggcc tcagccgtac ccgcaacggg gacagttctc ctcccttccg ggctggatgg
1261 tcccttcccc cgaaatgcgg cgagatctcc cagtcagccc ggaaaacacc cgctgtgccc
1321 aggtactctt tgcttcgaac agacaggccg gacggtccac gggggaggtt tgtgggcagc
1381 ggaccacgtg cggcgaccag acgacggttg ttcctcggta tccccgctct tgtacttgtg
1441 acagcgctca cgctggtctt ggctgtcccg acggggcgcg agacgctgtg gcgcatgtgg
1501 tgtgaggcca cccaggactg gtgcctgggg gtgccggtcg actcccgcgg acagcctgcg
1561 gaggacggcg agtttctgct gctttctccg gtccaggcag cgacctgggg gaactattac
1621 gcgctcgggg attcgtactc ttcgggggac ggggcccgcg actactatcc cggcaccgcg
1681 gtgaagggcg gttgctggcg gtccgctaac gcctatccgg agctggtcgc cgaagcctac
1741 gacttcgccg gacacttgtc gttcctggcc tgcagcggcc agcgcggcta cgccatgctt
1801 gacgctatcg acgaggtcgg ctcgcagctg gactggaact cccctcacac gtcgctggtg
1861 acgatcggga tcggcggcaa cgatctgggg ttctccacgg ttttgaagac ctgcatggtg
1921 cgggtgccgc tgctggacag caaggcgtgc acggaccagg aggacgctat ccgcaagcgg
1981 atggcgaaat tcgagacgac gtttgaagag ctcatcagcg aagtgcgcac ccgcgcgccg
2041 gacgcccgga tccttgtcgt gggctacccc cggatttttc cggaggaacc gaccggcgcc
2101 tactacacgc tgaccgcgag caaccagcgg tggctcaacg aaaccattca ggagttcaac
2161 cagcagctcg ccgaggctgt cgcggtccac gacgaggaga ttgccgcgtc gggcggggtg
2221 ggcagcgtgg agttcgtgga cgtctaccac gcgttggacg gccacgagat cggctcggac
2281 gagccgtggg tgaacggggt gcagttgcgg gacctcgcca ccggggtgac tgtggaccgc
2341 agtaccttcc accccaacgc cgctgggcac cgggcggtcg gtgagcgggt catcgagcag
2401 atcgaaaccg gcccgggccg tccgctctat gccactttcg cggtggtggc gggggcgacc
2461 gtggacactc tcgcgggcga ggtggggtga cccggcttac cgtccggccc gcaggtctgc
2521 gagcactgcg gcgatctggt ccactgccca gtgcagttcg tcttcggtga tgaccagcgg
2581 cggggagagc cggatcgttg agccgtgcgt gtctttgacg agcacacccc gctgcaggag
2641 ccgttcgcac agttctcttc cggtggccag agtcgggtcg acgtcgatcc cagcccacag
2701 gccgatgctg cgggccgcga ccacgccgtt gccgaccagt tggtcgaggc gggcgcgcag
2761 cacgggggcg agggcgcgga catggtccag gtaagggccg tcgcggacga ggctcaccac
2821 ggcagtgccg accgcgcagg cgagggcgtt gccgccgaag gtgctgccgt gctggccggg
2881 gcggatcacg tcgaagactt ccgcgtcgcc taccgccgcc gccacgggca ggatgccgcc
2941 gcccagcgct ttgccgaaca ggtagatatc ggcgtcgact ccgctgtggt cgcaggcccg
```

## FIGURE 61

(SEQ ID No. 48)

```
   1 cccggcggcc cgtgcaggag cagcagccgg cccgcgatgt cctcgggcgt cgtcttcatc
  61 aggccgtcca tcgcgtcggc gaccggcgcc gtgtagttgg cccggacctc gtcccaggtg
 121 cccgcggcga tctggcgggt ggtgcggtgc gggccgcgcc gaggggagac gtaccagaag
 181 cccatcgtca cgttctccgg ctgcggttcg ggctcgtccg ccgctccgtc cgtcgcctcg
 241 ccgagcacct tctcggcgag gtcggcgctg gtcgccgtca ccgtgacgtc ggcgccccgg
 301 ctccagcgcg agatcagcag cgtccagccg tcgccctccg ccagcgtcgc gctgcggtcg
 361 tcgtcgcggg cgatccgcag cacgcgcgcg ccgggcggca gcagcgtggc gccggaccgt
 421 acgcggtcga tgttcgccgc gtgcgagtac ggctgctcac ccgtggcgaa acggccgagg
 481 aacagcgcgt cgacgacgtc ggacggggag tcgctgtcgt ccacgttgag ccggatcggc
 541 agggcttcgt gcgggttcac ggacatgtcg ccatgatcgg gcacccggcc gccgcgtgca
 601 cccgctttcc cgggcacgca cgacaggggc tttctcgccg tcttccgtcc gaacttgaac
 661 gagtgtcagc catttcttgg catggacact tccagtcaac gcgcgtagct gctaccacgg
 721 ttgtggcagc aatcctgcta agggaggttc catgagacgt ttccgacttg tcggcttcct
 781 gagttcgctc gtcctcgccg ccggcgccgc cctcaccggg gcagcgaccg cccaggcggc
 841 ccaacccgcc gccgccgacg gctatgtggc cctcggcgac tcctactcct ccggggtcgg
 901 agcgggcagc tacatcagct cgagcggcga ctgcaagcgc agcacgaagg cccatcccta
 961 cctgtgggcg gccgcccact cgccctccac gttcgacttc accgcctgtt ccggcgcccg
1021 tacgggtgat gttctctccg gacagctcgg cccgctcagc tccggcaccg gcctcgtctc
1081 gatcagcatc ggcggcaacg acgccggttt cgccgacacc atgacgacct gtgtgctcca
1141 gtccgagagc tcctgcctgt cgcggatcgc caccgccgag gcgtacgtcg actcgacgct
1201 gcccggcaag ctcgacggcg tctactcggc aatcagcgac aaggcgccga acgcccacgt
1261 cgtcgtcatc ggctacccgc gcttctacaa gctcggcacc acctgcatcg gcctgtccga
1321 gaccaagcgg acggcgatca acaaggcctc cgaccacctc aacaccgtcc tcgcccagcg
1381 cgccgccgcc cacggcttca ccttcggcga cgtacgcacc accttcaccg gccacgagct
1441 gtgctccggc agcccctggc tgcacagcgt caactggctg aacatcggcg agtcgtacca
1501 ccccaccgcg gccggccagt ccggtggcta cctgccggtc ctcaacggcg ccgcctgacc
1561 tcaggcggaa ggagaagaag aaggagcgga gggagacgag gagtgggagg ccccgcccga
1621 cggggtcccc gtccccgtct ccgtctccgt cccggtcccg caagtcaccg agaacgccac
1681 cgcgtcggac gtggcccgca ccggactccg cacctccacg cgcacggcac tctcgaacgc
1741 gccggtgtcg tcgtgcgtcg tcaccaccac gccgtcctgg cgcgagcgct cgccgcccga
1801 cgggaaggac agcgtccgcc accccggatc ggagaccgac ccgtccgcgg tcacccaccg
1861 gtagccgacc tccgcgggca gccgcccgac cgtgaacgtc gccgtgaacg cgggtgcccg
1921 gtcgtgcggc ggcggacagg cccccgagta gtgggtgcgc gagcccacca cggtcacctc
1981 caccgactgc gctgcggggc
```

## FIGURE 62

(SEQ ID No. 49)

```
   1 mrrsritayv tslllavgca ltgaataqas paaaatgyva lgdsyssgvg agsylsssgd
  61 ckrsskaypy lwqaahspss fsfmacsgar tgdvlanqlg tlnsstglvs ltiggndagf
 121 sdvmttcvlq sdsaclsrin takayvdstl pgqldsvyta istkapsahv avlgyprfyk
 181 lggsclagls etkrsainda adylnsaiak raadhgftfg dvkstftghe icssstwlhs
 241 ldllnigqsy hptaagqsgg ylpvmnsva
```

# FIGURE 63

## SEQ ID No. 50

```
   1 ccaccgccgg gtcggcggcg agtctcctgg cctcggtcgc ggagaggttg gccgtgtagc
  61 cgttcagcgc ggcgccgaac gtcttcttca ccgtgccgcc gtactcgttg atcaggccct
 121 tgcccttgct cgacgcggcc ttgaagccgg tgcccttctt gagcgtgacg atgtagctgc
 181 ccttgatcgc ggtgggggag ccggcggcga gcaccgtgcc ctcggccggg gtggcctggg
 241 cgggcagtgc ggtgaatccg cccacgaggg cgccggtcgc cacggcggtt atcgcggcga
 301 tccggatctt cttgctacgc agctgtgcca tacgagggag tcctcctctg ggcagcggcg
 361 cgcctgggtg gggcgcacgg ctgtgggggg tgcgcgcgtc atcacgcaca cggccctgga
 421 gcgtcgtgtt ccgccctggg ttgagtaaag cctcggccat ctacgggggt ggctcaaggg
 481 agttgagacc ctgtcatgag tctgacatga gcacgcaatc aacggggccg tgagcacccc
 541 ggggcgaccc cggaaagtgc cgagaagtct tggcatggac acttcctgtc aacacgcgta
 601 gctggtacga cggttacggc agagatcctg ctaaagggag gttccatgag acgttcccga
 661 attacggcat acgtgacctc actcctcctc gccgtcggct gcgccctcac cggggcagcg
 721 acggcgcagg cgtccccagc cgccgcggcc acgggctatg tggccctcgg cgactcgtac
 781 tcgtccggtg tcggcgccgg cagctacctc agctccagcg gcgactgcaa gcgcagttcg
 841 aaggcctatc cgtacctctg gcaggccgcg cattcaccct cgtcgttcag tttcatggct
 901 tgctcgggcg ctcgtacggg tgatgtcctg gccaatcagc tcggcaccct gaactcgtcc
 961 accggcctgg tctccctcac catcggaggc aacgacgcgg gcttctccga cgtcatgacg
1021 acctgtgtgc tccagtccga cagcgcctgc ctctcccgca tcaacacggc gaaggcgtac
1081 gtcgactcca ccctgcccgg ccaactcgac agcgtgtaca cggcgatcag cacgaaggcc
1141 ccgtcggccc atgtggccgt gctgggctac ccccgcttct acaaactggg cggctcctgc
1201 ctcgcgggcc tctcggagac caagcggtcc gccatcaacg acgcggccga ctatctgaac
1261 agcgccatcg ccaagcgcgc cgccgaccac ggcttcacct tcggcgacgt caagagcacc
1321 ttcaccggcc atgagatctg ctccagcagc acctggctgc acagtctcga cctgctgaac
1381 atcggccagt cctaccaccc gaccgcggcc ggccagtccg gcggctatct gccggtcatg
1441 aacagcgtgg cctgagctcc cacggcctga atttttaagg cctgaatttt taaggcgaag
1501 gtgaaccgga agcggaggcc ccgtccgtcg ggtctccgt cgcacaggtc accgagaacg
1561 gcacggagtt ggacgtcgtg cgcaccgggt cgcgcacctc gacggcgatc tcgttcgaga
1621 tcgttccgct cgtgtcgtac gtggtgacga acacctgctt ctgctgggtc tttccgccgc
1681 tcgccgggaa ggacagcgtc ttccagcccg gatccgggac ctcgcccttc ttggtcaccc
1741 agcggtactc cacctcgacc ggcacccggc ccaccgtgaa ggtcgccgtg aacgtgggcg
1801 cctgggcggt gggcggcggg caggcaccgg agtagtcggt gtgcacgccg gtgaccgtca
1861 ccttcacgga ctgggccggc ggggtcgtcg taccgccgcc gccaccgccg cctcccggag
1921 tggagcccga gctgtggtcg cccccgccgt cggcgttgtc gtcctcgggg gtttcgaac
```

# FIGURE 64

## SEQ ID No. 51

```
1       ctgcagacac ccgccccgcc ttctcccgga tcgtcatgtt cggcgactcc ctcagcgaca
61      ccggcaagat gtactccaag atgcgcggct acctgccgtc ctccccgccg tactacgagg
121     gccgcttctc gaacggcccg gtctggctgg agcagctgac gaagcagttc cccggcctga
181     cgatcgccaa cgaggccgag gggggcgcga ccgcagtcgc ctacaacaag atctcctgga
241     acccgaagta ccaggtcatt aacaacctcg actacgaggt cacccagttc ttgcagaagg
301     actcgttcaa gcccgacgac ctggtcatcc tgtgggtggg cgccaacgac tacctggcct
361     acggttggaa cacggagcag gacgccaagc gggtgcgcga cgccatctcg gacgcggcaa
421     accgcatggt cctgaacggc gcgaagcaga tcctgctgtt caacctgccc gacctgggcc
481     agaacccgtc cgcccgctcc cagaaggtcg tcgaggccgt ctcgcacgtg tccgcctacc
541     acaacaagct gctcctcaac ctcgcccggc agctcgcccc gacgggcatg gtcaagctgt
601     tcgagatcga caagcagttc gcggagatgc tgcgcgaccc ccagaacttc ggcctgagcg
661     acgtggagaa cccgtgctac gacggcggct acgtgtggaa gccgttcgcc acccggtccg
721     tctcgaccga ccggcagctg tcggccttct cgccccagga gcgcctggcg atcgctggca
781     acccgctcct ggcacaggcg gtagcttcgc cgatggcccg ccgctcggcc tcgcccctca
841     actgcgaggg caagatgttc tgggaccagg tccaccccac caccgtggtc cacgccgccc
901     tctcggagcg cgccgccacc ttcatcgaga cccagtacga gttcctcgcc cactagtcta
961     gaggatcc
```

## FIGURE 65

(SEQ ID No. 52)

```
   1 atgacccggg gtcgtgacgg gggtgcgggg gcgcccccca ccaagcaccg tgccctgctc
  61 gcggcgatcg tcaccctgat agtggcgatc tccgcggcca tatacgccgg agcgtccgcg
 121 gacgacggca gcagggacca cgcgctgcag gccggaggcc gtctcccacg aggagacgcc
 181 gcccccgcgt ccaccggtgc ctgggtgggc gcctgggcca ccgcaccggc cgcggccgag
 241 ccgggcaccg agacgaccgg cctggcgggc cgctccgtgc gcaacgtcgt gcacacctcg
 301 gtcggcggca ccggcgcgcg gatcaccctc tcgaacctgt acgggcagtc gccgctgacc
 361 gtcacacacg cctcgatcgc cctggccgcc gggcccgaca ccgccgccgc gatcgccgac
 421 accatgcgcc ggctcacctt cggcggcagc gcccgggtga tcatcccggc gggcggccag
 481 gtgatgagcg acaccgcccg cctcgccatc ccctacgggg cgaacgtcct ggtcaccacg
 541 tactccccca tcccgtccgg gccggtgacc taccatccgc aggcccggca gaccagctac
 601 ctggccgacg gcgaccgcac ggcggacgtc accgccgtcg cgtacaccac ccccacgccc
 661 tactggcgct acctgaccgc cctcgacgtg ctgagccacg aggccgacgg cacggtcgtg
 721 gcgttcggcg actccatcac cgacggcgcc cgctcgcaga gcgacgccaa ccaccgctgg
 781 accgacgtcc tcgccgcacg cctgcacgag gcggcgggcg acggccggga cacgccccgc
 841 tacagcgtcg tcaacgaggg catcagcggc aaccggctcc tgaccagcag gccggggcgg
 901 ccggccgaca acccgagcgg actgagccgg ttccagcggg acgtgctgga acgcaccaac
 961 gtcaaggccg tcgtcgtcgt cctcggcgtc aacgacgtcc tgaacagccc ggaactcgcc
1021 gaccgcgacg ccatcctgac cggcctgcgc accctcgtcg accgggcgca cgcccgggga
1081 ctgcgggtcg tcggcgccac gatcacgccg ttcggcggct acggcggcta caccgaggcc
1141 cgcgagacga tgcggcagga ggtcaacgag gagatccgct ccggccgggt cttcgacacg
1201 gtcgtcgact tcgacaaggc cctgcgcgac ccgtacgacc cgcgccggat gcgctccgac
1261 tacgacagcg gcgaccacct gcaccccggc gacaaggggt acgcgcgcat gggcgcggtc
1321 atcgacctgg ccgcgctgaa gggcgcggcg ccggtcaagg cgtag
```

## FIGURE 66

(SEQ ID No. 53)

```
  1 vgsgpraatr rrlflgipal vlvtaltlvl avptgretlw rmwceatqdw clgvpvdsrg
 61 qpaedgefll lspvqaatwg nyyalgdsys sgdgardyyp gtavkggcwr sanaypelva
121 eaydfaghls flacsgqrgy amldaidevg sqldwnspht slvtigiggn dlgfstvlkt
181 cmvrvpllds kactdqedai rkrmakfett feelisevrt rapdarilvv gyprifpeep
241 tgayytltas nqrwlnetiq efnqqlaeav avhdeeiaas ggvgsvefvd vyhaldghei
301 gsdepwvngv qlrdlatgvt vdrstfhpna aghravgerv ieqietgpgr plyatfavva
361 gatvdtlage vg
```

**FIGURE 67**

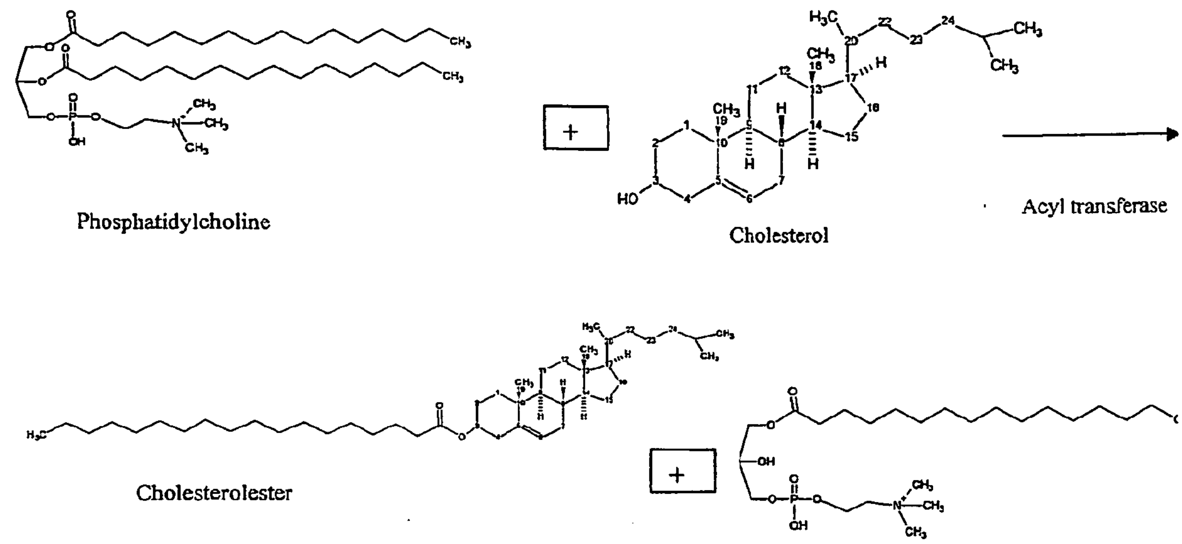


Phosphatidylcholine

Cholesterol

Cholesterolester

Lyso-phosphatidylcholine

FIGURE 68

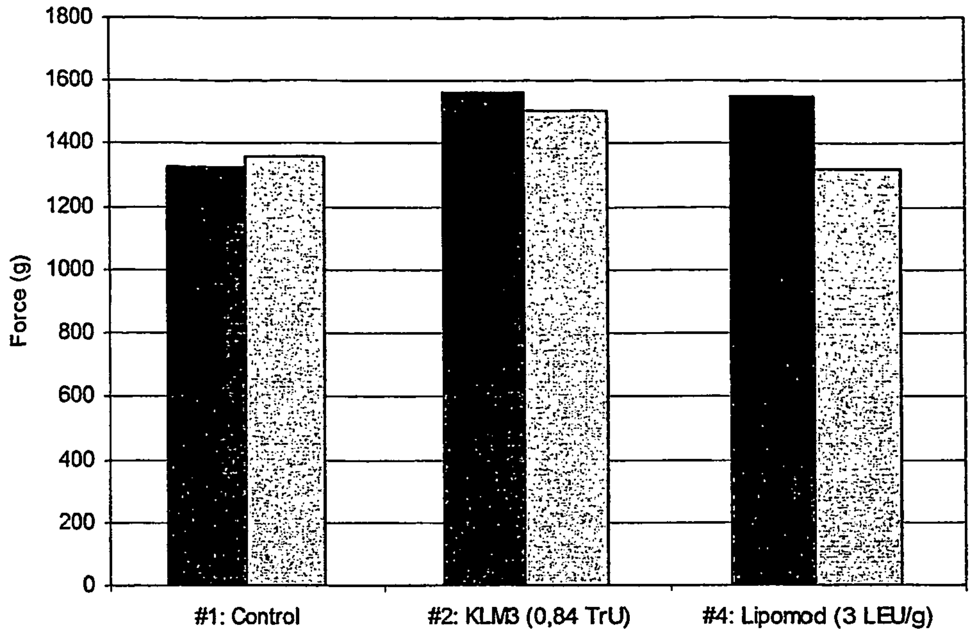
1800
1600
1400
1200
1000
800
600
400
200
0
Force (g)
#1: Control
#2: KLM3 (0,84 TrU)
#4: Lipomod (3 LEU/g)

# FIGURE 69

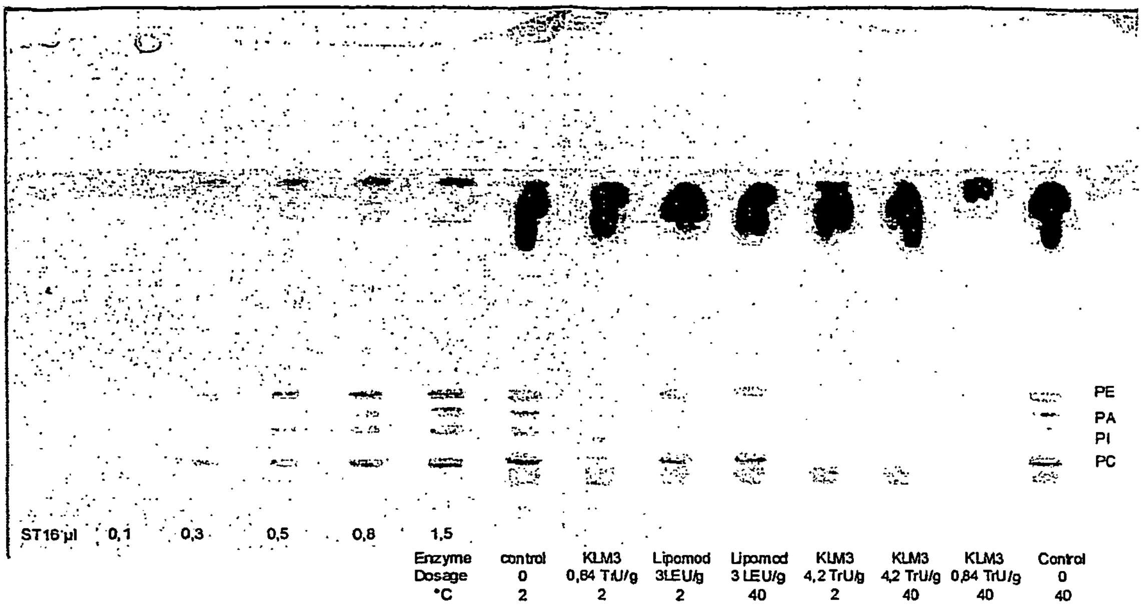


| Enzyme | control | KLM3 | Lipomod | Lipomod | KLM3 | KLM3 | KLM3 | Control |
|---|---|---|---|---|---|---|---|---|
| Dosage | 0 | 0,84 TrU/g | 3LEU/g | 3 LEU/g | 4,2 TrU/g | 4,2 TrU/g | 0,84 TrU/g | 0 |
| °C | 2 | 2 | 2 | 40 | 2 | 40 | 40 | 40 |

FIGURE 70

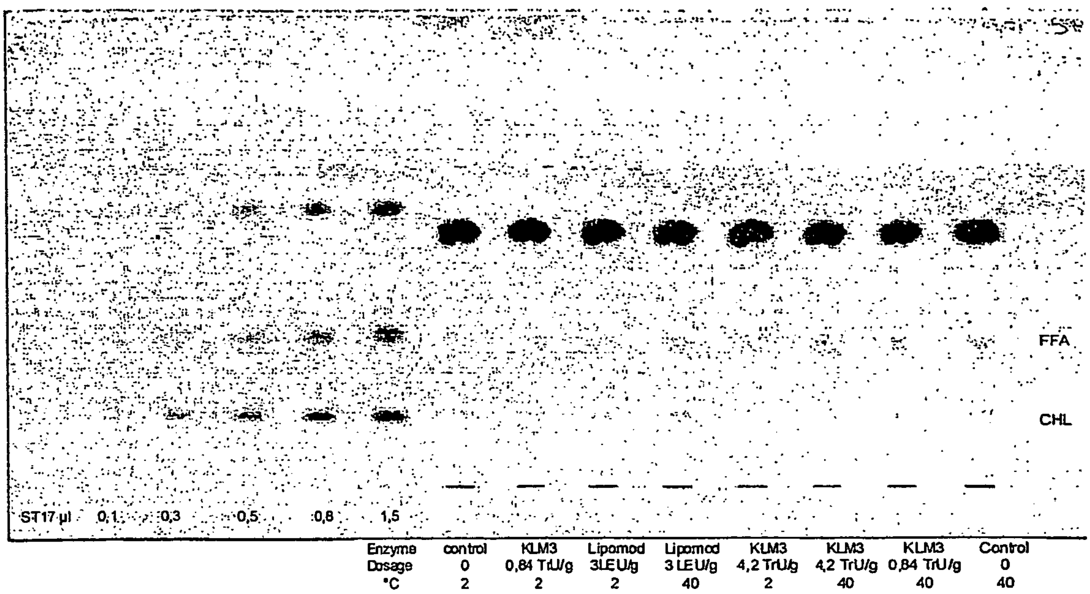
FFA
CHL
ST17 µl 0,1 0,3 0,5 0,8 1,5
Enzyme control KLM3 Lipomod Lipomod KLM3 KLM3 KLM3 Control
Dosage 0 0,84 TrU/g 3LEU/g 3 LEU/g 4,2 TrU/g 4,2 TrU/g 0,84 TrU/g 0
°C 2 2 2 40 2 40 40 40

FIGURE 71

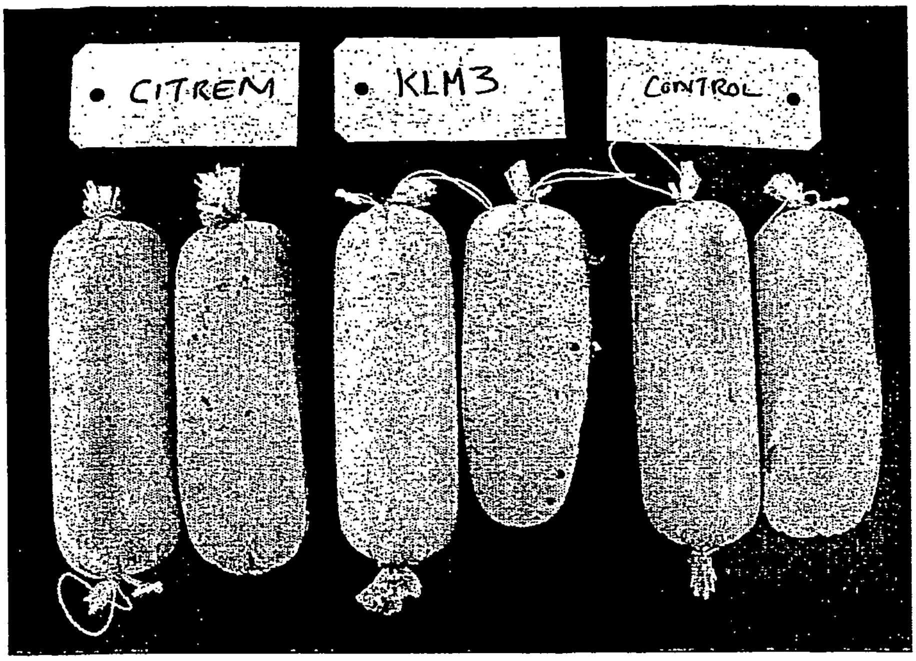

**FIGURE 72**

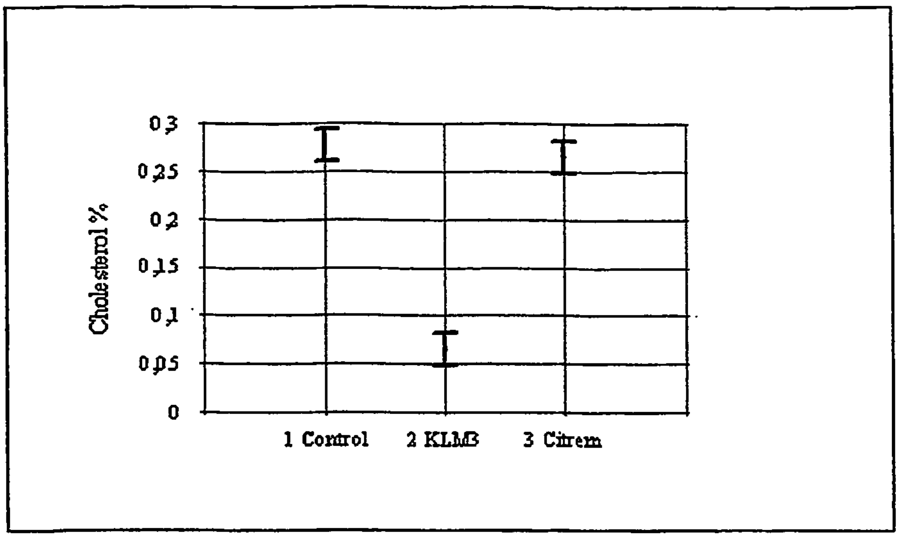

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2004064537 A
- US 2007026106 A
- US 20080070287 A
- US 20060141457 A
- WO 2009002480 A
- WO 2004064987 A
- WO 2005066347 A
- WO 2006008508 A
- WO 9845453 A
- EP 1275711 A
- WO 04064987 A
- WO 9117243 A
- US 4683202 A
- EP 0583265 A
- EP 0866796 A
- WO 0206457 A
- EP 0752008 A
- EP 1138763 A
- EP 1103606 A
- US 6180406 B
- WO 0134835 A
- WO 0058517 A
- US 6344328 B
- US 6361974 B
- EP 0238023 A
- EP 0449375 A
- US 5741665 A
- US 5674707 A
- WO 0139544 A
- WO 0116308 A
- US 3817837 A
- US 3850752 A
- US 3939350 A
- US 3996345 A
- US 4277437 A
- US 4275149 A
- US 4366241 A
- US 4816567 A
- US 20020182734 A
- WO 0214490 A
- WO 2005111203 A


### Non-patent literature cited in the description


- **FEINER.** Meat products handbook. CRC Press, 2006, 239-312
- **FISCHER et al.** Finely comminuted liver sausage - How the normal commercial emulsifiers work. *Fleischwirtsch,* 1991, vol. 71, 780-783
- **NAU ; ADAMS.** Emulsifiers for use in sausage and meat products. *Food marketing & technology,* 13 June 1992
- Meat and meat products. **VARNAM ; SUTHERLAND.** Technology, chemistry and microbiology. Chapman & Hall, 1995, vol. 3, 244-250
- **CHIZZOLINI et al.** Calorific value and cholesterol content of normal and low-fat meat and meat products. *Trends in food science and technology,* 1999, vol. 10, 119-128
- Food Chemical Codex. 1981, 492-493
- **BRUMLIK ; BUCKLEY.** *Joumal of Bacteriology,* April 1996, vol. 178 (7), 2060-2064
- **JIMÉNEZ-COLMENERO et al.** Healthier meat and meat products: their role as functional foods. *Meat science,* 2001, vol. 59, 5-13
- **BEUCAGE S.L. et al.** *Tetrahedron Letters,* 1981, vol. 22, 1859-1869
- **MATTHES et al.** *EMBO J.,* 1984, vol. 3, 801-805
- **SAIKI R K et al.** *Science,* 1988, vol. 239, 487-491
- **CARUTHERS MH et al.** *Nuc Acids Res Symp Ser,* 1980, 215-23
- **HORN T et al.** *Nuc Acids Res Symp Ser,* 1980, 225-232
- **MORINAGA et al.** *Biotechnology,* 1984, vol. 2, 646-649
- **NELSON ; LONG.** *Analytical Biochemistry,* 1989, vol. 180, 147-151
- **HILTON ; BUCKLEY.** *J Biol. Chem.,* 15 January 1991, vol. 266 (2), 997-1000
- **ROBERTSON et al.** *J. Biol. Chem.,* 21 January 1994, vol. 269 (3), 2146-50
- **BRUMLIK et al.** *J. Bacteriol,* April 1996, vol. 178 (7), 2060-4
- **PEELMAN et al.** *Protein Sci.,* March 1998, vol. 7 (3), 587-99
- **AUSUBEL et al.** Short Protocols in Molecular Biology. 1999
- **ALTSCHUL et al.** *J. Mol. Biol.,* 1990, 403-410

- *FEMS Microbiol Lett,* 1999, vol. 174 (2), 247-50
- *FEMS Microbiol Lett,* 1999, vol. 177 (1), 187-8
- **HIGGINS DG ; SHARP PM.** *Gene,* 1988, vol. 73 (1), 237-244
- **SIMON RJ et al.** *PNAS,* 1992, vol. 89 (20), 9367-9371
- **HORWELL DC.** *Trends Biotechnol.,* 1995, vol. 13 (4), 132-134
- **BERGER ; KIMMEL.** Guide to Molecular Cloning Techniques, Methods in Enzymology. Academic Press, 1987, vol. 152
- **SAMBROOK et al.** Molecular Cloning: A Laboratory Manual. Cold Spring Harbor Laboratory Press, 1989
- **POTRYKUS.** *Annu Rev Plant Physiol Plant Mol Biol,* 1991, vol. 42, 205-225
- **CHRISTOU.** *Agro-Food-Industry Hi-Tech,* March 1994, 17-27
- **DAVIS ; SERRES.** *Methods Enzymol,* 1971, vol. 17A, 79-143
- Vectors for genetic manipulation. **TURNER G.** Aspergillus: 50 years on. Progress in industrial microbiology. Elsevier, 1994, vol. 29, 641-666
- **PUNT et al.** *Trends Biotechnol,* May 2002, vol. 20 (5), 200-6
- **ARCHER ; PEBERDY.** *Crit Rev Biotechnol,* 1997, vol. 17 (4), 273-306
- *Methods Mol Biol,* 1995, vol. 49, 341-54
- *Curr Opin Biotechnol,* October 1997, vol. 8 (5), 554-60
- *FEMS Microbiol Rev,* 2000, vol. 24 (1), 45-66
- Yeast as a vehicle for the expression of heterologous genes. **E HINCHCLIFFE ; E KENNY.** Yeasts. Academic Press Ltd, 1993, vol. 5
- **HINNEN et al.** *Proceedings of the National Academy of Sciences of the USA,* 1978, vol. 75, 1929
- **BEGGS, J D.** *Nature, London,* 1978, vol. 275, 104
- **ITO, H et al.** *J Bacteriology,* 1983, vol. 153, 163-168
- *Curr. Opin. Biotechnol.,* 1995, vol. 6 (5), 501-6